# EUROPÄISCHE PATENTSCHRIFT

(11) **EP 3 700 732 B1**
(45) Veröffentlichungstag und Bekanntmachung des Hinweises auf die Patenterteilung: **11.09.2024**
(21) Anmeldenummer: 18803863.2
(22) Anmeldetag: 29.10.2018
(51) Int. Cl.: B29C 51/34, B65D 85/804, B65D 1/26, B29L 31/00

(54) **VERFAHREN ZUM THERMOFORMEN EINER FOLIE, FORMWERKZEUG, THERMOFORMWERKZEUG, ANLAGE ZUM THERMOFORMEN, KAPSELKÖRPER, BRÜHKAPSEL UND BEHÄLTER**
METHOD FOR THERMOFORMING A FILM, MOLDING TOOL, THERMOFORMING TOOL, INSTALLATION FOR THERMOFORMING, CAPSULE BODY, BREWING CAPSULE AND CONTAINER
PROCÉDÉ DE THERMOFORMAGE D'UN FILM, OUTIL DE FORMAGE, OUTIL DE THERMOFORMAGE, INSTALLATION DE THERMOFORMAGE, CORPS DE CAPSULE, CAPSULE D'INFUSION ET RÉCIPIENT

(30) Priorität: 27.10.2017 DE 102017010002; 07.11.2017 US 201715805972; 18.09.2018 DE 102018007363; 12.10.2018 DE 102018008119
(43) Veröffentlichungstag der Anmeldung: 02.09.2020
(73) Patentinhaber: Kiefel GmbH, 83395 Freilassing (DE)
(72) Erfinder: SMEULDERS, Gijsbertus, Adrianus, Johannes, Baptist, 5171 RZ Kaatsheuvel (NL)
(74) Vertreter: DTS Patent- und Rechtsanwälte PartmbB
(86) Internationale Anmeldenummer: PCT/EP2018/000494
(87) Internationale Veröffentlichungsnummer: WO 2019/081062

(56) Entgegenhaltungen:
- EP-A1- 1 580 143
- EP-A1- 1 580 143
- EP-A1- 2 287 090
- EP-A1- 2 287 090
- EP-A1- 2 287 090
- EP-A1- 2 394 539
- EP-A1- 2 394 539
- EP-A1- 2 886 490
- EP-A1- 2 886 490
- EP-A1- 2 923 969
- EP-A1- 2 923 969
- EP-A1- 2 966 006
- EP-A1- 2 966 006
- EP-A1- 3 016 890
- EP-A2- 1 163 996
- EP-A2- 1 163 996
- EP-A2- 1 163 996
- EP-B1- 3 016 890
- EP-B1- 3 016 890
- WO-A1-2015/145362
- WO-A1-2015/145362
- WO-A1-2016/075318
- WO-A1-2016/075318
- WO-A1-2016/075318
- WO-A1-2017/103028
- WO-A1-2017/103028
- WO-A2-2014/067507
- WO-A2-2014/067507
- DE-A1- 102016 201 498
- DE-A1- 102016 201 498
- DE-U1- 29 812 475
- DE-U1- 29 812 475
- DE-U1- 29 812 475
- FR-A- 1 238 421
- FR-A- 1 238 421
- FR-A- 1 238 421
- JP-A- 2017 505 837
- JP-A- 2017 505 837
- US-A1- 2011 041 702
- US-A1- 2011 041 702
- US-A1- 2016 255 988
- US-A1- 2016 255 988
- US-A1- 2017 174 418
- US-A1- 2017 174 418
- US-A1- 2017 174 418
- US-B1- 6 315 150
- US-B1- 6 315 150
- US-B1- 6 315 150

## Beschreibung

Die Erfindung betrifft ein Verfahren zum Thermoformen einer Folie zu einem Behälter, insbesondere zu einem Behälter für eine Brühkapsel, wie speziell für eine Kaffeekapsel, wobei die Folie mittels wenigstens eines Formstempels und/oder mittels eines Überdrucks in einer axialen Hauptformrichtung in ein Formkammerteil eines Formwerkzeugs hinein zu einem Formling mit einer Kavität umgeformt wird, wobei die Folie bis gegen oder zumindest bis vor einen Formboden des Formkammerteils gedrückt wird, um einen Bodenbereich des Formlings auszuformen.

Die Erfindung betrifft des Weiteren ein Formwerkzeug zum Tiefziehen einer Folie zu einem Behälter, insbesondere zu einem Behälter für eine Brühkapsel, speziell für eine Kaffeekapsel, mit einem Formkammerteil, welches mit Überdruck beaufschlagbar ist, bei welchem das Formkammerteil eine Formkammer umfasst, welche von einem Formboden und von einer Formseitenwand derart umschlossen ist, dass in dem Formkammerteil unter Zuhilfenahme von Überdruck die Folie zu dem Behälter umformbar ist.

Die Erfindung betrifft darüber hinaus eine Anlage zum Thermoformen mit einem Formwerkzeug zum Tiefziehen einer Folie zu einem Behälter und mit einer Überdruckeinrichtung.

Gattungsgemäße Verfahren zum Umformen und insbesondere zum Thermoformen einer Folie zu einem Behälter, wie zu Behältern zu Brühkapseln oder spezieller zu Kaffeekapseln, sind aus dem Stand der Technik bereits bekannt. Dies trifft ebenso auf diesbezüglich eingesetzte Formwerkzeuge bzw. Thermoformwerkzeuge wie auch auf etwa Thermoformanlagen, an welchen zum Durchführen gattungsgemäßer Verfahren solche Werkzeuge eingesetzt werden, zu.

Beispielsweise ist aus der EP 1 541 320 A1 ein Formwerkzeug zum Tiefziehen von Behältern aus einer erwärmten Folienbahn aus thermoplastischem Kunststoff bekannt. Das Formwerkzeug umfasst ein Oberteil und ein Unterteil, wobei das Oberteil pro vorgesehenen Formnest einen Niederhalter und einen darin verschiebbaren Streckhelfer und das Unterteil eine Kühlhülse und einen Schnittring aufweist. Die Kühlhülse zeichnet sich durch einen Formeinsatz mit einer Form für den herzustellenden Behälter aus, wobei dieser Formeinsatz mit einem verschiebbaren Formboden ausgestattet ist, um den geformten und letztendlich aus der erwärmten Folienbahn ausgestanzte Behälter aus dem Unterteil des Formwerkzeugs ausgeworfen werden kann. Der verschiebbare Formboden ist hierbei einteilig und scheibenförmig sowie plan ausgestaltet, so dass ein Bodenbereich des herzustellenden Behälters entsprechend vollflächig plan ausgebildet bzw. ausgeformt wird. WO 2016075318 A1 offenbart ein Verfahren zum Formen einer Kaffeekapsel und eine entsprechende Kaffeekapsel mit flachem Bodenbereich gleichbleibender Materialdicke.

EP 1163996 A2 offenbart ein Verfahren zur Herstellung eines Behälters mit doppelwandige Fuß aus einer thermoplastischen Folie und ein Formwerkzeug zur Durchführung dieses Verfahrens. EP 2287090 A1 offenbart ebenfalls eine Kaffeekapsel mit einen flachen oder konvexen Bodenbereich, konstanter Dicke. US 6315150 B1 offenbart einen Behälter, dessen Bodenbereich einen Rand aufweist, wobei der Rand hohl ist.

Ferner ist aus der EP 1 163 996 B1 ein Verfahren zum Herstellen eines Behälters aus einer erwärmten thermoplastischen Kunststofffolie sowie ein Formwerkzeug zur Durchführung dieses Verfahrens bekannt. Das Formwerkzeug weist wiederum einen Formeinsatz mit einem verschiebbaren Formboden auf, wobei der Formeinsatz und der verschiebbare Formboden derart gestaltet sind, dass an dem zu formenden Behälter ein Standfuß ausgeformt werden kann. Der Standfuß ist hierbei als radial außen umlaufender Steg ausgebildet. Um den Standfuß in einer sehr stabilen Ausführungsform bereitstellen zu können, sind der Formeinsatz und der verschiebbare Formboden dergestalt aufeinander abgestimmt, dass nach dem eigentlichen Umformprozess der thermoplastischen Kunststofffolie zu dem Behälter der Formboden derartig gegenüber dem Formeinsatz verschoben wird, dass die thermoplastische Kunststofffolie im Bereich des Standfußes umgefaltet wird, so dass der Standfuß durch die thermoplastische Kunststofffolie doppellagig ausgebildet ist, wobei die beiden Lagen der thermoplastischen Kunststofffolie mittels des verschiebbaren Formbodens und einem entsprechend ausgeformten Schulterbereich des Formeinsatzes miteinander verquetscht werden können.

Da sich insbesondere Kaffeekapseln mittlerweile zu einem Massenprodukt entwickelt haben, liegt es im Interesse der Hersteller, insbesondere Behälter bzw. Kapselkörper von derartigen Kaffeekapseln noch kompakter und materialsparender bauen und darüber hinaus auch mit noch umweltverträglicheren Materialien herstellen zu können.

Es ist Aufgabe vorliegender Erfindung, insbesondere gattungsgemäße Verfahren zum Umformen, insbesondere zum Thermoformen, einer Folie zu einem Behälter, wie speziell zu einem Behälter einer Kaffeekapsel, vorteilhaft weiterzuentwickeln, so dass insbesondere Letztere ressourcenschonender herstellbar sind. Ferner ist es Aufgabe der Erfindung ein diesbezüglich konstruktiv einfaches und betriebssicher arbeitendes Werkzeug bereitzustellen, mittels welchem die vorgeschlagenen Verfahren durchführbar ist.

Die Aufgabe der Erfindung wird von den Merkmalen der unabhängigen Ansprüchen gelöst.

Vorteilhafterweise wird die Folie hierbei bevorzugt mittels des bereits in dem Formling anliegenden Überdrucks weiter in den zwischenzeitlich neu erzeugten umlaufenden Ringspalt hineingeformt, so dass hierdurch der Bodenbereich des Formlings zu einem Hohlboden mit nahezu beliebig geformter Gestalt entstehen kann, wodurch letztendlich der herzustellende Behälter auf denkbar einfache Weise eine hohe Formstabilität erfahren kann, besonders in kritischen Randbereichen.

Der Begriff "Formwerkzeug" bzw. "Thermoformwerkzeug" beschreibt im Sinne der Erfindung im Wesentlichen ein Umformwerkzeug, mittels welchem eine bevorzugt plane Materialbahn zu einem Zwischen- und/oder Endprodukt umformbar ist.

Eine "Folie" kann hierbei als Endlosbahn oder als bereits vorkonfektionierte Foliennutzen eingesetzt werden. Vorzugsweise werden vorliegend thermoplastische Materialien als Folienmaterial eingesetzt.

Der Begriff "Formstempel" beschreibt vorliegend ein Bauteil des Formwerkzeugs bzw. Thermoformwerkzeugs, mittels welchem die vor einer Formkammer des Formkammerteils des Formwerkzeugs aufgespannte Folie in diese Formkammer zumindest teilweise hinein gedrückt und somit in dem Formwerkzeug vorgedehnt wird.

Der Formstempel ist hierbei beispielsweise als Vorstreckermittel an bzw. vor einer Hauptzugangsöffnung der Formkammer platziert und wird zum Vordehnen der Folie durch die Folienebene der Folie bewegt.

Ein derartiger Formstempel kann hierbei auch mehrere Formstempelelemente umfassen, welche relativ zueinander verschieblich angeordnet sind, wobei solche Formstempelelemente auch als eigenständige Formstempel konzipiert sein können, was letztendlich den gleichen technischen Effekt hat. Jedoch wird hierbei nicht von einem Formstempel umfassend zwei Formstempelelemente, sondern von zwei eigenständigen Formstempeln gesprochen.

Die Begrifflichkeit "Formkammerteil" umschreibt im Sinne der Erfindung die eigentliche Form des Formwerkzeugs, in welcher die Folie zu einem Formling und letztendlich zu einem gewünschten Behälter umgeformt wird.

Das Formkammerteil gestaltet eine Formkammer aus, welche durch einen Formboden und eine Formkammerteilseitenwand bzw. kurz Formseitenwand umgrenzt ist. Gegenüber dem Formboden befindet sich die Hauptzugangsöffnung der Formkammer. Bevorzugt ist die Formseitenwand zylindrisch ausgestaltet, sie kann aber auch eine hiervon abweichende Gestalt aufweisen. Dementsprechend ist der Formboden kreisrund ausgebildet; der Formboden kann aber auch eine hiervon abweichende Ausgestaltung besitzen, wenn die Formseitenwand eben nicht zylindrisch ist.

Der Begriff "Formling" beschreibt hierbei eine zumindest teilweise in dem Formkammerteil hineingeformte Folie, die sich somit in einem Zwischenformzustand innerhalb des Formkammerteils befindet und insofern noch nicht als fertig geformter Behälter gilt, wie dieser letztendlich das Formkammerteil verlässt.

Der Formling weist eine Kavität auf, welche aus Richtung des Formstempels her offen ist und an der gegenüberliegenden Seite durch einen Bodenbereich räumlich begrenzt ist.

Der Begriff "Behälter" wird aus der Folie bzw. letztendlich aus dem Formling erzeugt, und der Behälter beschreibt hierbei ein Aufnahmegefäß insbesondere für Lebensmittel, und speziell für Kaltspeisen. Insofern kann ein Behälter zum Beispiel ein Joghurtbecher oder dergleichen sein, wobei sich die Verwendung des vorliegenden Behälters nicht nur auf Milchprodukte beschränkt. Bevorzugt stellt der Behälter Brühkapseln und im Speziellen Kaffeekapseln dar.

Mit dem Begriff "Hauptformrichtung" ist diejenige Arbeitsrichtung an dem Formwerkzeug beschrieben, mit welchen die Folie in das Formkammerteil hinein umgeformt wird. Vorliegend verläuft die Hauptformrichtung ausgehend von der Hauptzugangsöffnung in Richtung auf den Formboden.

Der Begriff "Ringspalt" beschreibt eine während des Formprozesses temporär an dem Formwerkzeug bzw. an dessen Formkammerteil und hier weiter differenziert an dessen Formboden erzeugbare umlaufende Nut, welche zur Formkammer hin geöffnet ist, wodurch eine räumliche Erweiterung des Formkammerteils bzw. der Formkammer ermöglicht ist.

Mit anderen Worten bedeutet dies, dass dieser Ringspalt lediglich bedarfsweise an dem Formwerkzeug bzw. dem Formkammerteil vorhanden ist.

Insofern kann der Ringspalt im Kontext eines Gesamtumformprozesses bei ersten Umformvorgängen anfänglich noch nicht oder vernachlässigbar gering ausgeprägt sein, so dass beispielsweise für erste Umformschritte eine erste ebene Formfläche des Formkammerteils auf einem ersten Höhenniveau vorhanden ist.

Erst während oder nach dem Durchführen von ersten Umformschritten kann für weitere Umformschritte an der ersten Formfläche wenigstens eine veränderte Formfläche bereitgestellt werden, und zwar indem der Ringspalt temporär an dem Formkammerteil erzeugt wird. Hierbei liegt dann, nämlich zeitlich später, während des Gesamtformprozesses mindestens eine weitere Formfläche des Formkammerteils auf einem anderen Höhenniveau als die erste Formfläche, nämlich auf einem tieferen Höhenniveau, gemessen von der Hauptzugangsöffnung der Formkammer.

Es versteht sich, dass ein derartiger Ringspalt unterschiedlich erzeugt werden kann, wie nachstehend noch gezeigt ist.

Die Begriffe "Bodenbereich" bzw. "Hohlboden" sind im Sinne der Erfindung dahingehend zu verstehen, dass sie einer Hauptzugangsöffnung des Formlings, des herzustellenden Behälters bzw. eines Kapselkörpers einer Brühkapsel, wie etwa einer Kaffeekapsel, gegenüberliegend angeordnet sind.

Ein Hohlboden kann sich hierbei auch insbesondere durch einen konzentrisch um eine Rotationskörper-Mittelachse umlaufenden Steg auszeichnen, welcher an dem Formling, dem herzustellenden Behälter bzw. dem Kapselkörper nach außen auskragt.

Der umlaufende Steg ist vorliegend durch einen kurvigen Folienbereich gebildet, bei dessen Querschnittsbetrachtung sich zwei Folienabschnitte beabstandet zueinander gegenüberliegen. Das heißt mit anderen Worten, dass diese zwei Folienabschnitte sich berührungsfrei gegenüberliegen.

Dies bedeutet, dass sich eine Kavität des Formlings, Behälters bzw. Kapselkörpers bis zwischen die beiden den umlaufenden Steg formulierenden Folienabschnitte erstreckt.

Der Abstand, mit welchen diese beiden den umlaufenden Steg bildenden Folienabschnitte räumlich voneinander entfernt angeordnet sind, beträgt hierbei mindestens 0,5 mm, vorzugsweise aber mehr als 1 mm. Ferner beträgt der Abstand bevorzugt weniger als 5 mm.

Gemäß einer bevorzugten Ausführungsvariante beträgt dieser Abstand ca. 2 mm.

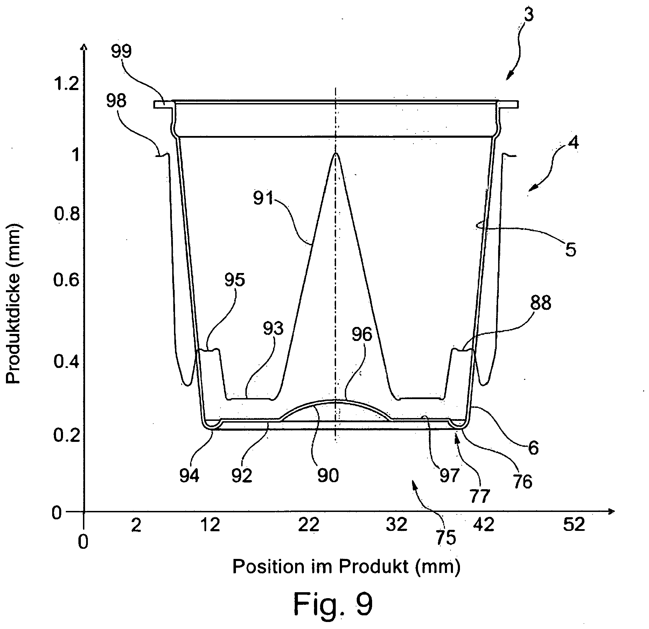

Es versteht sich, dass sich der umlaufende Steg noch durch eine Vielzahl an weiteren Merkmalen kumulativ oder alternativ auszeichnen kann, wie etwa unterschiedliche bzw. bestimmte Materialstärkenverhältnisse, auch in Bezug zu umliegenden Folienbereichen, wie dies hinsichtlich der Figuren 9, 12 bzw. 13 auch beispielhaft noch erläutert ist.

Jedenfalls erfährt das jeweilige Gebilde (Formling, Behälter, Kapselkörper oder dergleichen) durch einen umlaufenden Steg vorteilhafterweise einen weiteren formstabilisierenden Faktor, eine gute maschinentaugliche Außenkontur, um an Automaten für eine Weiterverarbeitung oder die Endbenutzung eindeutig bereitzuliegen, oder dergleichen.

Speziell an in der Praxis sich immer weiter verbreiteten Brüh- bzw. Kaffeekapseln bildet der umlaufende Steg einen Standfuß aus, so dass eine hohe Standsicherheit des jeweiligen Kapselkörpers gewährleistet ist. Beispielsweise damit Informationen auf einem Verschluss einer bereits mit Inhalten befüllten Brüh- bzw. Kaffeekapsel oder dergleichen einem Betrachter stets gut sichtbar präsentiert werden können.

Oftmals "stehen" bzw. liegen Kaffeekapseln auf einem derartigen Verschluss, so dass darauf abgebildete Informationen erst gar nicht wahrnehmbar sind.

Im Gegensatz zu diesem Hohlboden ist der Bodenbereich im Wesentlichen noch plan ausgebildet oder etwa lediglich durch einen gewölbten Mittenbereich (insbesondere Kaffeekapsel) gekennzeichnet.

An dieser Stelle sei erwähnt, dass der vorliegende Bodenbereich bzw. Hohlboden sowohl eine Kopfseite als auch eine Fußseite eines entsprechend ausgestalteten Kapselkörpers formulieren kann.

Die vorliegende Aufgabe wird von einem Verfahren zum Thermoformen einer Folie zu einem Behälter, insbesondere zu einem Behälter für eine Brühkapsel, speziell für eine Kaffeekapsel, gelöst, bei welchem die Folie mittels eines Formstempels und/oder mittels eines Überdrucks in einer axialen Hauptformrichtung in ein Formkammerteil eines Formwerkzeugs hinein zu einem Formling umgeformt wird, wobei die Folie bis gegen oder zumindest bis vor einen Formboden des Formwerkzeugs gedrückt wird, um einen Bodenbereich des Formlings auszuformen, und wobei sich das Verfahren dadurch auszeichnet, dass bei Überdruck innerhalb der Kavität des Formlings der Formboden des Formwerkzeugs zumindest teilweise mit einem Hohlbodenformhub von weniger als 5 mm oder weniger als 3 mm, vorzugsweise von weniger als 2 mm oder weniger, entgegen der Hauptformrichtung bewegt wird, um an einem von einem umlaufenden äußeren Steg umrandeten Bodenbereich des Formlings unterschiedliche Bodenbereichsdicken zu erzeugen.

Es versteht sich, dass der Ringspalt vorliegend konstruktiv auf unterschiedliche Weise hergestellt werden kann, wie eingangs bereits beispielhaft aufgezeigt. Bei der Lösung nach dem zweiten Aspekt der Erfindung wird eine Materialumverteilung dadurch erzielt, dass bei Aufrechterhaltung des Überdrucks ein Hohlbodenformhub mit dem Formboden durchgeführt wird.

Der Begriff "Materialumverteilung" beschriebt im Sinne der Erfindung eine Verdickung oder Verdünnung der einlagigen Folie bzw. des einlagigen Folienmaterials, insbesondere durch Kompression, Streckung oder Stauchung.

Hierzu wird der Formboden jedoch weniger als 5 mm entgegen der Hauptformrichtung und gegen des in der Kavität des Formlings anliegenden Überdrucks durchgeführt. Hierdurch gelingt es insbesondere an einem von einem umlaufenden äußeren Steg umrandeten Bodenbereich des Formlings unterschiedliche Bodenbereichsdicken zu erzeugen, beispielsweise um einen zentrischen Mittenbereich zu erzeugen.

Es hat sich gezeigt, dass mit einem derartig begrenzten "Hohlbodenformhub" auf verfahrenstechnisch und auch konstruktiv einfache Weise unterschiedliche Bodenbereichsdicken an dem Formling bzw. Behälter erzielt werden können, wodurch bei der Herstellung insbesondere von Kapselkörpern ebenfalls eine sehr gute Materialeinsparung erzielt werden kann.

Insbesondere können hierdurch Bereiche, welche für eine hohe Formstabilität eines Behälters, wie eines Kapselkörpers, besonders verantwortlich sind, hervorragend gestärkt werden, wohin gegen andere Bereiche gezielt problemlos mit weniger Materialeinsatz ausgeformt werden können.

Es wurde vorliegend erkannt, dass zum Ausbilden von unterschiedlichen Bodenbereichsdicken bereits eine Initialbewegung des Formbodens von wenigen Millimetern ausreicht.

Der Begriff "Hohlbodenformhub" beschreibt hierbei eine Umformbewegung des Formwerkzeugs, bei welcher der Formboden des Formwerkzeugs zumindest teilweise bzw. ein Teil des Formbodens entgegen der Hauptumformrichtung bewegt bzw. "angelupft" wird.

Insofern findet im Sinne der vorliegenden Erfindung noch während des Umformprozesses in Hauptumformrichtung eine Gegenbewegung entgegen dieser Hauptformrichtung statt, mit dem Ziel den Formling bzw. speziell die Kavität des Formlings weiter zu verformen.

Insbesondere können mit dieser Verfahrensvariante unterschiedlich dicke Bodenbereiche radial weiter innen eines umlaufenden Stegs erzeugt werden.

Die Aufgabe der Erfindung wird nach einem dritten Aspekt der Erfindung auch von einem Verfahren zum Thermoformen einer Folie zu einem Behälter, insbesondere zu einem Behälter für eine Brühkapsel, speziell für eine Kaffeekapsel, gelöst, bei welchem die Folie mittels eines Formstempels und/oder mittels eines Überdrucks in einer axialen Hauptformrichtung in ein Formkammerteil eines Formwerkzeugs hinein zu einem Formling mit einer Kavität umgeformt wird, wobei die Folie bis gegen oder zumindest bis vor einen Formboden des Formkammerteils gedrückt wird, um einen Bodenbereich des Formlings auszuformen, und wobei sich das Verfahren dadurch auszeichnet, dass an dem Bodenbereich des Formlings eine Materialumverteilung, insbesondere eine Materialverschiebung und/oder eine Materialkompression, vorgenommen wird, indem bei Umgebungsdruck oder Überdruck innerhalb der Kavität des Formlings an dem Formboden ein umlaufender Ringspalt erzeugt wird.

Bei einer derartigen Materialumverteilung kann oftmals eine lohnenswerte Materialeinsparung erzielt werden, insbesondere wenn bedacht wird, dass es sich beispielsweise im Falle von Kaffeekapseln um weltweit vertriebene Massenprodukte handelt.

Weiter ist es vorteilhaft, dass der Bodenbereich des Formlings durch eine Materialverteilung an der Folie vorteilhaft in unterschiedliche Funktionsbereiche aufgeteilt werden kann, indem an dem Formboden ein umlaufender Ringspalt erzeugt wird.

Es wurde somit erkannt, dass das Erzeugen des an dem Formboden des Formkammerteils umlaufenden Ringspalts eine gewünschte Materialverteilung im Bodenbereich des Formlings begünstigt, da die Folie zusätzlich in diesen umlaufenden Ringspalt hineinverformt werden kann, was insgesamt eine Materialverteilung an dem Bodenbereich des Formlings zur Folge hat. Insbesondere kann hierdurch auf verfahrenstechnisch sehr einfache Weise ein Hohlboden an dem Formling bzw. an dem fertigen Behälter ausgeformt werden.

Vorteilhaft für alle Aspekte der Erfindung ist es, wenn mittels der Ringspalterzeugung und/oder des Hohlbodenformhubs mindestens eine lokale Materialanhäufung und/oder eine lokale Material senke an dem Bodenbereich des Formlings erzeugt wird. So können einerseits beispielsweise ein umlaufender Steg (lokales Materialmaximum) zur Stabilisierung des herzustellenden Behälters und andererseits eine Materialeinsparung (lokale Material senke) erzielt werden.

Eine bevorzugte Verfahrensvariante hinsichtlich der Aspekte der vorliegenden Erfindung sieht vor, dass an dem Bodenbereich des Formlings unterschiedlich dicke Bodenteilbereiche erzeugt werden, indem bei Überdruck in der Kavität des Formlings an dem Formboden ein umlaufender Ringspalt erzeugt wird. Hierbei kann die Verfahrensführung derart gewählt werden, dass das zusätzliche Hineinformen der Folie in dem neu erzeugten umlaufenden Ringspalt eine gewünschte Materialverteilung bedingt, mit der Wirkung unterschiedlich dicker Bodenteilbereiche zu erzielen.

Darüber hinaus ist es vorteilhaft, wenn an dem Bodenbereich des Formlings ein radial innenliegender Bodenscheibenbereich mit einer ersten Bodenteildicke, ein radial weiter außen liegender, erster Bodenringbereich mit einer zweiten Bodenteildicke und ein radial noch weiter außen liegender, zweiter Bodenringbereich mit einer dritten Bodenteildicke ausgeformt werden, indem bei Überdruck in der Kavität des Formlings an dem Formboden des Formkammerteils ein umlaufender Ringspalt erzeugt wird. Hierdurch lassen sich auf verfahrenstechnisch einfache Weise unterschiedliche Funktionsbereiche an dem Bodenbereich des Formlings bzw. des herzustellenden Behälters erzeugen.

Beispielsweise definiert der radial innen liegende Bodenscheibenbereich den eigentlichen Mittenbereich an einer Kaffeekapsel, während der radial noch weiter außen liegende, zweite Bodenringbereich einen Standfuß der Kaffeekapsel, bevorzugt in Gestalt eines umlaufenden Stegs an dem Bodenbereich formuliert.

Insofern sieht eine bevorzugte Verfahrensvariante vor, dass mittels des radial innenliegenden Bodenscheibenbereichs eine plane oder bevorzugt eine gewölbte, dickere Mittenfläche an dem Bodenbereich des Formlings erzeugt wird.

Die Mittenfläche eines diesbezüglichen zentrischen Mittenbereichs lässt sich noch stabiler und somit vorteilhafter ausführen, wenn mittels des Formbodens der radial innenliegende Bodenscheibenbereich in die Kavität des Formlings hineingewölbt wird.

Besonders zweckmäßig ist es, wenn mittels des radial noch weiter außenliegenden, zweiten Bodenringbereichs ein umlaufender Steg an dem Bodenbereich des Formlings erzeugt wird, so dass der hergestellte Behälter neben den anderen Funktionsbereichen sogleich einen vorteilhaften Standfuß erhalten kann.

Wird mittels des radial weiter außenliegenden, ersten Bodenringbereichs ein dünnerer Nadeleinstechbereich zwischen dem radial innenliegenden Bodenscheibenbereich und dem radial noch weiter außen liegenden, zweiten Bodenringbereich erzeugt, kann die Herstellung insbesondere von Kaffeekapseln noch ökonomischer vorgenommen werden. Der radial weiter außen liegende, erste Bodenringbereich ist dann zwischen dem Bodenscheibenbereich und dem zweiten Bodenringbereich angeordnet, verbindet diese beiden Bereiche lediglich, und hat ansonsten kaum erwähnenswerte weitere Funktionen, so dass dieser erste Bodenringbereich materialsparend entsprechend dünner ausgestaltet werden kann als die benachbarten Bereiche.

Die Aufgabe wird nach einem vierten Aspekt ferner von einem Verfahren zum Thermoformen einer Folie zu einem Behälter, insbesondere zu einem Behälter für eine Brühkapsel, speziell für eine Kaffeekapsel, gelöst, bei welchem die Folie mittels eines Formstempels und/oder mittels eines Überdrucks in axialer Hauptformrichtung in ein Formkammerteil eines Formwerkzeugs hinein zu einem Formling mit einer Kavität umgeformt wird, und bei welchem die Folie bis gegen oder zumindest bis vor einen Formboden des Formkammerteils gedrückt wird, um einen Bodenbereich des Formlings auszuformen, wobei sich das Verfahren gemäß dem vierten Aspekt dadurch auszeichnet, dass bei Umgebungsdruck und/oder Überdrucks in der Kavität des Formlings an dem Formboden des Formkammerteils ein umlaufender Ringspalt erzeugt wird, in welchem die Folie in axialer Hauptrichtung weiter hinein verformt wird, um an den Bodenbereich des Formlings einen umlaufenden Steg auszuformen.

Durch diese gemäß dem vierten Aspekt vorgeschlagene Verfahrensvariante kann an dem Behälter, insbesondere an einer Kaffeekapsel, verfahrenstechnisch auf sehr einfache Weise ein umlaufender Steg an dem Hohlboden ausgeformt werden, welcher in bevorzugten Anwendungsbeispielen beispielsweise als Standfuß dienen kann.

Ein solcher umlaufender Steg ist bevorzugt radial ganz außen angeordnet und geht dabei ansatzlos in eine Seitenwand des Formlings bzw. Behälters über. Es versteht sich, dass der umlaufende Steg auch radial weiter innen liegen kann, wenn dies bei einer Variante kundenseitig gewünscht sein sollte.

Der umlaufende Steg kann durchgängig ausgestaltet oder aber auch durch Lücken unterbrochen sein.

Somit kann hierdurch an dem Formling und damit letztendlich auch an dem herzustellenden Behälter bzw. an einer Brühkapsel im Allgemeinen oder an einer Kaffeekapsel im Speziellen beispielsweise ein äußerer umlaufender Standfuß mit weniger Materialeinsatz als bisher erzeugt werden, wie auch vorstehend bereits ausführlicher erläutert.

Der hierbei an dem Formboden erzeugte Ringspalt lässt sich beispielsweise dadurch realisieren, indem ein ringförmiges Bodenteil abgesenkt, also in Hauptformrichtung bewegt, wird, wobei ein tellerförmiges Bodenteil radial innerhalb des ringförmigen Bodenteils stehen bleibt. Diese Variante erscheint jedoch als nicht ideal, da hierbei die Folie nicht gegen einen Überdrück verformt wird, wodurch eine Materialverteilung im Bodenbereich des Formlings nur bedingt gesteuert werden kann.

Die vorliegende Aufgabe wird nach einem fünften Aspekt ebenso von einem Verfahren zum Thermoformen einer Folie zu einem Behälter, insbesondere zu einem Behälter für eine Brühkapsel, speziell für eine Kaffeekapsel, gelöst, bei welchem die Folie mittels eines Formstempels und/oder mittels eines Überdrucks in einer axialen Hauptformrichtung in ein Formkammerteil eines Formwerkzeugs hinein zu einem Formling mit einer Kavität umgeformt wird, wobei die Folie bis gegen einen Formboden des Formkammerteils gedrückt wird, um einen Bodenbereich des Formlings auszuformen, und wobei sich das Verfahren nach dem vierten Aspekt dadurch auszeichnet, dass bei Überdruck in der Kavität des Formlings der Formboden des Formkammerteils zumindest teilweise mit einem Hohlbodenformhub von weniger als 5 mm oder 3 mm, vorzugsweise von 2 mm oder weniger, entgegen der axialen Hauptformrichtung bewegt wird, so dass an dem Formboden ein umlaufender Ringspalt erzeugt wird, um an dem Bodenbereich des Formlings einen umlaufenden Steg auszuformen.

Verfahrenstechnisch einfach lässt sich ein Ringspalt an dem Formboden erzeugen, wenn zumindest ein Teil des Formbodens einen kurzen Initialhub entgegen der Hauptformrichtung durchführt, der lediglich einen Hubweg von 5 mm oder 3 mm, vorzugsweise von 2 mm oder weniger, aufweist. Hierdurch entsteht in dem Formkammerteil bereits ein ausreichend tiefer umlaufender Ringspalt, in welchem die Folie mittels Überdruck hineingeformt wird.

Erfolgt ein Hohlbodenformhub gegen einen Überdruck innerhalb der Kavität des Formlings, also gegen die Hauptformrichtung, kann zudem eine besonders gute Materialverteilung innerhalb der Folie erzielt werden.

Ferner kann der Bodenbereich des Formlings sehr präzise konturiert werden, wenn ein Ringspalt an dem Formboden des Formkammerteils erzeugt wird, wenn in der Kavität des Formlings ein Überdruck anliegt.

Es ist im Sinne der Erfindung vorgesehen, dass der umlaufende Ringspalt bei Überdruck innerhalb der Kavität des Formlings erzeugt oder der Hohlbodenformhub bei Überdruck innerhalb der Kavität des Formlings durchgeführt wird. Es wurde gefunden, dass die Folie am Bodenbereich des Formlings besonders effektiv moduliert werden kann, wenn innerhalb der Kavität des Formlings Überdruck herrscht.

Hierbei kann der Überdruck innerhalb der Kavität des Formlings bereits vor, während oder erst im Anschluss an einer Ringspalterzeugung und/oder Hohlbodenformhubbewegung erzeugt werden.

Die Verfahren können jedoch besonders effektiv durchgeführt werden, wenn eine Ringspalterzeugung bzw. Hohlbodenhubbewegung bei bereits anliegendem Überdruck erfolgt, welcher schon zur Vorumformung der Folie bzw. des Formlings verwendet wurde.

Es ist zweckmäßig, wenn mittels einer Ringspalterzeugung in Hauptformrichtung das Raumvolumen der Kavität des Formlings vergrößert wird oder zumindest unverändert groß bleibt. Somit bleibt trotz einer Stegausbildung an dem Formling bzw. an dem Behälter das Aufnahmevolumen für Inhaltstoffe gleich oder vergrößert sich idealerweise.

Als besonders vorteilhaft ist anzusehen, dass mittels oder trotz einer Hohlbodenformhubbewegung entgegen der Hauptformrichtung das Raumvolumen der Kavität des Formlings vergrößert wird oder zumindest unverändert groß bleibt.

Ein Behälter bzw. ein Kapselkörper einer Brühkapsel können besonders vorteilhaft ausgestaltet werden, wenn die Kavität des Formlings durch einen am Formling ausgestalteten, umlaufenden Steg erweitert wird. Hierdurch kann das Fassungsvermögen des Behälters trotz Ausformen eines umlaufenden Stegs vergrößert werden, oder zumindest gleich groß beibehalten werden.

Es kann vorliegend sehr materialsparend gearbeitet werden, wenn der umlaufende Steg einwandig ausgebildet wird. Dies ist insbesondere hinsichtlich Massenprodukten, wie es im Speziellen bei Kaffeekapseln zutrifft, äußerst vorteilhaft.

Im Sinne der Erfindung wird von Einwandigkeit gesprochen, sofern sich zwischen zwei Folienlagen die Kavität des Formlings bzw. Behälters erstreckt.

Das bedeutet mit anderen Worten, dass zwei Folienlagen durch ein Raumvolumen der Kavität voneinander beanstandet angeordnet sind.

Darüber hinaus ist es zweckmäßig, wenn der Ringspalt und/oder der Hohlbodenformhub mit einer Höhe von weniger als 10 % oder von weniger als 5 % der Gesamthöhe des Formlings, des Behälters oder eines Kapselkörpers, und von mindestens 1 % der Gesamthöhe des Formlings, des Behälters oder eines Kapselkörpers erzeugt wird. Hierdurch kann vorteilhafterweise eine Hohlbodentiefe bevorzugt gleich oder weniger als 2 mm verfahrenstechnisch sehr einfach hergestellt werden, wodurch sehr gute Verhältnisse hinsichtlich einer Materialverteilung bzw. eines umlaufenden Stegs realisiert werden können.

Die vorliegenden Verfahren können sehr steuerungs- und regelungsarm durchgeführt werden, wenn eine Ringspalthöhe und/oder ein Hohlbodenformhub fix eingestellt ist.

Die Verfahren lassen sich jedoch sehr leicht an unterschiedliche Kundenwünsche anpassen, wenn eine Ringspalthöhe und/oder ein Hohlbodenformhub variabel einstellbar sind. Die Herstellung vorliegender Behälter kann noch weiter vereinfacht werden, wenn im Anschluss an einen Hohlbodenformhub ein zusätzlicher Auswerfhub mit dem Formboden erfolgt, um den fertig geformten Behälter aus dem Formkammerteil auszuwerfen.

Die Aufgabe wird nach einem sechsten Aspekt darüber hinaus von einem Verfahren zum Thermoformen einer Folie zu einem Behälter, insbesondere zu einem Behälter für eine Brühkapsel, speziell für eine Kaffeekapsel gelöst, wobei die Folie mittels eines Formstempels und/oder mittels Überdruck in einer axialen Hauptformrichtung in ein Formkammerteil eines Formwerkzeugs hinein zu einem Formling umgeformt wird, wobei die Folie bis gegen oder zumindest bis vor einen Formboden des Formkammerteils gedrückt wird, um einen Bodenbereich des Formlings auszuformen, und wobei sich das Verfahren dadurch auszeichnet, dass bei Überdruck innerhalb der Kavität des Formlings der Formboden des Formkammerteils zumindest teilweise mit einem Hohlbodenformhub, insbesondere von weniger als 5 mm oder weniger als 3 mm, vorzugsweise von weniger als 2 mm oder weniger, in Hauptformrichtung bewegt wird, um den Bodenbereich des Formlings weiter umzuformen.

Wird der Formboden zum Umformen zusätzlich zu der in Hauptformrichtung stattfindenden Umformung (Formstempel bzw. Überdruck) in Hauptformrichtung bewegt, also insbesondere abgesenkt, kann die Folie bzw. das Folienmaterial unter Überdruck dem Formboden nachfolgen.

Hierdurch kann insbesondere ein umlaufender äußerer Steg, aber auch eine umlaufende Bodenaußennut, an dem Behälter ausgeformt werden.

Insbesondere können darüber hinaus auch an einem von einem umlaufenden äußeren Steg umrandeten Bodenbereich des Formlings unterschiedliche Bodenbereichsdicken erzeugt werden.

Bevorzugt findet der Hohlbodenformhub zeitversetzt zu der Aktion des Formstempels und in etwa zeitgleich mit dem Überdruck statt, um die gewünschten Effekte kumuliert erzielen zu können.

Die Aufgabe wird darüber hinaus nach einem siebten Aspekt von einem Formwerkzeug zum Tiefziehen einer Folie zu einem Behälter, insbesondere zu einem Behälter für eine Brühkapsel, spezielle für eine Kaffeekapsel, mit einem Formkammerteil, welches mit einem Überdruck beaufschlagbar ist, gelöst, bei welchem das Formkammerteil eine Formkammer umfasst, welche von einem Formkammerteilboden und einer Formkammerteilseitenwand derart umschlossen ist, dass in dem Formkammerteil unter Zuhilfenahme von Überdruck die Folie zu einem Behälter umformbar ist, wobei das Formwerkzeug dazu eingerichtet ist, bei Überdruck an dem Formkammerteilboden einen Ringspalt zu erzeugen, in welchem die Folie hineinformbar ist. Erfindungsgemäß ist dabei die Folie entgegen einer axialen Hauptformrichtung hineinformbar.

Mittels eines derartig erzeugbaren Ringspalts, welcher erst während eines bereits laufenden Formprozesses an dem Formkammerteil erzeugt wird, gelingt insbesondere eine vorteilhafte Materialverteilung am Bodenbereich des Formlings, wodurch insbesondere auch ein umlaufender Steg an dem Formling bzw. ein umlaufender Standfuß an dem Behälter ausgeformt werden kann.

Die Aufgabe wird ferner nach einem achten Aspekt von einem Thermoformwerkzeug zum Thermoformen einer Folie zu einem Behälter, insbesondere zu einem Behälter für eine Brühkapsel, speziell für eine Kaffeekapsel, mit einem Formkammerteil, welches mit einem Überdruck beaufschlagbar ist, gelöst, bei welchem das Formkammerteil eine Formkammer umfasst, welche von einem Formkammerteilboden und einer Formkammerteilseitenwand derart umschlossen ist, dass in dem Formkammerteil unter Zuhilfenahme von Überdruck die Folie zu dem Behälter umformbar ist, wobei das Thermoformwerkzeug dazu eingerichtet ist, bei Überdruck an dem Formkammerteilboden einen Ringspalt zu erzeugen, in welchem die Folie hineinformbar ist.

Insbesondere ist der bereits geformte bzw. vorgeformte Bodenbereich des Formlings in diesem zwischenzeitlich erzeugten Ringspalt weiter hineinformbar.

Vorteilhaft ist es weiter, wenn der Formboden ein in die Formkammer hinein verlagerbares Bodenausrückerelement umfasst, welches von einem ortsfesten Bodenringelement umschlossen ist. Durch Ausrücken dieses Bodenausrückerelements in die Formkammer hinein kann der Ringspalt verfahrenstechnisch und konstruktiv besonders einfach erzeugt werden.

Eine konstruktiv einfachere Ausführungsform sieht jedoch vor, dass das Bodenringelement gegenüber der Formseitenwand ortsfest ist.

Das Bodenringelement kann an dem Formkammerteil konstruktiv einfach ausgestaltet werden, wenn das Bodenringelement einstückig mit der Formkammerteilseitenwand ausgebildet ist.

Ist das Bodenausrückelement in Bezug auf den Formboden durchmesserreduziert, kann der Ringspalt zwischen diesem Bodenausrückelement und der Formseitenwand des Formkammerteils problemlos eingerichtet werden.

Ferner ist es vorteilhaft, wenn das Bodenausrückelement eine Bauteildicke aufweist, welche zumindest gleich hoch oder höher ist als eine Ringspalthöhe des zu erzeugenden Ringspaltes. Hierdurch kann eine radial weiter innenliegende seitliche Begrenzung des Ringspalts bevorzugt ausschließlich durch das Bodenausrückelement bewerkstelligt werden, so dass der konstruktive Aufwand des Formkammerteils trotz erzeugbaren Ringspaltes sehr einfach gehalten werden kann.

Ist das Bodenausrückerelement einteilig ausgestaltet, kann es baulich einfacher umgesetzt werden.

Ist das Bodenausrückelement, insbesondere kopfseitig, zumindest teilweise an dem ortsfesten Bodenringelement seitengeführt, kann auf aufwendige zusätzliche Lagereinrichtungen an dem Formwerkzeug bzw. Thermoformwerkzeug verzichtet werden, wodurch der erforderliche konstruktive Aufwand gut beherrschbar ist.

Es versteht sich, dass die Fläche des Bodenausrückelements, welche den Formkammerteilboden zumindest teilweise bildet, nahezu beliebig konturiert sein kann, um ein Formen von unterschiedlich ausgeformten Bodenbereiche an dem Formling zu unterstützen bzw. zu vereinfachen.

Weist das Bodenausrückelement an seiner Kopfseite einen konvex ausgebildeten Flächenbereich auf, kann insbesondere ein Mittenbereich an dem zu fertigenden Behälter vorteilhaft hergestellt werden.

Mit den Begrifflichkeiten "kopfseitig" bzw. "Kopfseite" ist im Sinne dieser Erfindung dasjenige Ende des Bodenausrückelements verstanden, welches der mit Überdruck beaufschlagten Formkammer zugewandt ist.

Die Formgebung des Bodenbereichs des Formlings bzw. Behälters kann zusätzlich gut manipuliert werden, wenn das verlagerbare Bodenausrückerelement an seiner Kopfseite einen umlaufenden überhöhten Rand aufweist. Genauer gesagt, ist der überhöhte Rand hierbei innerhalb der Formkammer angeordnet. Mittels des überhöhten Rands kann etwa ein umlaufender Steg mit einem besonders geringen Hohlbodenformhub erzeugt werden. Auch die Materialverteilung kann hierdurch beeinflusst werden. Ferner kann aber auch eine Bodenaußennut konstruktiv einfach an dem Bodenbereich erzeugt werden.

Es versteht sich, dass kumulativ oder alternativ auch das Bodenringelement gegenüber der Formkammer verlagerbar sein kann.

Insofern ist es kumulativ oder alternativ vorteilhaft, wenn der Formboden ein in die Formkammer hinein verlagerbares Ringausrückerelement umfasst, wobei dieses verlagerbare Ringausrückerelement an dem Formboden der Formkammer angeordnet ist. Mittels dieses Ringausrückerelements kann der gewünschte umlaufende Steg ebenfalls vorteilhaft an dem Bodenbereich ausgebildet werden. Ferner können mittels des Ringausrückerelements gezielt spezielle Materialverteilungen an dem Hohlboden eingestellt werden.

Ist das verlagerbare Ringausrückerelement gegenüber einem radial weiter innen liegenden Formbodenteil der Formkammer, insbesondere einem verlagerbaren Bodenausrückerelement, relativ axial verschieblich angeordnet, kann der Hohlboden bei Bedarf noch differenzierter gestaltet werden. Insbesondere brauchen bei dem verlagerbaren Ringausrückerelement gegenüber einem mittig angeordneten Bodenausrückerelement in der Regel nur geringere Bauteilmassen bewegt zu werden, wodurch schnellere Reaktions- und Beschleunigungszeiten gegenüber dem Folienmaterial erzielt werden können. Hierdurch können auch differenziertere und eine präzisiere Materialstärkenverteilung an dem herzustellenden Behälter erzielt werden.

Insbesondere die Lage des umlaufenden Stegs kann präzise vorbestimmt werden, wenn das verlagerbare Ringausrückerelement zwischen dem Formkammerteil, insbesondere einem ringförmigen Flächenanteil des Formbodens, und einem scheibenförmigen Flächenanteil des Formbodens, insbesondere einem Bodenausrückerelement axial verschieblich angeordnet ist. Hierdurch kann radial weiter außen an dem Hohlboden der umlaufende Steg platziert werden, während radial weiter innen des umlaufenden Stegs, aber radial weiter außen eines zentralen Mittenbereichs besonders einfach beispielsweise eine umlaufende Bodenaußennut an dem Hohlboden ausgebildet werden kann.

Darüber hinaus ist es vorteilhaft, wenn das verlagerbare Ringausrückerelement wenigstens einem Formstempel, insbesondere einem oder mehreren Formstempelelementen, axial verschieblich gegenüberliegend angeordnet ist., wodurch das verlagerbare Ringausrückerelement in Interaktion mit einem solchen Formstempel oder dergleichen noch differenzierte auf die Folie einwirken kann.

An dieser Stelle sei noch erwähnt, dass ein Formwerkzeug und insbesondere ein Thermoformwerkzeug umfassend ein verlagerbares Ringausrückerelement nach wenigstens einem der hierbei beschriebenen Merkmale auch unabhängig von den übrigen Merkmalen der Erfindung die vorliegende Aufgabe löst.

Um beispielsweise eine Ringspalthöhe des umlaufenden Ringspalts einfacher oder noch vielfältiger einstellen zu können, ist es vorteilhaft, wenn das Formkammerteil relativ zu dem Bodenausrückelement bzw. zu einem Formkammerteilhalter höhenverstellbar gelagert ist.

Eine derartige Höhenverstellung kann konstruktiv vielfältig realisiert sein, auch relativ zu dem verlagerbaren Ringausrückerelement.

Gedacht sei beispielsweise an eine Schraubgewindeverbindung, mittels welcher das Formkammerteil innerhalb des Formkammerteilhalters hinsichtlich seiner Relativhöhe zu dem Bodenausrückelement eingestellt werden kann.

Baulich sehr einfach kann eine derartige Höhenverstellung in die Realität umgesetzt werden, wenn verschiedene Ringspalthöhen mittels unterschiedlich hoher Distanzringelemente einstellbar sind, wobei zumindest ein Distanzringelement in einem Aufnahmeraum zwischen dem Formkammerteil und einem Formkammerteilhalter angeordnet ist, insbesondere zwischen einer oberen Schulter des Formkammerteils und einer unteren Schulter des Formkammerteilhalters eingeklemmt ist.

Darüber hinaus ist es vorteilhaft, wenn sich das Formwerkzeug oder das Thermoformwerkzeug durch einen dem Formboden gegenüberliegenden Formstempel zum Umformen der Folie auszeichnet. Hierdurch lassen sich von Differenzdrücken unabhängige Maßnahmen zum Dehnen bzw. Vorformen der Folie durchführen.

Mittels der vorstehend beschriebenen Verfahren und Formwerkzeuge gelingt bereits eine signifikante Verbesserung bestehender Herstellungsmöglichkeiten insbesondere von Behältern für Brühkapseln, etwa für Kaffeekapseln. Kumulativ oder alternativ können noch nachfolgende verfahrenstechnische und konstruktive Weiterentwicklungen vorgesehen sein.

Ein solches Formwerkzeug bzw. Thermoformwerkzeug kann noch vorteilhaft weiterentwickelt werden, wenn es zusätzlich zumindest einen Formstempel bzw. Formstempelelemente aufweist, welche in axialer Hauptformrichtung in das Formkammerteil einbringbar sind. Solche Formstempel bzw. Formstempelelemente, deren Effekte und Vorteile sind an anderer Stelle noch ausführlich beschrieben.

So wird die Aufgabe nach einem neunten Aspekt auch von einem Verfahren zum Thermoformen einer Folie zu einem Behälter, insbesondere zu einem Behälter für eine Brühkapsel, speziell für eine Kaffeekapsel, gelöst, bei welchem die Folie mittels eines Formstempels und mittels Überdruck in axialer Hauptformrichtung in ein Formkammerteil eines Formwerkzeugs hinein zu einem Formling mit einer Kavität umgeformt wird, wobei sich das Verfahren dadurch auszeichnet, dass die Folie während des Thermoformens mit Überdruck und/oder nach dem Thermoformen mit Überdruck mittels eines zusätzlichen Kalibrieelements des Formstempels zusätzlich gegen einen Formboden des Formkammerteils gedrückt wird, um einen Bodenbereich des Formlings zumindest bereichsweise zusätzlich zu bearbeiten.

Hierdurch kann eine gewünschte Materialverteilung an dem Formling noch gezielter realisiert werden. Insbesondere kann mittels des zusätzlichen Kalibrierelements des Formstempels ein designierter Nadeleinstechbereich an dem Formling noch präziser hergestellt werden, wenn dieser designierte Nadeleinstechbereich nach bereits erfolgten Vordehnprozessen durch den Formstempel und nach weiteren Überdruckumformprozessen zusätzlich noch mittels des zusätzlichen Kalibrierelements gegen den Formboden des Formkammerteils gepresst wird.

Durch diese zusätzliche Pressbehandlung der Folienlage des Formlings gelingt ein ausgesprochener gleichmäßig ausgebildeter Wandbereich mit einer sehr exakt bestimmbaren Wandstärke.

Ferner kann durch die mittels des zusätzlichen Kalibrierelements erfolgte zusätzliche Pressbehandlung eine Materialverteilung innerhalb der Folienlage weiter beeinflusst werden.

Die vorliegende Aufgabe wird verfahrenstechnisch nach einem zehnten Aspekt auch von einem Verfahren zum Thermoformen einer Folie zu einem Behälter, insbesondere zu einem Behälter für eine Brühkapsel, speziell für eine Kaffeekapsel, gelöst, bei welchem die Folie mittels eines Formstempels und mittels Überdruck in axialer Hauptformrichtung in ein Formkammerteil eines Formwerkzeugs hinein zu einem Formling mit einer Kavität umgeformt wird, wobei sich dieses Verfahren dadurch auszeichnet, dass ein Formboden des Formkammerteils bei Überdruck in der Kavität des Formlings zumindest teilweise entgegen der axialen Hauptformrichtung bewegt wird, um bei Überdruck einen umlaufenden Ringspalt an dem Formboden zu erzeugen, und dass die Folie während des und/oder nach dem Thermoformen mit Überdruck mittels eines zusätzlichen Kalibrieelements des Formstempels zusätzlich gegen einen Formboden des Formkammerteils gedrückt wird, um einen Bodenbereich des Formlings zumindest bereichsweise zusätzlich zu bearbeiten.

Ist während des Umformens der Folie bzw. des Folienelements zusätzlich noch eine interaktive Erzeugung des umlaufenden Ringspalts vorgesehen, wie insbesondere bereits ausführlich weiter vorstehend beschrieben, lässt sich die Materialverteilung an der Folie des Formlings noch besser beeinflussen.

Insbesondere im Hinblick auf das zuletzt genannte Verfahren ist es zweckmäßig, dass die Folie mittels eines in axialer Hauptformrichtung gerichteten zusätzlichen Kalibrierhubs des zusätzlichen Kalibrieelements bearbeitet wird, welcher im Anschluss oder auch während eines entgegen der axialen Hauptformrichtung gerichteten Hohlbodenformhubs eines Bodenausrückerelements des Formbodens erfolgt. Hierdurch kann speziell der Bodenbereich des Formlings noch präziser bearbeitet und ausgestaltet werden.

Hierbei können der Kalibrierhub und der Hohlbodenformhub zeitlich nacheinander erfolgen.

Oder der Kalibrierhub und der Hohlbodenformhub werden zwar zeitversetzt initiiert, erfolgen aber zumindest teilweise in einem gemeinsamen Zeitfenster.

Es ist ferner auch möglich, dass ein zuvor durchgeführter Hohlbodenformhub mittels des anschließenden Kalibrierhubs teilweise wieder hinsichtlich seines Hubweges verringert wird, indem das Bodenausrückerelement mittels des zusätzlichen Kalibrierelements zurückverlagert wird.

Vorteilhafterweise erfolgt der Hohlbodenformhub mit einem Hub von weniger als 5 mm oder weniger als 3 mm, vorzugsweise von weniger als 2 mm oder weniger, entgegen der axialen Hauptformrichtung.

Zweckmäßigerweise beträgt der Kalibrierhub weniger als weniger als 15 mm, vorzugsweise von weniger als 10 mm, in axialer Hauptformrichtung, wobei dieser geringe Kalibrierhub bereits ausreicht, um für eine zusätzliche Folienbearbeitung genügend weit aus dem Formstempel herauszufahren.

Eine besonders bevorzugte Verfahrensvariante sieht vor, dass die Folie während eines Überdruckformens der Folie und/oder nach dem Überdruckformen der Folie mittels des zusätzlichen Kalibrieelements zusätzlich gegen den Formboden des Formkammerteils gedrückt wird, um an dem Bodenbereich des Formlings einen designierten Nadeleinstechbereich für den herzustellenden Behälter zu kalibrieren. Wie bereits vorstehend thematisiert, kann hierdurch ein besonders betriebssicher funktionierender Nadeleinstechbereich etwa an einer Brühkapsel oder einer Kaffeekapsel erzeugt werden.

Darüber hinaus ist es vorteilhaft, wenn mittels eines Kalibrierhubs des zusätzlichen Kalibrierelements in axialer Hauptformrichtung und/oder eines Hohlbodenformhubs eines Bodenausrückerelements des Formbodens in einer Wandung des Formlings und oberhalb eines an dem Bodenbereich des Formlings angeordneten umlaufenden Stegs ein erstes lokales Materialmaximum erzeugt wird. Durch dieses derart verortete erste lokale Materialmaximum kann der Formling und damit auch der herzustellende Behälter eine vorteilhafte Aussteifung erfahren, so dass insbesondere ein Kapselkörper später sehr betriebssicher funktioniert.

Das lokale Materialmaximum kann für eine sehr gute Aussteifung des Kapselkörpers sorgen, wenn das erste lokale Materialmaximum radial weiter außen des umlaufenden Stegs in einer Seitenwand des Formlings erzeugt wird.

Kumulativ oder alternativ ist es für eine gute Aussteifung vorteilhaft, wenn mittels eines Kalibrierhubs des zusätzlichen Kalibrierelements in axialer Hauptformrichtung und/oder eines Hohlbodenformhubs eines Bodenausrückerelements des Formbodens an einer Wandung radial weiter innen eines an dem Bodenbereich des Formlings angeordneten umlaufenden Stegs ein zweites lokales Materialmaximum erzeugt wird.

Insofern sieht eine vorteilhafte Verfahrensvariante vor, dass das zweite lokale Materialmaximum radial weiter innen des umlaufenden Stegs in einem Bodenbereich, insbesondere in einem designierten Nadeleinstechbereich, des Formlings erzeugt wird.

Die Aufgabe wird nach einem elften Aspekt auch noch von einem Formwerkzeug oder einem Thermoformwerkzeug zum Formen einer Folie zu einem Behälter, insbesondere zu einem Behälter für eine Brühkapsel, speziell für eine Kaffeekapsel, mit einem Formstempel und mit einem Formkammerteil, welches eine mit Überdruck beaufschlagbare Formkammer aufweist, in welcher der Formstempel in axialer Hauptformrichtung einbringbar ist, gelöst, wobei mindestens ein äußeres Formstempelelement des Formstempels relativ zu einem inneren Formstempelelement des Formstempels aktiv verschieblich ist und/oder mindestens das innere Formstempelelement relativ zu dem äußeren Formstempelelement aktiv verschieblich ist, wobei zwischen den Formstempelelementen ein verlagerbares Kalibrierelement angeordnet ist, welches relativ zu den Formstempelelementen verlagerbar ist, um die Folie nach einer Überdruckumformung der Folie zusätzlich gegen einen Formboden des Formkammerteils zu pressen. Hierdurch kann eine vielfältige Materialverteilung mit unterschiedlichen lokalen Materialmaxima in der Wandung des Formlings erzielt werden.

Hierbei kann auch nur eines der Formstempelelemente und das zusätzliche Kalibrierelement vorhanden sein.

Insofern wird die Aufgabe alternativ bereits durch ein diesbezügliches Formwerkzeug oder Thermoformwerkzeug mit nur einem äußeren oder mit nur einem inneren Formstempelelement und einem zusätzlichen Kalibrierelement gelöst.

Die Aufgabe wird nach einem zwölften Aspekt auch von einem Formwerkzeug oder einem Thermoformwerkzeug zum Formen einer Folie zu einem Behälter, insbesondere zu einem Behälter für eine Brühkapsel, speziell für eine Kaffeekapsel, mit einem Formstempel und mit einem Formkammerteil, welches eine mit Überdruck beaufschlagbare Formkammer aufweist, in welcher der Formstempel in axialer Hauptformrichtung einbringbar ist, gelöst, wobei ein äußeres Formstempelelement des Formstempels relativ zu einem inneren Formstempelelement des Formstempels aktiv verschieblich ist und/oder das innere Formstempelelement relativ zu dem äußeren Formstempelelement aktiv verschieblich ist, wobei zwischen den Formstempelelementen ein verlagerbares Kalibrierelement angeordnet ist, welches relativ zu den Formstempelelementen verlagerbar ist, um die Folie nach einer Überdruckumformung der Folie zusätzlich gegen einen Formboden des Formkammerteils zu pressen, und dass ein Formboden des Formkammerteils ein entgegen der axialen Hauptformrichtung in das Formkammerteil hinein verlagerbares Bodenausrückerelement umfasst, welches von einem ortsfesten Bodenringelement des Formbodens umschlossen ist. Hierdurch kann eine noch vielfältigere Materialverteilung mit unterschiedlichen lokalen Materialmaxima in der Wandung des Formlings erzielt werden.

Hierbei kann auch nur eines der Formstempelelemente und das zusätzliche Kalibrierelement vorhanden sein.

Insofern wird die Aufgabe alternativ bereits durch ein diesbezügliches Formwerkzeug oder Thermoformwerkzeug mit nur einem äußeren oder mit nur einem inneren Formstempelelement, einem zusätzlichen Kalibrierelement sowie mit einem verlagerbaren Bodenausrückerelement im Sinne der Erfindung gelöst.

Das Form- bzw. Thermoformwerkzeug kann baulich sehr kompakt realisiert werden, wenn das Kalibrierelement einen ringförmigen Grundkörper aufweist, welcher das innere Formstempelelement zumindest teilweise umgibt. Ist das Kalibrierelement in axialer Hauptformrichtung weiter in die Formkammer einbringbar als die Formstempelelemente, kann insbesondere die Bauhöhe des Formstempels gering gehalten werden.

Die Aufgabe wird nach einem dreizehnten Aspekt auch noch von einem Formwerkzeug oder Thermoformwerkzeug zum Formen einer Folie zu einem Behälter, insbesondere zu einem Behälter für eine Brühkapsel, speziell für eine Kaffeekapsel, mit einem ersten Formstempelelement, mit wenigstens einem weiteren Formstempelelement und mit einem Formkammerteil, welches eine mit Überdruck beaufschlagbare Formkammer aufweist, in welcher die Formstempelelemente in axialer Hauptformrichtung einbringbar sind, gelöst, wobei die Formstempelelemente an ihren Außenseiten jeweils eine mit der Folie wechselwirkende Stempeloberfläche und die Formkammer an ihrer Innenseite eine mit der Folie wechselwirkende Kammeroberfläche aufweisen, und wobei sich das Werkzeug dadurch auszeichnet, dass Stempeloberflächen der Formstempelelemente zumindest teilweise zueinander und/oder zumindest teilweise gegenüber der Kammeroberfläche der Formkammer verschiedene Oberflächenbeschaffenheiten aufweisen.

Mittels derartiger Stempeloberflächen können hinsichtlich der Formstempelelemente zum Beispiel unterschiedliche Mitnahmeeffekte gegenüber der Folie erzielt werden. Hierdurch lässt sich konstruktiv einfach etwa auf die Materialverteilung an der umgeformten Folie und insbesondere an dem fertigen Behälter Einfluss nehmen, wodurch wiederum gezielter spezielle Bereiche formstabiler ausgestaltet werden können.

Derartige unterschiedliche Mitnahmeeffekte können allein schon dadurch relativ einfach erzielt werden, wenn zwischen den Stempeloberflächen und der Folie etwa ein unterschiedliches Verzahnungsvermögen herrscht.

Eine Ausführungsvariante hierbei sieht etwa vor, dass mit der Folie wechselwirkende Stempeloberflächen rauer sind als eine mit der Folie wechselwirkende Kammeroberfläche.

Beispielsweise weist eine mit der Folie wechselwirkende Stempeloberfläche eines Formstempelelements einen Mittenrauwert Ra 0,1 µm oder größer 0,2 µm, bevorzugt 0,4 µm oder größer, auf, wodurch die Folie bereits ausreichend gut mittels eines derartigen Formstempelelements "mitgenommen" und geformt werden kann.

Vorzugsweise ist der Mittenrauwert Ra hierbei kleiner 1,6 µm, insbesondere kleiner 0,8 µm, so dass dennoch immer noch ausreichend gute Gleiteffekte zwischen Stempeloberfläche und Folie erzielt werden können.

Vorteilhaft ist es, wenn die Stempeloberfläche eines äußeren Formstempelelements gegenüber der Folie eine größere Affinität aufweist als die Stempeloberfläche eines radial weiter innenliegenden Formstempelelements gegenüber der Folie. Somit wohnt dem äu-βeren Formstempelelement eine verbesserte Eigenschaft inne, die Folie bereichsweise mitzunehmen als dies etwa bei dem weiter innenliegenden Formstempelelement der Fall ist.

Beispielsweise ist hierbei die Stempeloberfläche des radial weiter innenliegenden Formstempelelements etwas glatter ausgebildet als die Stempeloberfläche des radial weiter au-βen liegenden Formstempelelements.

Die unterschiedlichen Stempeloberflächen können baulich relativ einfach erzielt werden, wenn die Formstempelelemente zumindest teilweise aus unterschiedlichen Materialien hergestellt sind. Allein durch die bloße Materialwahl können andere Oberflächenbeschaffenheiten erzielt werden.

Kumulativ oder alternativ können unterschiedliche Oberflächenbeschaffenheiten an Formstempelelemente bzw. an der Formkammer bereitgestellt werden, wenn mit der Folie wechselwirkende Stempeloberflächen und/oder eine mit der Folie wechselwirkende Kammeroberfläche zumindest teilweise unterschiedliche Oberflächenbeschichtungen aufweisen.

Eine spezielle Ausführungsvariante sieht vor, dass eine mit der Folie wechselwirkende Stempeloberfläche und/oder die Kammeroberfläche zumindest teilweise unterschiedliche Oberflächenspannungen und/oder Oberflächenenergien aufweisen. Auch hierdurch können unterschiedliche Mitnahme- bzw. Gleiteffekte gegenüber der Folie erzielt werden.

Beispielsweise kann eine Oberflächenbeschichtung oder der Oberflächenüberzug Silikon aufweisen oder aus Silikon bestehen; und/oder die Oberflächenbeschichtung oder der Oberflächenbezug können Polytetrafluorethylen (PTFE) aufweisen oder daraus bestehen; und/oder die Oberflächenbeschichtung oder der Oberflächenüberzug können Kautschuk aufweisen oder aus Kautschuk bestehen, insbesondere Naturkautschuk; und/oder die Oberflächenbeschichtung oder der Oberflächenüberzug kann Chromnitrid aufweisen oder daraus bestehen; und/oder die Oberflächenbeschichtung oder der Oberflächenüberzug kann ein Elastomer aufweisen oder aus einem Elastomer bestehen; und/oder die Oberflächenbeschichtung oder der Oberflächenüberzug kann einen Thermoplast aufweisen oder aus einem Thermoplast bestehen; und/oder die Oberflächenbeschichtung oder der Oberflächenbezug kann einen Duroplast aufweisen oder aus einem Duroplast bestehen; und/oder die Oberflächenbeschichtung oder der Oberflächenüberzug kann Keramik aufweisen oder aus Keramik bestehen; und/oder die Oberflächenbeschichtung kann Graphit und/oder DLC aufweisen; und/oder der Oberflächenüberzug kann Keramik aufweisen oder aus Keramik bestehen.

Es sei ausdrücklich darauf hingewiesen, dass sich die vorstehenden Werkstoffe oder Werkstoffmischungen bzw. Naturprodukte oder Naturprodukt-Werkstoff-Mischungen auch kombinieren lassen.

Außerdem sei ausdrücklich darauf hingewiesen, dass unter einer Beschichtung auch ein härterer Belag verstanden werden kann, insbesondere mit einer höheren Eindrückhärte der Oberfläche als die Eindrückhärte des Grundmaterials aufweist, wobei letzteres beispielsweise Stahl sein kann.

Die Erfinder haben bei zahlreichen Versuchen mit verschiedensten Materialien die vorstehenden Materialien als die am besten geeigneten herauskristallisiert.

Gegenwärtig wird vermutet, dass die vorteilhaften erzielten Wirkungen auf die Oberflächenspannung bzw. auf die Oberflächenenergie der Materialien zurückzuführen sind.

Im physikalischen Grundsatz benetzen Stoffe mit niedrigerer Oberflächenenergie solche mit höherer Oberflächenenergie.

Die vorstehenden Materialien, welche sich bei Versuchen als sehr vorteilhaft herausgestellt haben, haben zumindest überwiegend eine niedrigere Oberflächenenergie als Paraffin bzw. generell gesagt als die niedermolekulare Fraktion, deren Kondensation es zu vermeiden gilt. Insbesondere gilt dies im Falle von Silikon. Anhand konkreter Zahlen hat das Paraffin nach den Messungen der Erfinder üblicherweise eine Oberflächenenergie zwischen 19 und 25,5 mN/m. PTFE hingegen beispielsweise hat im Allgemeinen eine Oberflächenenergie zwischen 15 mN/m und 21 mN/m. Dennoch konnten auch mit PTFE gute Ergebnisse erzielt werden.

Diese Gedanken abstrahierend wird vorgeschlagen, dass der Formstempel und/oder das Formstempelelement und/oder die Kavität an den möglichen Berührungsstellen an einer Oberfläche einen Bereich aufweist, der eine Oberflächenenergie unter 19 mN/m aufweist, insbesondere mit einer Oberflächenenergie von 15 mN/m bis 19 mN/m.

Alternativ kann eine geeignete Beschichtung vorgesehen sein, welche die Oberflächenenergie erhöht.

Die vorliegende Aufgabe wird nach einem vierzehnten Aspekt außerdem von einem Formwerkzeug oder einem Thermoformwerkzeug zum Formen einer Folie zu einem Behälter, insbesondere zu einem Behälter für eine Brühkapsel, speziell für eine Kaffeekapsel mit einem Formkammerteil, welches eine mit Überdruck beaufschlagbare Formkammer aufweist, welche von einem Formboden und einer Formseitenwand derart umschlossen ist, dass in dem Formkammerteil unter Zuhilfenahme von Überdruck die Folie zu dem Behälter umformbar ist, gelöst, wobei an dem Formboden der Formkammer einerseits eine umlaufende Bodenerhöhung und andererseits eine hierzu radial weiter innen liegende flächige Bodenerhöhung angeordnet sind.

Weist der Formboden der Formkammer bzw. des Formwerkzeugs oder des Thermoformwerkzeugs insbesondere eine umlaufende Bodenerhöhung und eine zusätzliche flächige Bodenerhöhung auf, kann mit dem Formwerkzeug bzw. Thermoformwerkzeug konstruktiv besonders einfach ein Hohlboden an dem Behälter ausgeformt werden.

Bei der umlaufenden Bodenerhöhung handelt es sich um einen von dem Formboden in die Formkammern hineinragenden Wulst bzw. Ring, wodurch die umlaufende Bodenerhöhung ringförmig ausgestaltet ist.

Insofern ist die vorliegende umlaufende Bodenerhöhung eine ringförmige Bodenerhöhung.

Diese umlaufende Bodenerhöhung ist hierbei radial weiter außen an dem Formboden platziert als die weiter innen liegende flächige Bodenerhöhung.

Die weiter innen liegende flächige Bodenerhöhung, kurz flächige Bodenerhöhung, ist hierbei im Wesentlichen kreisrund und scheibenförmig ausgestaltet, und die flächige Bodenerhöhung unterscheidet sich diesbezüglich von der als Ring ausgeführte umlaufende Bodenerhöhung.

Je nachdem, wie die spätere Gestalt des Hohlbodens an dem Behälter funktionell ausgestaltet werden soll, ist es vorteilhaft, wenn die flächige Bodenerhöhung und die umlaufende Bodenerhöhung gleich hoch ausgestaltet sind, oder die flächige Bodenerhöhung höher als die umlaufende Bodenerhöhung ausgestaltet ist.

Sind die flächige Bodenerhöhung und die umlaufende Bodenerhöhung beispielsweise gleich hoch ausgestaltet, ragen bei dem Hohlboden des herzustellenden Behälters diesbezügliche Bereiche in etwa gleichweit in die Kavität des Behälters hinein.

Ist die flächige Bodenerhöhung hingegen höher als die umlaufende Bodenerhöhung ausgestaltet, ragt die flächige Bodenerhöhung axial weiter in die Kavität des Behälters hinein.

Darüber hinaus ist es vorteilhaft, wenn die flächige Bodenerhöhung mit einem Abstand von der umlaufenden Bodenerhöhung beabstandet ist, wobei der Abstand größer als 5 mm, vorzugsweise größer als 10 mm, und kleiner als 20 mm, vorzugsweise kleiner als 15 mm, ist.

Beträgt der Abstand mehr als 5 mm bzw. mehr als 10 mm zwischen der flächigen Bodenerhöhung und der umlaufenden Bodenerhöhung können zwischen diesen beiden Bodenerhöhungen an einem Bodenringbereich ausreichend große Funktionsflächen zur Verfügung gestellt werden. Gedacht sei hierbei nur zum Beispiel an Nadeleinstechbereiche für Funktionsnadeln an Brühmaschinen oder dergleichen.

Beträgt der diesbezügliche Abstand weniger als 20 mm oder weniger als 15 mm, kann der dazwischenliegende Bodenringbereich an dem Hohlboden des Behälters immer noch ausreichend stabil ausgestaltet werden, selbst wenn die Materialstärke dieses Bodenringbereichs schwächer ausgestaltet sein sollte als die Materialstärke an der flächigen Bodenerhöhung bzw. der umlaufenden Bodenerhöhung. Darüber hinaus ist es vorteilhaft, wenn die umlaufende Bodenerhöhung mit einem Seitenabstand von mehr als 0,5 mm, vorzugweise von mehr 1,5 mm, von der Formseitenwand der Formkammer beabstandet angeordnet ist, so dass an dem Hohlboden des herzustellenden Behälters ein ausreichend stabiler umlaufender Steg realisiert werden kann.

Beträgt der Seitenabstand der umlaufenden Bodenerhöhung von der Formseitenwand der Formkammer weniger als 10 mm, vorzugsweise weniger als 5 mm, kann der umlaufende Steg an dem Hohlboden des herzustellenden Behälters entsprechend schmaler ausgebildet werden, wodurch ein zwischen der umlaufenden Bodenerhöhung und der flächigen Bodenerhöhung angeordneter Bodenringbereich gegebenenfalls breiter ausgebildet werden kann.

Darüber hinaus ist es vorteilhaft, wenn die umlaufende Bodenerhöhung und/oder die flächige Bodenerhöhung eine konvexe oder eine plane Außenkontur aufweist. Eine konvexe Außenkontur kann die Stabilität des Hohlbodens des späteren Behälters vorteilhaft erhöhen, während eine plane Außenkontur ein größeres Behältervolumen ermöglichen kann.

Darüber hinaus lassen sich an einem späteren Hohlboden günstigere Kräfteverteilungen bzw. Spannungsverläufe innerhalb der Wandung erzielen, wenn die umlaufende Bodenerhöhung ein in die Formkammer hineinragendes freies Ende mit einem Rundungsradius größer R1, vorzugsweise größer R5, und kleiner R15, vorzugsweise kleiner R10, aufweist.

Im Sinne der Erfindung sei ein Radius R, insbesondere ein Innenradius, ein Außenradius, ein Rundungsradius oder dergleichen mit R = D/2 definiert, wobei zum Beispiel ein Radius R1 gleichbedeutend mit einem Radius von 1 mm ist.

Die Stabilität des herzustellenden Behälters, insbesondere im Bereich seines Hohlbodens, kann weiter gesteigert werden, wenn die umlaufende Bodenerhöhung mit einem ersten Radius in einen radial weiter liegenden Bereich des Formbodens und mit einem kleineren, weiteren Radius in einen radial weiter außenliegenden Bereich des Formbodens übergeht.

Insbesondere kann hierdurch die umlaufende Bodenerhöhung näher an die Formseitenwand heran konstruiert werden, um insbesondere die vorstehend bereits beschriebenen Seitenabstände an dem Formwerkzeug bzw. Thermoformwerkzeug realisieren zu können.

Eine diesbezügliche bevorzugte Ausführungsvariante sieht vor, dass der erste Radius größer oder gleich R0,1, bevorzugt größer R1, und kleiner R5, bevorzugt kleiner R2, und/oder der weitere Radius kleiner R1 ist.

Insbesondere die umlaufende Bodenerhöhung kann an dem vorliegenden Formwerkzeug bzw. Thermoformwerkzeug unterschiedlichst ausgestaltet sein. Zweckmäßigerweise ist die umlaufende Bodenerhöhung ortsfest an dem Formboden oder axial verschieblich an einem Bodenausrückerelement angeordnet.

Ist die umlaufende Bodenerhöhung ortsfest an dem Formboden angeordnet, baut der Formboden sehr einfach und es kann durch diese ortsfeste umlaufende Bodenerhöhung bereits ein vorteilhafter Hohlboden an dem herzustellenden Behälter ausgebildet werden.

Ist die umlaufende Bodenerhöhung alternativ axial verschieblich an einem Bodenausrückerelement vorgesehen, kann die umlaufende Bodenerhöhung mit diesem Bodenausrückerelement axial in die Formkammer hinein verschoben werden, wodurch sich zusätzliche Ausgestaltungsmöglichkeiten des Hohlbodens ergeben.

Gedacht sei hierbei auch daran, dass die umlaufende Bodenerhöhung als eigenständiges axial verlagerbares Ringausrückerelement ausgestaltet sein kann, welches bei entsprechender Ausgestaltung des Formwerkzeugs bzw. Thermoformwerkzeugs auch zusätzlich axial verschieblich gegenüber einem sonstigen axial verlagerbaren Bodenausrückerelement gelagert sein kann.

Darüber hinaus ist es vorteilhaft, wenn eine entgegen der axialen Hauptvorrichtung arbeitendes Ringausrückerelement und/oder ein in axial Hauptformrichtung arbeitendes Bodenausrückerelement vorgesehen sind. Hierdurch kann eine Gestaltung eines Hohlbodens noch detaillierter vorgenommen werden.

Darüber hinaus ist es vorteilhaft, wenn die umlaufende Bodenerhöhung ortsfest an dem Formboden und neben einem in axialer Hauptformrichtung ausrückbaren Formbodenplattenelement angeordnet ist, da durch Absenken des ausrückbaren Formbodenplattenelements eine Hohlboden ebenfalls vorteilhaft ausgebildet werden kann.

Bevorzugt ist die umlaufende Bodenerhöhung radial weiter außen des ausrückbaren Formbodenplattenelements angeordnet, wenn das Formbodenplattenelement ein im Sinne der Erfindung axial verschiebliches Bodenausrückerelement ist.

Das hier beschrieben bzw. erwähnte ausrückbare Formbodenplattenelement kann bei entsprechender Ausgestaltung des Formwerkzeugs bzw. des Thermoformwerkzeugs jedoch auch als Ringausrückerelement ausgestaltet sein.

Insofern sehen entsprechende Ausführungsvarianten vor, dass die umlaufende Bodenerhöhung an einem Bodenausrückerelement oder an einem Ringausrückerelement angeordnet ist.

Um einerseits eine störungsfreie Funktion des Formwerkzeugs bzw. des Thermoformwerkzeugs und andererseits eine sehr hohe Stabilität an einem Hohlboden eines herzustellenden Behälters zu erzielen, ist es vorteilhaft, wenn die umlaufende Bodenerhöhung von der Formseitenwand der Formkammer um einen Abstand beabstandet ist, welcher kleiner als 5 mm oder kleiner als 3 mm, vorzugsweise 2 mm, ist.

Ferner kann die Stabilität an dem Rand eines zu fertigen Behälters nochmals gesteigert werden, wenn die umlaufende Bodenerhöhung von der Formseitenwand der Formkammer um einen Abstand beabstandet ist, welcher größer als 1 mm oder größer als 1,5 mm ist. Auch fördert ein derartiger Abstand die Betriebssicherheit an dem jeweiligen Formwerkzeug bzw. Thermowerkzeug.

Weist die umlaufende Bodenerhöhung einen Innendurchmesser von mehr als 10 mm oder von mehr als 15 mm, bevorzugt von 20 mm, auf, kann an dem zu erzeugenden Behälter bzw. dessen Hohlboden innerhalb eines radial weiter außen angeordneten umlaufenden Stegs in jedem Fall ein ausreichend großer Funktionsraum an dem Bodenbereich des herzustellenden Behälters ausgestaltet werden.

In diesem Zusammenhang ist es vorteilhaft, wenn die umlaufende Bodenerhöhung jedoch einen Innendurchmesser von weniger als 50 mm oder von weniger als 30 mm aufweist, sodass ein Hohlboden an einem herzustellenden Behälter stets eine ausreichende Flächenstabilität besitzt, ohne dass ein zusätzlicher umlaufender Steg oder dergleichen an dem Hohlboden erforderlich wären.

Die Aufgabe wird nach einem fünfzehnten Aspekt des Weiteren von einer Anlage zum Thermoformen mit einem Formwerkzeug zum Tiefziehen, insbesondere mit einem Thermoformwerkzeug zum Thermoformen, einer Folie zu einem Behälter und mit einer Überdruckeinrichtung gelöst, bei welchem sich die Anlage durch ein Formwerkzeug oder bevorzugt ein Thermoformwerkzeug nach einem der hier beschriebenen Merkmale auszeichnet.

Eine besonders bevorzugte Ausführungsform sieht vor, dass die Anlage eine Steuer- und/oder Regeleinrichtung zum Erzeugen eines Ringspalts an einem Formboden des Formwerkzeugs bzw. des Thermoformwerkzeugs bei auf dem Formboden wirkenden Überdruck umfasst. Mittels einer derartigen Steuer- und/oder Regeleinrichtung kann der Ringspalt an dem Formboden nahezu beliebig erzeugt und eingestellt werden.

Besonders zweckmäßig ist es in diesem Zusammenhang, wenn mittels der Steuer- und/oder Regeleinrichtung eine Ringspalthöhe modulierbar ist. Insbesondere durch unterschiedliche Ringspalthöhen können an einem Bodenbereich des Formlings bzw. des herzustellenden Behälters nahezu beliebige Materialverteilungen erzielt werden.

Ferner ist es vorteilhaft, wenn mittels der Steuer- und/oder Regeleinrichtung eine Bewegung eines zusätzlichen Kalibrierelements eines Formstempels des Formwerkzeugs bzw. des Thermoformwerkzeugs moduliert wird, insbesondere in Abhängigkeit von einem Hohlbodenformhub. Hierdurch kann selbst ein komplexerer Thermoformprozess betriebssicher geführt werden. Auch kann an der Anlage vorteilhafte Kapselkörper erzeugt werden, wie sie vorliegend ausführlich beschrieben sind.

Die Aufgabe wird nach einem sechszehnten Aspekt außerdem auch von einem Kapselkörper mit einen Hohlboden umfassend einen zentrischen Mittenbereich sowie einen radial weiter außen umlaufenden Steg gelöst, wobei der Hohlboden von der axialen Mittelachse des Kapselkörpers ausgehend nach radial außen unterschiedliche Materialdicken aufweist, und wobei der Mittenbereich und der umlaufende Steg eine stärkere Materialdicke aufweisen als ein dazwischenliegender Nadeleinstechbereich. Durch einen derartig gewählten Aufbau kann einerseits eine gute Kapselkörperfestigkeit und andererseits eine Materialeinsparung erzielt werden.

Die Aufgabe wird nach einem siebzehnten Aspekt zusätzlich von einer Brühkapsel, insbesondere einer Kaffeekapsel, mit einem Kapselkörper umfassend einem Hohlboden gelöst, bei welchem der Hohlboden einen zentrischen Mittenbereich sowie einen radial weiter außen umlaufenden Steg aufweist, wobei der Hohlboden von der axialen Mittelachse des Kapselkörpers ausgehend nach radial außen unterschiedliche Materialdicken aufweist, und wobei der Mittenbereich und der umlaufende Steg eine stärkere Materialdicke aufweisen als ein dazwischenliegender Nadeleinstechbereich. Durch einen derartig gewählten Aufbau kann einerseits eine gute Kapselkörperfestigkeit einer Brühkapsel bzw. einer Kaffeekapsel sowie andererseits eine Materialeinsparung erzielt werden.

Eine bevorzugte diesbezügliche Ausführungsvariante sieht vor, dass der Mittenbereich einen radial weiter innenliegenden Bodenscheibenbereich umfasst, welcher sich durch eine nach radial außen geringer werdende Materialdicke auszeichnet. Allein hierdurch kann pro Kapselkörper bzw. Brühkapsel einiges an Folienmaterial eingespart werden, wodurch bei einem Massenprodukt wie Brühkapseln und insbesondere Kaffeekapseln der Materialverbrauch insgesamt signifikant reduziert werden kann.

Die Aufgabe wird auch von einem alternativen Kapselkörper, insbesondere von einer Brühkapsel, wie einer Kaffeekapsel, gelöst, wobei sich der Kapselkörper dadurch auszeichnet, dass in einer Wandung des Kapselkörpers und oberhalb eines an einem Bodenbereich des Kapselkörpers angeordneten umlaufenden Stegs ein erstes lokales Materialmaximum angeordnet ist.

Zweckmäßigerweise liegt dieses erste lokale Materialmaximum radial weiter außen des umlaufenden Stegs in einer Seitenwand des Kapselkörpers.

Das erste lokale Materialmaximum besitzt eine Materialstärke von vorzugsweise 400 µm oder mehr.

Die übrige Seitenwand hat hierbei bevorzugt eine Materialstärke von 200 µm bis 250 µm, welche sowohl oberhalb als auch unterhalb des ersten Materialmaximums vorliegen kann.

Der umlaufende Steg ist hierbei bevorzugt radial ganz außen an dem Bodenbereich des Kapselkörpers angeordnet, so dass der umlaufende Steg radial weiter außen in die Seitenwand des Kapselkörpers und radial weiter innen in einen Nadeleinstechbereich des Kapselkörpers übergeht.

Die Seitenwand erstreckt sich hierbei in Richtung einer axialen Mittelachse des Kapselkörpers, während der Nadeleinstechbereich eher orthogonal zu dieser axialen Mittelachse verläuft.

Der umlaufende Steg geht bevorzugt sowohl jeweils mit einem Kurvenbereich in die hochwärts ausgerichtete Seitenwand als auch in den eher horizontal ausgerichteten Nadeleinstechbereich über.

Kumulativ oder alternativ ist es für die weiter verbesserte Aussteifung bzw. Stabilität des Kapselkörpers günstig, wenn, an der Wandung radial weiter innen des an dem Bodenbereich des Kapselkörpers angeordneten umlaufenden Stegs ein zweites lokales Materialmaximum angeordnet ist.

Dieses zweite lokale Materialmaximum befindet sich vorteilhafterweise in dem Nadeleinstechbereich.

Das zweite lokale Materialmaximum und damit auch zumindest teilweise der Nadeleinstechbereich zeichnet sich durch eine Materialstärke von 300 µm bis 350 µm aus.

Eine gegenüber dem Stand der Technik signifikant verbesserte Ausführungsvariante eines Kapselkörpers sieht zum einen an dem Seitenbereich das erste lokale, 400 µm starke Materialmaximum und zum anderen an dem Nadeleinstechbereich das zweite lokale, 300 µm bis 350 µm starke Materialmaximum vor.

Vorteilhafterweise sind insbesondere die vorstehend beschriebenen Materialmaxima mit den vorliegenden Verfahren und Vorrichtungen stets reproduzierbar, so dass eine gleichbleibend hohe Fertigungsqualität gewährleistet werden kann.

Die Aufgabe wird nach einem nach einem achtzehnten Aspekt auch noch von einem Behälter, insbesondere einem Becher, einer Brühkapsel oder dergleichen, mit einer axialen Mittelachse und mit einer Wandung umfassend eine Seitenwand und einem Hohlboden gelöst, wobei der Hohlboden an der axialen Mittelachse einen zentrischen Mittenbereich, einen hiervon radial weiter außen liegenden umlaufenden Bodenringbereich, eine hiervon radial weiter außenliegende Bodenaußennut und einen hiervon radial weiter außenliegenden umlaufenden Steg umfasst, wobei der Hohlboden von der axial Mittelachse des Behälters ausgehend nach radial weiter außen unterschiedliche Materialdicken aufweist.

Speziell ein derart aufgebauter Hohlboden erlaubt es, insbesondere sehr steife und formstabile Behälter herzustellen, welche im Gebrauch zuverlässig formstabil bleiben.

Insbesondere, wenn bei deren Einsatz im Inneren des Behälters gegebenenfalls zumindest kurzfristig höhere Druckverhältnisse als der übliche Umgebungsdruck herrschen kann immer eine hohe Betriebssicherheit bei der Verwendung derartiger Behälter gewährleistet werden.

Gedacht sei hierbei beispielsweise an eine Kaffeemaschine, an welcher derartige Kaffeekapseln verwendet werden.

Ferner kann durch eine gezielte Formgebung des Hohlbodens spezielle Funktionsbereichen und/oder gezielte Materialverteilungen erzielt werden, wobei a dem Hohlboden erhebliche Mengen an Kunststoffmaterial eingespart werden können. Dies ist besonders bei Massenprodukten interessant, wie dies etwa Kaffeekapseln für Kaffeeautomaten darstellen.

Bei dem Behälter umbaut die Wandung eine Kavität des Behälters, welche zumindest durch eine Hauptöffnung hindurch zugängig ist, wobei die Öffnung dem Hohlboden gegenüber liegt. Diese Hauptöffnung ist bei einem fertigen Produkt versiegelt, beispielsweise mit einem Folienelement oder dergleichen.

Die Wandung ist bevorzugt konzentrisch um die axiale Mittelachse des Behälters herum angeordnet, sodass der Behälter oder dergleichen im Wesentlichen einen Rotationssymmetrischen Gefäßkörper aufweist.

Die Aufgabe wird in diesem Sinne auch noch von einem Behälter, insbesondere einem Becher, einer Brühkapsel oder dergleichen, mit einer axialen Mittelachse und mit einer Wandung umfassend eine Seitenwand und einem Hohlboden gelöst, wobei der Hohlboden an der axialen Mittelachse einen zentrischen Mittenbereich, eine hiervon radial weiter außenliegende Bodenaußennut und einen hiervon radial weiter außenliegenden umlaufenden Steg umfasst, wobei der Hohlboden von der axial Mittelachse des Behälters ausgehend nach radial weiter außen unterschiedliche Materialdicken aufweist.

Bei dieser Lösung kann bei nahezu ähnlichen hier beschriebenen Vorteilen der zentrische Mittenbereich sogleich einen Nadeleinstechbereich am Hohlboden ausgestalten, so dass sich der Nadeleinstechbereich problemlos auch bis an die axiale Mittelachse des Behälters heran erstrecken kann.

Besonders vorteilhaft kann der Körper hinsichtlich seiner Formstabilität und eines effektiven Materialeinsatzes ausgestaltet sein, wenn der zentrische Mittenbereich zumindest teilweise eine größer Materialdicke aufweist als der Bodenringbereich.

Dies trifft umso mehr zu, wenn kumulativ oder alternativ der zentrische Mittenbereich zumindest teilweise eine größere Materialdicke als die umlaufende Bodenaußennut aufweist.

Ähnlich vorteilhaft ist es, wenn der zentrische Mittenbereiche zumindest teilweise eine größere Materialdicke aufweist als der umlaufende Steg. Insbesondere ist dieser zentrische Mittenbereich selbst bei temporär erhöhten Innendrücken formstabil.

In diesem Sinne ist es auch vorteilhaft, wenn der umlaufende Steg zumindest teilweise eine größere Materialdicke als die umlaufende Bodenaußennut und/oder als der Bodenringbereiche aufweist, wodurch der umlaufende Steg mit einer besonderen Formsteifigkeit ausgerüstet werden kann.

Weist die umlaufende Bodenaußennot zumindest teilweise eine größere Materialdicke als der Bodenringbereich auf kann die Formstabilität des Behälters weiter gesteigert werden, da der Hohlboden des Behälters nicht nur den eigentlichen umlaufenden Steg an seiner Außenseite aufweist, sondern in gewisser Hinsicht auch einen weiteren an seiner Innenseite ausgebildeten umlaufenden Steg.

Insbesondere hat sich als vorteilhaft erwiesen, wenn in einem Übergangsbereich zwischen Seitenwand und Hohlboden, insbesondere an dem umlaufenden Steg, und/oder an dem zentrischen Mittenbereich, insbesondere an der axial Mittelachse, jeweils ein lokales Materialmaximum des Behälters angeordnet, da hierdurch die der Öffnung des Behälters gegenüberliegende Seite des Behälters, insbesondere der Hohlboden, noch besser stabilisiert werden kann, bei gleichzeitig gezielter Materialverteilung, wodurch insgesamt Material bei der Herstellung des Behälters eingespart werden kann.

Ferner kann der Materialmengeneinsatz weiter optimiert werden, wenn der umlaufende Steg und die umlaufende Bodenaußennut radial im äußeren Drittel, insbesondere an dem äußeren Rand, des Hohlbodens angeordnet sind. Zudem kann hierdurch eine weitere Stabilitätsverbesserung am Behälter erzielt werden.

Insbesondere wenn der umlaufende Steg an dem äußeren Rand des Hohlbodens angeordnet ist, kann dieser umlaufende Steg zumindest teilweise von der Seitenwand des Behälters ausgestaltet sein, wodurch eine nicht unerhebliche Materialeinsparung erzielt werden kann. Dies ist auch darauf zurückzuführen, dass insbesondere ein Schenkel des umlaufenden Stegs sogleich von der Seitenwand bereitgestellt werden kann.

Insofern sieht eine bevorzugte Ausführungsvariante auch vor, dass der umlaufende Steg in die Seitenwand übergeht.

Sind der umlaufende Steg und die umlaufende Bodenaußennut unmittelbar nebeneinander angeordnet, können der umlaufende Steg und die umlaufende Bodenaußennut zumindest mit einem gemeinsamen Schenkelteil an dem Hohlboden des Behälters ausgebildet werden.

Insofern ist es besonders vorteilhaft, wenn der umlaufende Steg und die umlaufende Bodenaußennot einen gemeinsamen Wandungsabschnitt aufweisen.

Insbesondere auch in diesem Zusammenhang ist es vorteilhaft, wenn der umlaufende Steg und die umlaufende Bodenaußennut einen sinusformartigen Wandlungsabschnitt der

Wandung des Behälters ausgestalten. Ein derartiger sinusförmiger Wandungsabschnitt bedingt eine besonders hohe Festigkeit des Behälters, insbesondere seines Hohlbodens.

Im Sinne der Erfindung ist die Begrifflichkeit "sinusformartig" nicht im mathematischen Sinne, sondern eher im ingenieurstechnischen, gestalterischen Sinne zu verstehen.

Weisen der umlaufende Steg und die umlaufende Bodenaußennut jeweils eine Radialbreite auf, welche weniger als 20 % oder als 10 % voneinander abweichen, vorzugsweise gleich sind, kann dieser Bereich des Hohlbodens sehr kompakt ausgeführt werden.

Der Hohlboden des Behälters kann darüber hinaus funktionell besonders vorteilhaft ausgestaltet werden, wenn die Innenseiten und/oder Außenseiten des umlaufenden Stegs und des Bodenringbereiches auf gleicher Axialhöhe angeordnet sind.

Ähnlich verhält es sich, wenn die Innenseiten und/oder Außenseiten der umlaufenden Bodenaußennut und des zentrischen Mittenbereichs auf gleiche Axialhöhe angeordnet sind.

Zweckmäßig ist es auch, wenn der umlaufende Steg unterschiedliche Übergangsbereiche zu benachbarten Formbodenbereiche aufweist.

So ist es vorteilhaft, wenn der umlaufende Steg einen radial weiter außen liegenden Innenradius und einen radial weiter liegenden Innenradius aufweist, wobei der radial weiter außen liegende Innenradius kleiner ist als der radial weiter innen liegende Innenradius. Durch eine derartige Asymmetrie des Hohlboden bezogen auf den umlaufenden Steg, gelingt baulich eine weitere Steigerung der Steifigkeit und Formstabilität des Behälters.

In diesem Zusammenhang ist es vorteilhaft, wenn der radial weiter außen liegende Innenradius kleiner R1 und der radial weiter innenliegende Innenradius größer R2 ist, wodurch sich gute Stabilitätsverhältnisse an dem Hohlboden realisieren lassen.

Darüber ist es vorteilhaft, wenn der umlaufende Steg einen gebogenen Außenwandungsbereich mit einem Außenradius größer oder gleich R1, bevorzugt größer R5, und kleiner R15, bevorzugt kleiner R10, aufweist.

Darüber hinaus ist es auch vorteilhaft, wenn die umlaufende Bodenaußennut einen gebogenen Innenwandungsbereich mit einem Außenradius größer oder gleich R1, bevorzugt größer R5, und kleiner R15, bevorzugt kleiner R10, aufweist.

Ein besonders gutes Verhältnis hinsichtlich Formstabilität des Behälters und des erforderlichen Materialverbrauchs kann erzielt werden, wenn die Materialdicke der Wandung ausgehend von dem Öffnungsrand der Hauptöffnung des Behälters in Richtung des Hohlbodens zuerst abnimmt und vor dem umlaufenden Steg wieder zunimmt.

Hierdurch können die Bereiche des Behälters an der Hauptöffnung sowie an dem umlaufenden Steg bzw. im Allgemeinem kurz vor dem Hohlboden besonders stabil ausgebildet werden, die Seitenwand dazwischen jedoch materialreduziert, wodurch sich der Materialverbrauch bei der Herstellung des vorliegenden Behälters weiter reduzieren lässt, was bei Massenprodukten wie insbesondere einer Kaffeekapsel eine erhebliche Kostenreduzierung zufolge hat.

Dem Behälter kann in dem Bereich des Hohlbodens eine besonders stabile Wandung verliehen werden, wenn die Materialdicke der Seitenwand innerhalb eines Bereichs oberhalb 10 mm, vorzugsweise oberhalb 20 mm, des Hohlbodens, insbesondere des umlaufenden Stegs, über 300 µm, vor allem über 350 µm, vor allem über 400 µm, beträgt.

Bereits eine Materialdicke von über 300 µm ermöglicht eine ausreichend stabile Auslegung des Behälters an seinem unteren Ende, also dem der Hauptöffnung abgewandten Ende, bei gleichzeitig materialsparender Bauweise.

Beträgt die Materialdicke alternativ über 400 µm baut der Behälter dort besonders stabil, was insbesondere bei kurzzeitig unter Druck stehenden Brühkapseln bzw. Kaffeekapseln vorteilhaft sein kann.

Besonders wichtig für eine gute Stabilität des Behälters ist es, wenn in Eckbereichen des

Behälters eine Mindestmaterialstärke angehäuft vorliegt, welche bevorzugt größer ist als in übrigen Seitenwandbereichen des Behälters.

Insofern ist es vorteilhaft, wenn die Materialdicke der Wandung des umlaufenden Stegs über 400 µm, vor allem über 450 µm, vor allem über 500 µm, beträgt.

Ähnlich verhält es sich bei der umlaufenden Bodenaußennut, da diese ebenfalls radial weiter außen am Hohlboden vorgesehen ist und zudem unmittelbar neben dem umlaufenden Steg angeordnet ist, und bevorzugt sogar direkt in diesen umlaufenden Steg übergeht.

Deshalb ist es auch besonders zweckmäßig, wenn die Materialdicke der Wandung der umlaufenden Bodenaußennut über 400 µm, vor allem über 450 µm, vor allem über 500 µm, beträgt.

Hingegen ist es in Bezug auf den Bodenringbereich vorteilhaft, wenn die Materialdicke der Wandung des Bodenringbereichs unter 400 µm, vor allem unter 350 µm, vor allem unter 300 µm, beträgt, da hierdurch mit dem Bodenringbereich konstruktiv einfach auch ein dünnerer Nadeleinstechbereich oder dergleichen an dem Behälter verwirklicht werden kann.

Darüber hinaus ist es auch von Vorteil, wenn die Materialdicke der Wandung des zentrischen Mittenbereichs über 200 µm, vor allem über 250 µm, vor allem über 300 µm, beträgt, wobei insbesondere der zentrische Mittenbereich zumindest einen Dickenbereich von über 400 µm oder 500 µm aufweist. Durch einen derartig gestalteten zentrischen Mittenbereich gelingt es den Hohlboden zusätzlich in seiner Mitte wieder stabiler auszulegen, so dass der hierum umlaufende Bodenringbereich an seinem radial weiter innen liegenden Innenrand auch stabiler getragen ist, wie auch an seinem radial weiter außenliegenden Außenrand durch die stärker ausgelegt umlaufende Bodenaußennut bzw. den entsprechenden umlaufenden Steg.

Hierdurch kann das Einstech- und Durchstechverhalten von Einstechmitteln an dem Bodenringbereich signifikant verbessert werden.

An dieser Stelle sei auch noch darauf hingewiesen, dass die jeweilige Materialdicke auch maßgeblich von dem verwendeten thermoplastischen Material abhängig sein kann, so dass unterschiedliche Materialdicken oftmals auch unter Berücksichtigung eines jeweils zum Einsatz kommenden Materials gewählt werden.

Eine vorteilhafte Ausführungsvariante sieht vor, dass der Hohlboden ein erstes Radialbreitenverhältnis Steg/Bodenringbereich von größer als 1/3, vorzugsweise von größer 1/5, aufweist. Das bedeutet mit anderen Worten, dass die Radialbreite des Bodenringbereichs mindestens dreimal, vorzugsweise fünfmal, so groß ist, wie die Radialbreite des umlaufenden Stegs. Hierdurch ist der umlaufende Steg gegenüber dem Bodenringbereich in seiner Breite an Hohlboden sehr kompakt gebaut, so dass der Bodenringbereich insbesondere einen ausreichend breiten Nadeleinstechbereich an dem Behälter verkörpern kann.

Die Radialbreite verläuft hierbei quer bzw. senkrecht zur axialen Mittelachse.

Darüber hinaus ist es vorteilhaft, wenn der Hohlboden ein zweites Radialbreitenverhältnis Bodenaußennut/Bodenringbereich von größer als 1/3, vorzugsweise von größer 1/5, aufweist. Dies bedeutet, dass es ebenso vorteilhaft ist, wenn die Radialbreite des Bodenringbereichs mindestens dreimal, vorzugsweise fünfmal, so groß ist, wie die Radialbreite der umlaufenden Bodenaußennut. Auch hierdurch baut die umlaufende Bodenaußennut im Verhältnis zur Bodenringbereich ebenfalls sehr schmal.

Insgesamt bedeutet dies, dass der umlaufende Steg bzw. die umlaufende Bodenaußennut im Verhältnis zu dem Bodenringbereich nur einen kleinen Bereich des Hohlbodens in Beschlag nehmen, so dass an dem Hohlboden insbesondere für einen Nadeleinstechbereich ein möglichst großzügiger Bereich vorhanden ist.

Außerdem verstärken recht schmal gehaltene Ringgebilde, wie eben der umlaufende Steg bzw. die umlaufende Bodenaußennut, die Stabilität und Festigkeit des Behälters im Bereich seines Hohlbodens.

Darüber hinaus ist es vorteilhaft, wenn der Hohlboden ein drittes Radialbreitenverhältnis Bodenringbereich/Mittenbereich von größer als 1/2, vorzugsweise 2/3 oder größer, aufweist.

Das bedeutet mit anderen Worten, dass die Radialbreite des Bodenringbereichs mindestens dreimal, vorzugsweise fünfmal, so groß ist, wie die Radialbreite der umlaufenden Bodenaußennut.

Weist der Behälter, insbesondere der Hohlboden, genau einen umlaufenden Steg, genau eine umlaufende Bodenaußennut, genau einen Bodenringbereich und genau einen zentrischen Mittenbereich auf, kann der Behälter als Becher und insbesondere als Brühkapsel, wie speziell auch als Kaffeekapsel, konstruktiv besonders einfach und kompakt, aber dennoch mit höchster Formstabilität hergestellt werden.

An dieser Stelle sei nochmals ausdrücklich auf die vorteilhafte Ausgestaltung der Formwerkzeuge bzw. Thermoformwerkzeuge, welche mit einer Einrichtung zum Erzeugen eines Hohlbodenformhubs mit einem Hubweg von weniger als 5 mm oder weniger als 3 mm, vorzugsweise von weniger als 2 mm oder weniger, ausgerüstet sein können, um die diesbezüglich vorgeschlagenen Verfahren durchführen zu können.

Es versteht sich, dass die Merkmale der vorstehend bzw. der in den Ansprüchen beschriebenen Lösungen gegebenenfalls auch kombiniert werden können, um die vorliegend erzielbaren Effekte und Vorteile entsprechend kumuliert umsetzen zu können.

Weitere Merkmale, Effekte und Vorteile vorliegender Erfindung werden anhand anliegender Zeichnungen und nachfolgender Beschreibung erläutert, in welchen beispielhaft ein Formwerkzeug sowie eine hiermit hergestellte Kaffeekapsel dargestellt und beschrieben sind.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine erste geschnittene Teilansicht eines Thermoformwerkzeugs in einer Folienvorumformposition mit einer vor einem Formkammerteil bereits plan eingespannten Folie;
- Figur 2: schematisch eine zweite geschnittene Teilansicht des in der Figur 1 gezeigten Thermoformwerkzeugs in einer Folienvordehnposition mit der bereits in das Formkammerteil hinein vorgedehnte Folie;
- Figur 3: schematisch eine dritte geschnittene Teilansicht des in den Figuren 1 und 2 gezeigten Thermoformwerkzeugs in einer Überdruckformposition mit der bereits gegen einen Formboden des Formkammerteils gegenformten Folie;
- Figur 4: schematisch eine Detailansicht eines Eck- bzw. Übergangsbereichs zwischen Formboden und Formseitenwand des Formkammerteils;
- Figur 5: schematisch eine vierte geschnittene Teilansicht des in den Figuren 1 bis 4 gezeigten Thermoformwerkzeugs in einer Fertigumformposition mit einer gegen den Überdruck durchgeführten Hohlbodenhubbewegung;
- Figur 6: schematisch eine Detailansicht eines durch die Hohlbodenhubbewegung erzeugten Ringspaltes in dem Eck- bzw. Übergangsbereich zwischen Formboden und Formseitenwand des Formkammerteils;
- Figur 7: schematisch eine fünfte geschnittene Teilansicht des in den Figuren 1 bis 4 gezeigten Thermoformwerkzeugs in einer Auswerferposition;
- Figur 8: schematisch eine geschnittene Teilansicht des Thermoformwerkzeugs in einer alternativen Ausführungsvariante mit einem Doppelformstempel, wobei einer der Formstempelelemente auch als zusätzliches Kalibierelement verwendbar ist;
- Figur 9: schematisch eine geschnittene Ansicht eines Kapselkörpers einer Kaffeekapsel mit eingezeichneter Materialverteilung an dem Kapselkörper;
- Figur 10: schematisch eine geschnittene Teilansicht eines weiteren Thermoformwerkzeugs umfassend einen Multifunktions-Formstempel mit zwei Vordehnstempelelementen sowie einem Kalibrierelement und umfassend einen Multifunktions-Boden;
- Figur 11: schematisch eine Ansicht einer Unterseite einer oberen Werkzeughälfte mit einer Vielzahl an Multifunktions-Formstempeln gemäß der Figur 10;
- Figur 12: schematisch eine Schnittansicht eines unter Zuhilfenahme von Multifunktions-Formstempeln aus den Figuren 10 bzw. 11 hergestellten Kapselkörpers einer Kaffeekapsel;
- Figur 13: schematisch eine Detailansicht des Hohlbodens des Kapselkörpers aus der Figur 12;
- Figur 14: schematisch eine erste Schnittteildarstellung eines einen MultifunktionsFormstempel umfassenden anderen Thermoformwerkzeugs in einer geöffneten Position zum Zuführen einer Folie;
- Figur 15: schematisch eine zweite Schnittteildarstellung des in der Figur 14 gezeigten anderen Thermoformwerkzeugs in einer geschlossenen Position mit bereits vorgestanzter Folie;
- Figur 16: schematisch eine dritte Schnittteildarstellung des in den Figuren 14 und 15 gezeigten anderen Thermoformwerkzeugs in einer ersten Folienvordehnposition mit einem bereits in eine Formkammer des Thermoformwerkzeugs eingetauchten Multifunktions-Formstempel,
- Figur 17: schematisch eine vierte Schnittteildarstellung des in den Figuren 14 bis 16 gezeigten anderen Thermoformwerkzeugs in einer zweiten Folienvordehnposition mit einem sich in der untersten Position befindlichen inneren Vordehnstempelelement des Multifunktions-Formstempels;
- Figur 18: schematisch eine fünfte Schnittteildarstellung des in den Figuren 14 bis 17 gezeigten anderen Thermoformwerkzeugs in einer dritten Folienvordehnposition mit einem sich in der untersten Position befindlichen äußeren Vordehnstempelelement des Multifunktions-Formstempels;
- Figur 19: schematisch eine sechste Schnittteildarstellung des in den Figuren 14 bis 18 gezeigten anderen Thermoformwerkzeugs bei einem Überdruck durchgeführten Hohlbodenformhub eines Bodenausrückerelements und eines hierdurch zwischenzeitlich erzeugten umlaufenden Ringspalts;
- Figur 20: schematisch eine siebte Schnittteildarstellung des in den Figuren 14 bis 19 gezeigten anderen Thermoformwerkzeugs in einer Kalibrierposition mit einem gegen den Formboden bzw. Bodenausrückerelement gedrückten Kalibrierelements des Multifunktions-Formstempels;
- Figur 21: schematisch eine achte Schnittteildarstellung des in den Figuren 14 bis 20 gezeigten anderen Thermoformwerkzeugs mit einem zu einem Behälter fertig geformten Formlings;
- Figur 22: schematisch eine weitere Schnittteildarstellung des in den Figuren 14 bis 21 gezeigten anderen Thermoformwerkzeugs mit einem alternativen Formboden mit einem dauerhaften umlaufenden Ringspalt;
- Figur 23: schematisch eine geschnittene Teilansicht eines alternativen Thermowerkzeugs mit einem Doppelformstempel und einer speziellen Formbodengeometrie der Formkammer;
- Figur 24: schematisch eine geschnittene Teilansicht eines anderen Thermoformwerkzeugs mit einem Doppelformstempel, einem Ringausrückerelement sowie ein hierin angeordnetes Bodenausrückerelement; und
- Figur 25: schematisch eine geschnittene Teilansicht eines Behälters in Gestalt einer Kaffeekapsel mit einer speziell ausgeformten Wandung.

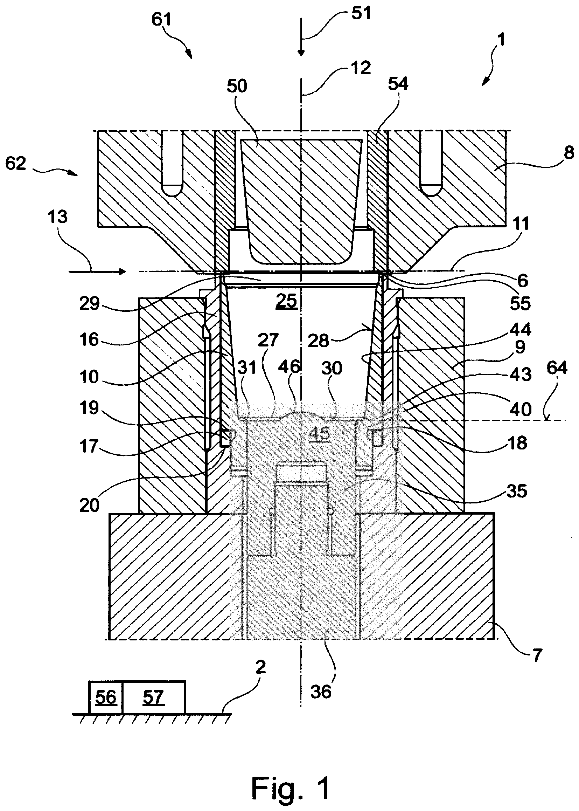

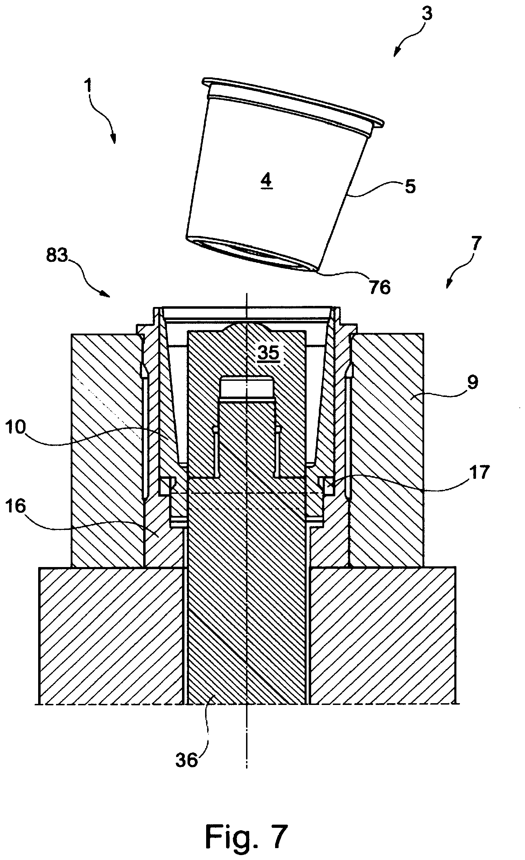

Bei dem in den Figuren 1 bis 8 gezeigten Formwerkzeug handelt es sich um ein Thermoformwerkzeug 1 einer Anlage 2 (nur in Figur 1 dargestellt) zum Thermoformen eines Behälters 3 (siehe insbesondere Figuren 7 und 9) für eine Kaffeekapsel 4, wobei der Behälter 3 den eigentlichen mit Kaffee (hier nicht gezeigt) zu befüllenden Kapselkörper 5 ausgestaltet. Dieser Kapselkörper 5 ist aus einer Folie 6 aus einem thermoplastischen Material hergestellt, wobei die Folie 6 mittels der Thermoformwerkzeugs 1 entsprechend umgeformt wurde.

Das Thermoformwerkzeug 1 besteht im Wesentlichen aus einer unteren Werkzeughälfte 7 und einer axial darüber angeordneten oberen Werkzeughälfte 8.

Die untere Werkzeughälfte 7 weist eine Aufnahme 9 für ein Formkammerteil 10 auf, in welcher die Folie 6 umgeformt wird. Hierzu ist die Folie 6 oberhalb des Formkammerteils 10 in einer Folienebene 11 zwischen der unteren Werkzeughälfte 7 und der oberen Werkzeughälfte 8 in an sich bekannter Weise geklemmt, nachdem die Folie 6 bezogen auf die axiale Mittelachse 12 des Thermoformwerkzeugs 1 von radial außen dem Thermoformwerkzeug 1 in Transportrichtung 13 zugeführt wurde.

Das Formkammerteil 10 sitzt hierbei entlang einer axialen Mittelachse 12 des Thermoformwerkzeugs 1 höheneinstellbar innerhalb eines Formkammerteilhalters 16, wobei die Einstellbarkeit der Höhenlage des Formkammerteils 10 innerhalb des Formkammerteilhalters 16 durch ein Distanzringelement 17 erfolgt, welches in einem Aufnahmeraum 18 zwischen dem Formkammerteil 10 und dem Formkammerteilhalter 16 angeordnet ist und sich dabei an einer oberen Schulter 19 des Formkammerteils 10 und einer unteren Schulter 20 des Formkammerteilhalters 16 abstützt.

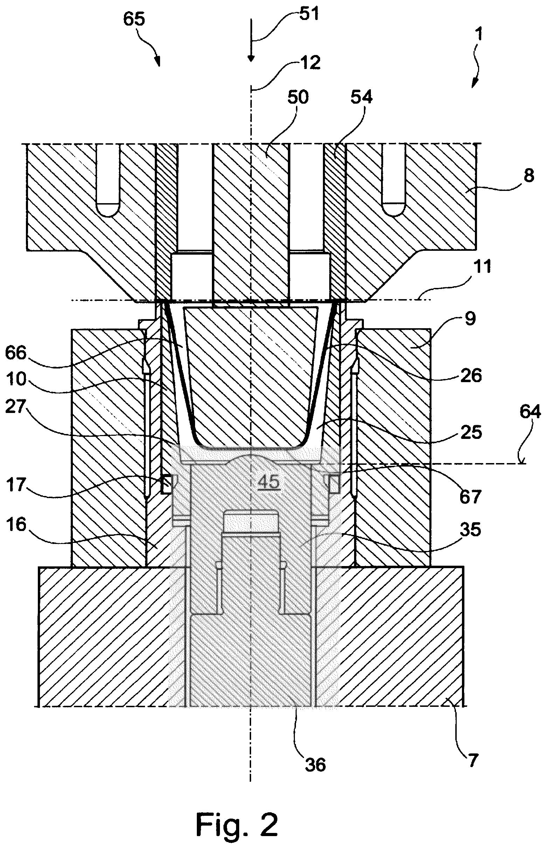

Das Formkammerteil 10 besitzt eine Formkammer 25, in welche hinein die Folie 6 zu einem Formling 26 (siehe Figuren 2 bis 6) sukzessive umgeformt wird.

Die Formkammer 25 wird von einem Formboden 27 und einer Formseitenwand 28 begrenzt und weist oben eine Hauptzugangsöffnung 29 auf.

Der Formboden 27 setzt sich hierbei zum einen durch einen bezogen auf die axiale Mittelachse 12 radial weiter innen liegenden scheibenförmigen Flächenanteil 30 und zum anderen durch einen um diesen scheibenförmigen Flächenanteil 30 kreisförmig herum radial weiter außen liegenden ringförmigen Flächenanteil 31 zusammen.

Der radial weiter innen liegende scheibenförmige Flächenanteil 30 ist durch ein verlagerbares Bodenausrückerelement 35 ausgebildet, welches entlang der axialen Mittelachse 12 beweglich an dem Formkammerteil 10 gelagert ist.

Insofern umfasst der Formboden 27 das verlagerbare Bodenausrückerelement 35.

Das verlagerbare Bodenausrückerelement 35 ist einstückig ausgebildet, so dass es einen in sich geschlossenen radial weiter innen liegenden scheibenförmigen Flächenanteil 30 realisiert, wodurch der Formboden 27 eine geschlossene Anlagefläche (nicht gesondert beziffert) für die Folie 6 bereitstellt.

Das verlagerbare Bodenausrückerelement 35 ist auf eine Auswerferstange 36 montiert, welche an der unteren Werkzeughälfte 8 vorgesehen ist und welche zum Auswerfen des fertig geformten Behälters 3 aus dem Formkammerteil 10 entlang der axialen Mittelachse 12 bewegt werden kann (vgl. Figur 7).

Der radial weiter außen liegende ringförmige Flächenanteil 31 ist durch ein ortsfestes Bodenringelement 40 ausgebildet, welches konstruktiv sehr einfach durch eine untere Einschnürung (nicht gesondert beziffert) der Formseitenwand 28 verkörpert ist.

Mit anderen Worten ausgedrückt: Das ortsfeste Bodenringelement 40 und damit auch der radial weiter außen liegende ringförmige Flächenanteil 31 sind durch die Formseitenwand 28 ausgestaltet.

Der radial weiter außen liegende ringförmige Flächenanteil 31 bzw. das ortsfeste Bodenringelement 40 gehen mit einem Eck- bzw. Übergangsbereich 43 unterbrechungsfrei in einen axial hochwärts verlaufenden Seitenwandabschnitt 44 der Formseitenwand 28 über.

Das verlagerbare Bodenausrückerelement 35 ist in Bezug auf den Formboden 27 durchmesserreduziert, da der Formboden 27 nicht nur dieses durch verlagerbare Bodenausrückerelement 35, sondern darüber hinaus auch noch durch das ortsfeste Bodenringelement 40 im Gesamten realisiert ist.

In diesem Ausführungsbeispiel weist das verlagerbare Bodenausrückerelement 35 an seiner Kopfseite 45 einen konvex ausgebildeten Flächenbereich 46 aufweist, um den Formling 26 entsprechend zu formen.

Des Weiteren weist die oberen Werkzeughälfte 8 einen Formstempel 50 auf, welcher zum Dehnen bzw. Vordehnen der Folie 6 in axialer Hauptformrichtung 51 durch die Folienebene 11 hindurch gefahren werden kann, um dann die Folie 6 in die Folienkammer 25 hinein zu dehnen bzw. formen.

Ferner umfasst die oberen Werkzeughälfte 8 einen Niederhalter 54, mittels welchem die Folie 6 in der Folienebene 11 gegen den oberen Klemmrand 55 des Formkammerteils 10 geklemmt werden kann. Der Niederhalter 54 ist zum Erzeugen und Lösen einer Folienklemmung ebenfalls entlang der axialen Mittelachse 12 verlagerbar.

Um die Folie 6 dann weiter zu einem Formling 27 und letztendlich zu dem fertige geformten Behälter 3 umformen zu können, verfügt die die oberen Werkzeughälfte 8 noch über hier nicht gezeigte Druckluftzugänge, mittels welcher ein Überdruck in dem Thermoformwerkzeug 1 hergestellt werden kann. Hierzu umfasst die Anlage 2 eine Überdruckeinrichtung 56 sowie darüber hinaus noch eine Steuer- und/oder Regeleinrichtung 57, mittels welcher das Thermoformwerkzeug 1 im Sinne vorliegender Erfindung angesteuert bzw. geregelt werden kann.

Jedenfalls bedingt der vorstehend beschriebene konstruktive Aufbau bereits, dass das Thermoformwerkzeug 1 dazu eingerichtet ist, bei Überdruck an dem Formboden 27 einen Ringspalt 60 zu erzeugen, in welchem die Folie 6 hineinformbar ist. Hierzu kann das Thermoformwerkzeug 1 beispielsweise wie folgt gesteuert bzw. geregelt werden.

Gemäß der Darstellung nach der Figur 1 befindet sich das Thermoformwerkzeug 1 in einer Folienvorumformposition 61, in welcher die Folie 6 in der Folienebenen 11 in zwischen der unteren Werkzeughälfte 7 und der oberen Werkzeughälfte 8 eingeklemmt ist. Der Formstempel 50 befindet sich noch in seiner oberen Startposition 62 oberhalb der Folienebene 11. In dieser Folienvorumformposition 61 existiert an dem Thermoformwerkzeug 1 noch kein Ringspalt 60 im Sinne der Erfindung, da sich sowohl der scheibenförmigen Flächenanteil 30 als auch der ringförmige Flächenanteil 31 auf ein und demselben Höhenniveau 64 befinden.

Insofern bilden das verlagerbare Bodenausrückerelement 35 und das ortsfeste Bodenringelement 40 bis auf den konvex ausgebildeter Flächenbereich 46 anfänglich noch einen planen Formboden 27 der Formkammer 25 aus.

Gemäß der Darstellung nach der Figur 2 befindet sich das Thermoformwerkzeug 1 in einer Folienvordehnposition 65, in welcher der Formstempel 50 bereits in axialer Hauptformrichtung 51 runterwärts durch die Folienebene 11 bewegt ist, wodurch die Folie 6 als Formling 26 mit einer Kavität 66 in einem bereits in die Formkammer 25 des Formkammerteils 10 hinein gedehnt bzw. geformt ist. Dies kann mit Unterstützung oder ohne Unterstützung von Überdruck erfolgen. Jedenfalls ist hierbei schon die Kavität 66 des Formlings 26 und des später fertig hergestellten Behälters 3 zu erkennen. Auch in der Folienvordehnposition 65 existiert an dem Thermoformwerkzeug 1 immer noch kein Ringspalt 60 im Sinne der Erfindung.

Um nun insbesondere einen Bodenbereich 67 des Formling 26 in einem ersten Formschritt mit dem Formboden 27 des Formkammerteils 10 weiter auszuformen, wird insbesondere in der Kavität 66 des Formlings 26 ein Überdruck erzeugt, so dass die Folie 6 gegen den Formboden 27 und die Formseitenwand 28 expandiert wird.

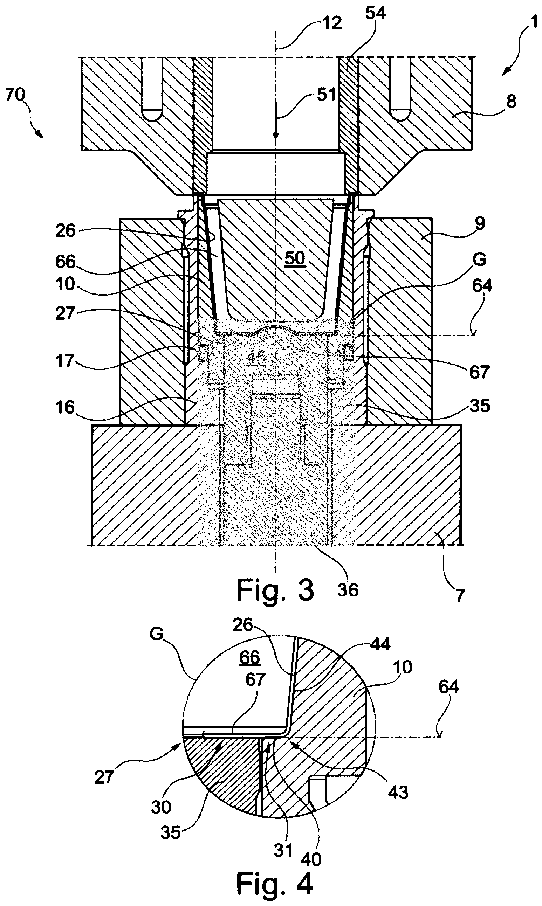

Gemäß den Darstellungen nach den Figur 3 und 4 befindet sich das Thermoformwerkzeug 1 insofern in einer Überdruckformposition 70 mit der bereits gegen einen Formboden 27 des Formkammerteils 10 gegenformten Formlings 26. In dieser Überdruckformposition 70 existiert an dem Thermoformwerkzeug 1 ebenfalls noch kein Ringspalt 60 im Sinne der Erfindung, sich der scheibenförmigen Flächenanteil 30 und der ringförmige Flächenanteil 31 immer noch auf demselben Höhenniveau 64 befinden, wie insbesondere gemäß der Darstellung nach der Figur 4 zu erkennen ist.

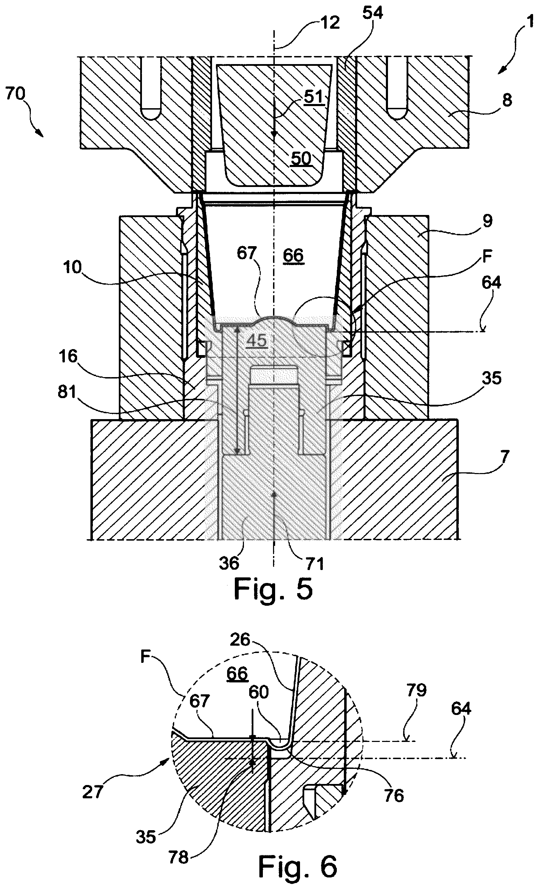

Erst in einem zweiten Formschritt gemäß den Darstellungen nach den Figuren 5 und 6 entsteht der Ringspalt 60 an dem Formboden 27 des Formkammerteils 10, indem in diesem Ausführungsbeispiel das verlagerbare Bodenausrückerelement 35 bei Überdruck in der Kavität 66 des Formlings 26 mit einer Initialbewegung entgegen der axialen Hauptformrichtung 51 als Hohlbodenformhub 71 bewegt wird, so dass der Bodenbereich 67 des Formlings 26 bzw. des später fertiggestellten Behälters 3 einen Hohlboden 73 aufweist.

Der Formstempel 50 ist hierbei bereits zurückgezogen dargestellt.

Durch diesen Hohlbodenformhub 71 in Kombination mit dem in der Kavität 66 des Formlings 26 vorherrschenden Überdruck gelingt einerseits eine Materialumverteilung bzw. Materialverschiebung innerhalb der Folie 6 im Bodenbereich 67 des Formlings 26, so dass dort unterschiedlich dicke Bodenteilbereiche 75 entstehen (vgl. auch Figur 9).

Andererseits entsteht am Bodenbereich 67 auch ein umlaufender Steg 76, welcher zum einen den späteren Behälter 3 bzw. den Kapselkörper 5 zusätzlich stabilisiert.

Zum anderen kann dieser umlaufende Steg 76 kumulativ oder alternativ als Standfuß 77 für den Behälter 3 bzw. Kapselkörper 5 genutzt werden.

Zum Erzeugen des Ringspaltes 60 reicht bereits eine Hubhöhe 78 des verlagerbaren Bodenausrückerelements 35 von weniger als 5 mm, wobei Hubhöhe 78 in diesem Ausführungsbeispiel lediglich 2 mm beträgt.

Die vorliegende Hubhöhe 78 ist hierbei gleichzusetzen mit der erzielten Ringspalthöhe, welche hier nicht gesondert beziffert ist.

Jedenfalls befindet sich der scheibenförmiger Flächenanteil 30 des Formbodens 27, der durch das verlagerbare Bodenausrückerelement 35 verkörpert ist, nach der Erzeugung des Ringspaltes 60 auf einem anderen Höhenniveau 79, da der ringförmige Flächenanteil 31 durch das ortsfeste Bodenringelement 40 des Formbodens 27 auf dem ursprünglichen Höhenniveau 64 verblieben ist.

Hierbei wird der Hohlbodenformhub 71 beispielsweise von der vorstehend bereits erwähnten Steuer- und/oder Regeleinrichtung 57 initiiert, wobei der Hohlbodenformhub 71 bevorzugt in Abhängigkeit von einem Druckniveau des in der Kavität 66 des Formlings 26 vorherrschenden Überdrucks gesteuert bzw. geregelt werden kann. Zum Initiieren des Hohlbodenformhubs 71 kann aber auch ein anders ausgebildetes Antriebssystem eingesetzt werden.

Gemäß den Darstellungen nach den Figuren 5 und 6 befindet sich das Thermoformwerkzeug 1 in einer Fertigumformposition 80, in welcher durch die temporäre Erzeugung des Ringspalts 60, kurz Ringspalterzeugung, an dem Formboden 27 eine temporäre Formkante (nicht gesondert beziffert) geschaffen ist, um welcher herum die Folie 6 weiter verformt werden kann.

Das verlagerbare Bodenausrückerelement 35 hierbei eine Bauteildicke 81 aufweist, welche zumindest gleich hoch oder höher als eine Ringspalthöhe 78 des erzeugten Ringspaltes 60 ist.

Gemäß der Darstellung nach der Figur 7 befindet sich das Thermoformwerkzeug 1 in einer Auswerferposition 83, in welcher der fertig geformte Behälter 3 aus dem Thermoformwerkzeug 1 ausgeworfen wird. Hierzu ist das verlagerbare Bodenausrückerelement 35 mittels der Auswerferstange 36 noch weiter in die Formkammer 25 hinein bewegt ist.

Anschließend wird das Thermoformwerkzeug 1 wieder in die in der Figur 1 gezeigte Folienvorumformposition 61 zurückverfahren und ein neuer Behälter 3 kann geformt werden.

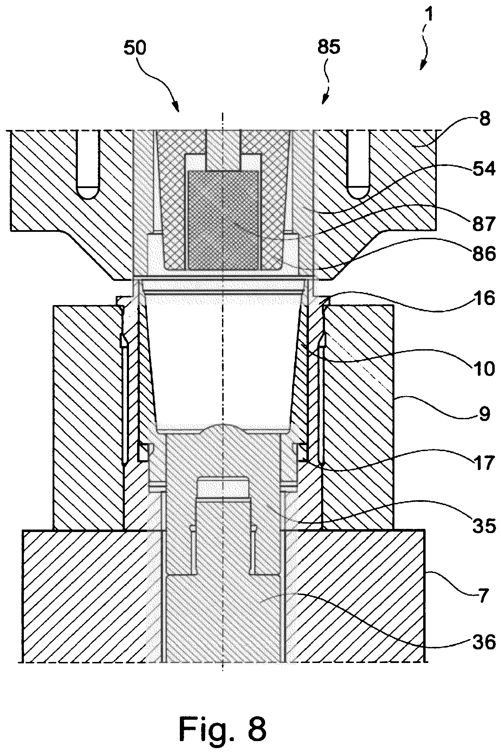

Gemäß der Darstellung nach der Figur 8 ist das Thermoformwerkzeug 1 noch in einem alternativen Ausrüstungszustand 85 gezeigt, bei welchem der Formstempel 50 zweigeteilt ist und einen äußeren Vordehnstempel 86 und einen inneren Vordehnstempel 87 umfasst.

Speziell der äußere Vordehnstempel 86 kann hierbei alternativ oder kumulativ ein zusätzliches Kalibrierelement im Sinne der Erfindung sein, wie beispielhaft und ausführlich mit den nachfolgenden Ausführungsbeispielen noch erläutert ist.

Ansonsten ist der Aufbau des Thermoformwerkzeugs 1 identisch mit den vorgemachten Erläuterungen.

Mittels des hier beschriebenen Thermoformwerkzeugs 1 und den diesbezüglichen Verfahren zum Thermoformen gelingt es, einen Formling 26 bzw. einen Behälter 3 zu formen, wie er in der Figur 9 hinsichtlich seiner Materialverteilung mit einem lokalen Materialmaximum 88 der Folie 6 an dem umlaufenden Steg 76 näher gezeigt ist.

Hierbei ist an dem Bodenbereich 67 des Formlings 26 bzw. Behälters 3 erstens ein radial innen liegender Bodenscheibenbereich 90 mit einer ersten Bodenteildicke 91 ausgebildet.

Daran schließen sich ein radial weiter außen liegender, erster Bodenringbereich 92 mit einer zweiten Bodenteildicke 93 und ein radial noch weiter außen liegender, zweiter Bodenringbereich 94 mit einer dritten Bodenteildicke 95 an.

Alle Bodenbereiche 90, 92, 94 sind hinsichtlich ihrer Bodenteildicken 91, 93 und 95 dadurch geformt, dass bei Überdruck in der Kavität 66 des Formlings 26 an dem Formboden 27 des Thermoformwerkzeugs 1 ein umlaufender Ringspalt 60 erzeugt wurde.

Mittels des radial innen liegenden Bodenscheibenbereichs 90 wird vorliegend eine gewölbte, dickere Mittenfläche 96 an dem Bodenbereich 67 des Formlings 26 erzeugt.

Ferner wird mittels des radial weiter außen liegenden, ersten Bodenringbereichs 92 zur Materialeinsparung ein dünnerer Nadeleinstechbereich 97 zwischen dem radial innen liegenden Bodenscheibenbereich 90 und dem radial noch weiter außen liegenden, zweiten Bodenringbereich 94 erzeugt.

Außerdem wird mittels des radial noch weiter außen liegenden, zweiten Bodenringbereichs 94 der umlaufende Steg 76 an dem Bodenbereich 67 des Formlings 26 erzeugt.

Gut zu erkennen ist, dass in der Mitte des radial innen liegenden Bodenscheibenbereichs 90 die Bauteildicke 91 annähernd gleich der Foliendicke 98 am Verschlussrand 99 des Behälters 3 ist und dann nach radial außen immer weiter abnimmt, bis auf das Dickenniveau der zweiten Bodenteildicke 93 des radial weiter außen liegenden, ersten Bodenringbereichs 92.

Die zweite Bauteildicke 93 bleibt nach radial weiter außen nahezu konstant, steigt aber ab dem radial noch weiter außen liegenden, zweiten Bodenringbereich 94 mit seiner dritten Bodenteildicke 95 wieder an, so dass an dem umlaufenden Steg 76 ein lokales Materialmaximum 88 vorliegt.

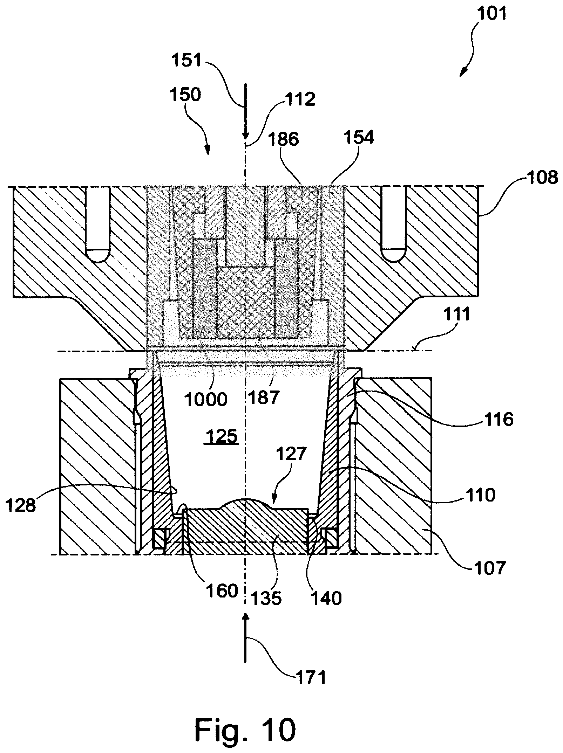

Gemäß der Darstellung nach der Figur 10 ist ein weiteres Ausführungsbeispiel eines Thermoformwerkzeugs 101 zumindest hinsichtlich seiner für die vorliegende Erfindung wichtigsten Merkmale gezeigt, welches eine untere Werkzeughälfte 107 und eine obere Werkzeughälfte 108 aufweist, die entlang einer axialen Mittelachse 112 gegenüber einer Folienebene 111 verfahrbar sind, um eine in der Folienebene 111 liegende Folie (hier nicht gezeigt) insbesondere zwischen einem Formkammerteil 110 bzw. einem Formkammerteilhalter 116 der unteren Werkzeughälfte 107 und einem Niederhalter 154 der oberen Werkzeughälfte 108 klemmen zu können.

Die obere Werkzeughälfte 108 umfasst des Weiteren einen Formstempel 150, der in axialer Hauptformrichtung 151 durch die Folienebene 111 hindurch in die Formkammer 125 des Formkammerteils 110 bewegt werden kann.

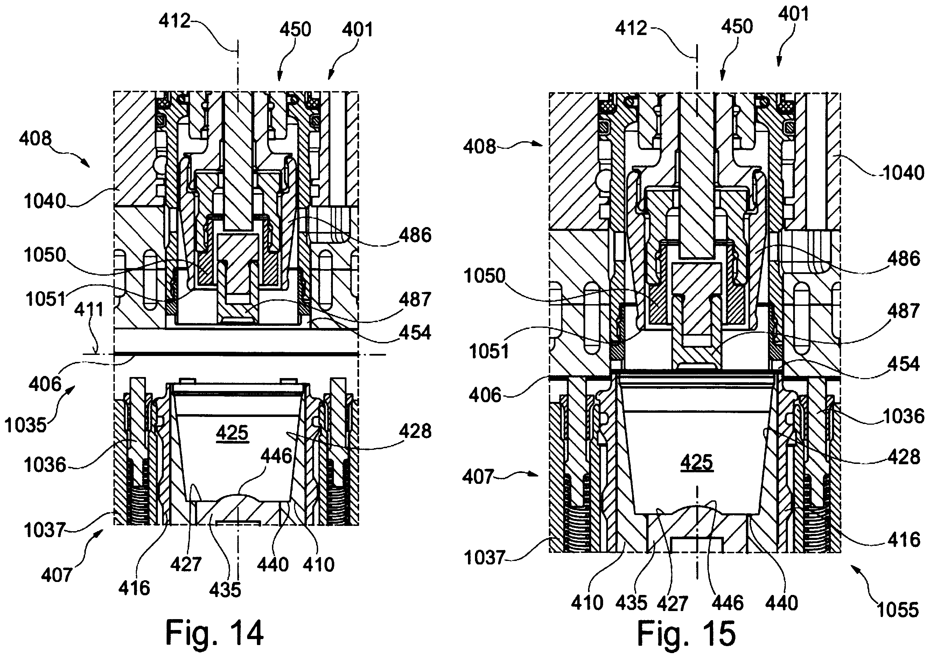

Bei diesem Formstempel 150 handelt es sich um einen Multifunktions-Formstempel (hier nicht nochmals beziffert) mit einem äußeren Formstempelelement 186 bzw. Vordehnstempel, einem inneren Formstempelelement 187 bzw. Vordehnstempel und einem zusätzlichen Kalibrierelement 1000, mittels welchem ein Bodenbereich (hier nicht gezeigt) eines in der Formkammer 125 auszuformenden Formlings (hier nicht gezeigt) zusätzlich mechanisch gegen einen Formboden 127 bzw. ein verlagerbares Bodenausrückerelement 135 des Formbodens 127 gedrückt werden kann. Hierdurch kann eine Folie im Bodenbereich des Formlings noch präziser bearbeitet werden, wodurch insbesondere ein kalibrierter Nadeleinstechbereich (vgl. Figuren 14 bis 21) an dem Formling bzw. einem herzustellenden Kapselkörper erzeugt werden kann.

Ein solcher im Sinne vorliegender Erfindung kalibrierter Nadeleinstechbereich zeichnet sich insbesondere durch eine Bodenbereichsdicke von 300 µm bis 350 µm aus, wodurch eine besonders hohe Betriebssicherheit bei der Verwendung des Kapselkörpers erzielt werden kann.

Hierbei können sowohl die Formstempelelemente 186 und 187 einzeln zueinander wie auch jeweils einzeln gegenüber dem zusätzlichen Kalibrierelement 1000 insbesondere in axialer Hauptformrichtung 151 verlagert werden. Ebenso kann das zusätzliche Kalibrierelement 1000 auch jeweils relativ zu dem jeweiligen Formstempelelement 186 und 187 entsprechend verlagert werden.

Auf diesbezügliche Antriebsmechaniken zum Antreiben der Formstempelelemente 186, 187 sowie des zusätzlichen Kalibrierelements 1000 ist vorliegend nicht weiter eingegangen, da hierfür im Wesentlichen bekannte Antriebsmechaniken verwendet werden können.

Bei dem Formboden 127 des Formkammerteils 110 handelt es sich um ein Multifunktions-Formboden (hier nicht nochmals beziffert), bei welchem der Formboden 127 einerseits durch das verlagerbare Bodenausrückerelement 135 und andererseits durch ein konzentrisch hierum angeordnetes ortsfestes Bodenringelement 140 ausgebildet ist.

Während das ortsfeste Bodenringelement 140 durch eine entsprechend nach unten verlängerte Formseitenwand 128 des Formkammerteils 110 ortsfest an dem Formkammerteil 110 verhaftet ist, kann das verlagerbare Bodenausrückerelement 135 mit einem Hohlbodenformhub 171 entgegen der axialen Hauptformrichtung 151 bewegt werden.

Mittels eines derartigen Hohlbodenformhubs 171 kann während des eigentlichen Formprozesses des Formlings interaktiv ein umlaufender Ringspalt 160 erzeugt werden, bevorzugt bei in einer Kavität des Formlings anliegendem Überdruck bzw. auch bei voll anliegendem Überdruck, wodurch verfahrenstechnisch eine Materialverteilung in bzw. an der Folie zusätzlich beeinflusst werden kann.

Für einen im Sinne der Erfindung vorgesehenen Hohlbodenformhub 171 reicht bereits ein Hub von weniger als 5 mm und von mehr als 0,5 mm entgegen der axialen Hauptformrichtung 151 aus.

Hinsichtlich weiterer eventuell vorstehend noch nicht erläuterter Details bezüglich des konstruktiven Aufbaus des Thermoformwerkzeugs 101 wird auch insbesondere auf die Beschreibung der Ausführungsbeispiele gemäß der Figuren 1 bis 8 sowie 14 bis 21 verwiesen, um Wiederholungen zu vermeiden.

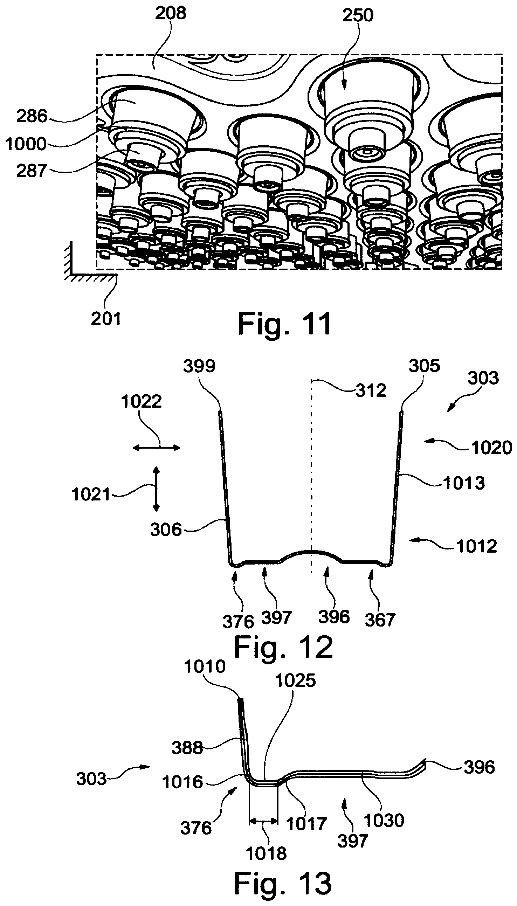

Bei der in der Figur 11 beispielhaft gezeigten anderen oberen Werkzeughälfte 208 eines ansonsten nicht weiter gezeigten Thermoformwerkzeugs 201 besitzt eine Vielzahl an Multifunktions-Formstempeln 250 (nur beispielhaft beziffert), welche jeweils ein äußeres Formstempelelement 286 bzw. einen äußeren Vordehnstempel, ein inneres Formstempelelement 287 bzw. einen inneren Vordehnstempel sowie ein zusätzliches Kalibrierelement 1000.

In der Darstellung nach der Figur 11 stehen die inneren Formstempelelemente 287 sowohl axial über die äußeren Formstempelelemente 286 als auch axial über die zusätzlichen Kalibrierelemente 1000 hervor.

Die zusätzlichen Kalibrierelemente 1000 stehen über die äußeren Formstempelelemente 286 hervor, liegen aber in Bezug auf die inneren Formstempelelemente 287 axial zurück.

Es versteht sich, dass sich die gegenseitigen Positionierungen der Formstempelelemente 286, 287 und des zusätzlichen Kalibrierelements 1000 nahezu beliebig zueinander veränderbar sind.

Gemäß den Darstellungen nach den Figuren 12 und 13 ist ein weiterer Behälter 303 einer hier nicht näher gezeigten Kaffeekapsel bzw. ein diesbezüglicher Kapselkörper 305 hinsichtlich seiner Materialverteilung in seiner Wandung 1010, um eine sehr gute Aussteifung des Kapselkörpers 305 zu erzielen.

Bei diesem Kapselkörper 305 liegt ein lokales Materialmaximum 388 in einem unteren Bereich 1012 der Seitenwand 1013 des Kapselkörpers 305 und unmittelbar oberhalb eines umlaufenden Stegs 376 vor, welcher radial außen im Bodenbereich 367 des Kapselkörpers 305 platziert ist.

Der umlaufende Steg 376 ist auch hier wieder einwandig durch eine Folie 306 ausgebildet, aus welcher der Kapselkörper 305 geformt ist.

Hierbei ist der umlaufende Steg 376 derart geformt, dass zwei Wandungsabschnitte 1016 und 1017 nebeneinander liegen, aber durch einen Abstand 1018 voneinander beabstandet sind. Der Abstand 1018 beträgt in diesem Ausführungsbeispiel ca. 2 mm.

Mit anderen Worten bedeutet dies, dass die zwei Wandungsabschnitte 1016 und 1017 des umlaufenden Stegs 376 berührungsfrei nebeneinander liegen.

Insgesamt besitzt der Kapselkörper 305 einen Wandungsverlauf 1020, welcher beginnend von einem Verschlussrand 399 des Kapselkörpers 305 entlang einer axialen Mittelachse 312 in axialer Richtung 1021 runterwärts und in radialer Richtung 1022 nach radial weiter innen auf die axiale Mittelachse 312 zu mit einer in etwa gleichbleibenden Materialstärke von ca. 200 µm bis 250 µm verläuft, bis ca. 5 mm oberhalb des umlaufenden Stegs 376 das lokale Materialmaximum 388 von größer 400 µm liegt.

Axial weiter runterwärts des ersten lokales Materialmaximums 388 biegt die Wandung 1010 mit einer reduzierten Materialstärke mit dem radial äußeren Wandungsabschnitt 1016 des umlaufenden Stegs 376 in etwa 90° nach radial weiter innen ab.

Von dort aus geht die Wandung 1010 von dem radial äußeren Wandungsabschnitt 1016 in einen in etwa horizontal nach radial weiter innen verlaufenden Zwischenwandungsabschnitt 1025 des umlaufenden Stegs 376 über, bevor die Wandung 1010 in den radial weiter inneren Wandungsabschnitt 1017 biegt und sowohl in axialer Richtung 1021 hochwärts als auch in radialer Richtung 1022 nach radial weiter innen verläuft.

Die Wandungsabschnitte 1017 und 1025 des umlaufenden Stegs 376 weisen eine Materialstärke von unter 300 µm und von bevorzugt mehr als 200 µm bis 250 µm auf, wobei der Wandabschnitt 1016 eine Materialstärke von mehr als 300 µm, bevorzugt von 400 µm.

Die Wandung 1010 biegt von dem inneren Wandungsabschnitt 1017 des umlaufenden Stegs 376 radial weiter innen in einen in etwa horizontal verlaufenden Nadeleinstechbereich 397 des Kapselkörpers 305 ein, wobei in diesem Nadeleinstechbereich 397 ein weiteres lokales Materialmaximum 1030 mit einer Materialstärke von 300 µm bis 350 µm vorliegt.

Durch dieses weitere lokale Materialmaximum 1030 erhält der Nadeleinstechbereich 397 eine außergewöhnlich gute Stabilität für ein vorteilhaftes Einstechverhalten bei der Verwendung des Kapselkörpers 305.

Die Materialstärke der Wandung 1010 nimmt ab dem Nadeleinstechbereich 397 nach radial weiter innen wieder etwas ab, bevor die Wandung 1010 nach axial hochwärts in eine gewölbte, dickere Mittenfläche 396 übergeht.

Ab der axialen Mittelachse 312 spiegelt sich der vorstehend beschriebene Wandungsverlauf 1020 bis wieder zurück zum Verschlussrand 399.

Durch den vorstehend beschriebenen Wandungsverlauf 1020 erfährt der Kapselkörper 305 eine hervorragende Formstabilität und Aussteifung, wodurch die Verwendung des Kapselkörpers 305 besonders zuverlässig und sicher ist.

Gemäß den Darstellungen der Figuren 14 bis 21 ist ein weiterer möglicher Verfahrensablauf zum Herstellen eines Behälters bzw. Kapselkörpers (nicht zusätzlich beziffert) einer Kaffeekapsel (ebenfalls nicht beziffert) erläutert, wobei das diesbezüglich gezeigte alternative Thermoformwerkzeug 401 einen ähnlichen konstruktiven Aufbau besitzt, wie das bereits in der Figur 10 gezeigte und vorstehend beschriebene Thermoformwerkzeug 101.

Das alternative Thermoformwerkzeug 401 befindet sich gemäß der Darstellung nach der Figur 14 noch in einer geöffneten Position 1035, in welcher die untere Werkzeughälfte 407 und die obere Werkzeughälfte 408 von einer in einer Folienebene 411 angeordneten Folie 406 beabstandet angeordnet sind, so dass die Folie 406 von der Seite her problemlos in das Thermoformwerkzeug 401 eingeführt werden kann.

Zum Öffnen und Schließen des Thermoformwerkzeugs 401 können die beiden Werkzeughälften 407 und 408 entlang einer axialen Mittelachse 412 in geeigneter Weise verlagert werden.

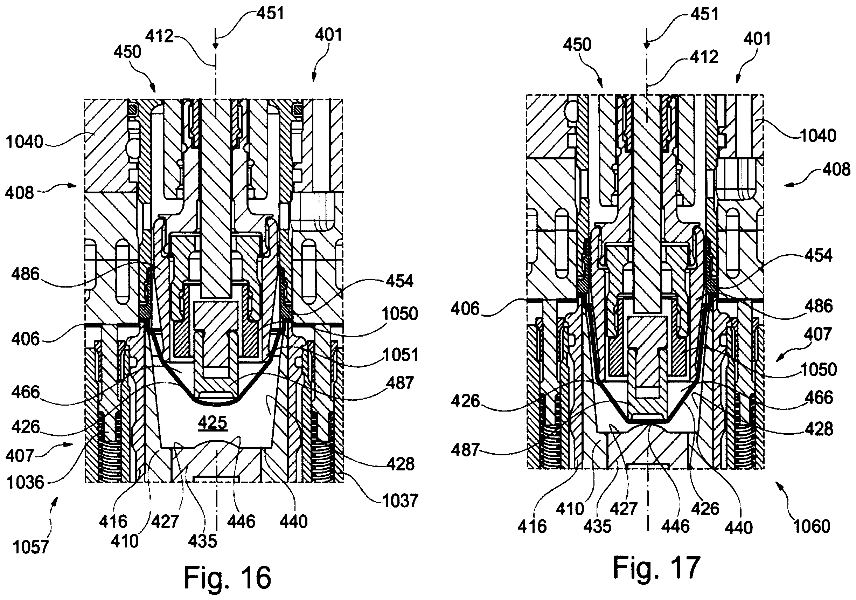

Die untere Werkzeughälfte 407 zeichnet sich insbesondere durch ein Formkammerteil 410 aus, welches eine Formkammer 425 umfasst, in welcher die Folie 406 zu einem Formling 426 (siehe ab Figur 16) geformt werden kann.

Die Formkammer 425 ist an ihrer der oberen Werkzeughälfte 408 zugewandten Seite offen und ist durch einen Formboden 427 und eine Formseitenwand 428 räumlich begrenzt.

Der Formboden 427 ist durch ein verlagerbares Bodenausrückerelement 435 sowie einem konzentrisch hierum angeordneten ortsfesten Bodenringelement 440 ausgestaltet.

Das Formkammerteil 410 ist auswechselbar in einem Formkammerteilhalter 416 der unteren Werkzeughälfte 407 gelagert.

In Bezug auf die axiale Mittelachse 412 befindet sich radial weiter außen des Formkammerteils 410 noch ein federgelagerter Außenklemmring 1036 zum Klemmen der Folie 406 gegenüber der oberen Werkzeughälfte 407, wie ab der Darstellung nach der Figur 15 dargestellt ist.

Der Formkammerteilhalter 416 mit seinem Formkammerteil 410 sowie die Mechanik (nicht explizit beziffert) des Außenklemmrings 1036 sind in einem Gehäuseunterteil 1037 des Thermoformwerkzeugs 401 gelagert.

Die obere Werkzeughälfte 408 des Thermowerkzeugs 401 besitzt dementsprechend ein Gehäuseoberteil 1040, gegen welches der Außenklemmring 1036 zum Klemmen der Folie 406 arbeiten kann.

In dem Gehäuseoberteil 1040 ist des Weiteren ein Formstempel 450 in Gestalt eines Multifunktions-Formstempels (hier nicht nochmals beziffert) innerhalb der oberen Werkzeughälfte 408 gelagert. Ebenso wie ein Niederhalter 454.

Der Formstempel 450 zeichnet sich durch ein äußeres Formstempelelement 486, durch ein radial weiter innenliegendes, inneres Formstempelelement 487 sowie durch ein zusätzliches Kalibrierelement 1050 aus.

Hierbei sind die Formstempelelemente 486, 487 sowie das zusätzliche Kalibrierelement 1050 entlang der axialen Mittelachse 412 axial verlagerbar, und zwar nicht nur als gesamter Formstempel 450, sondern auch einzeln.

Das heißt mit anderen Worten, die Formstempelelemente 186 und 187 sind relativ zueinander axial verschieblich, wobei das zusätzliche Kalibrierelement 1050 zusätzlich relativ zu jedem der Formstempelelemente 186 und 187 axial verschieblich ist.

In der geöffneten Position 1035 (Figur 14) des Thermoformwerkzeugs 401 befindet sich das zusätzliche Kalibrierelement 1050 zur Gänze im Inneren des äußeren Formstempelelements 486, und er liegt hierbei sogar ein stückweit hinter dem unteren Rand 1051 des äußeren Formstempelelements 186 zurück.

Demgegenüber steht das innere Formstempelelement 486 zumindest teilweise axial über diesem unteren Rand 1051 des äußeren Formstempelelements 186 über.

Insofern ragt das innere Formstempelelement 487 zumindest teilweise axial über das zusätzliche Kalibierelement 1050 hinaus.

Gemäß der Darstellung nach der Figur 15 ist das Thermoformwerkzeug 401 in einer bereits geschlossenen Position 1055 dargestellt, in welcher die untere Werkzeughälfte 407 und die obere Werkzeughälfte 408 entlang der axialen Mittelachse 412 gegeneinander verfahren sind, so dass die Folie 406 zwischen dem Gehäuseoberteil 1040 und dem Außenklemmring 1036 der unteren Werkzeughälfte 407 sowie zwischen dem Niederhalter 454 und dem Formkammerteilhalter 416 bzw. dem Formkammerteil 410 eingeklemmt ist.

Dementsprechend sind die Formkammer 425 des Formkammerteils 410 von unten bis an die Folienebene 411 (siehe Figur 15) und der Formstempel 450 mit seinem inneren Formstempelelement 487 von oben bis an die Folienebene 411 herangefahren.

Gemäß der Darstellung nach der Figur 16 befindet sich das Thermoformwerkzeug 401 in einer ersten Folienvordehnposition 1057, in welcher der Formstempel 450 gemäß der axialen Hauptformrichtung 451 von oben bereits teilweise durch die Folienebene 411 (siehe Figur 14) hindurch und runterwärts in die Formkammer 425 hinein eingefahren ist, wodurch die Folie 406 bereits zu dem Formling 426 mit einer Kavität 466 vorgeformt ist.

Hierbei ist der Formstempel 450 als Ganzes in Richtung der axialen Hauptformrichtung 451 verlagert worden. Das heißt, die Formstempelelemente 486, 487 sowie das zusätzliche Kalibrierelement 1050 sind relativ zueinander noch nicht verschoben worden.

Gemäß der Darstellung nach der Figur 17 befindet sich das Thermoformwerkzeug 401 in einer zweiten Folienvordehnposition 1060, in welcher der Formstempel 450 in axialer Hauptformrichtung 451 noch weiter runterwärts in die Formkammer 425 hinein eingefahren ist, und zwar bis das obere Formstempelelement 487 an den konvex ausgebildeten Flächenbereich 446 des Formbodens 427 anliegt oder sich kurz davor befindet.

Je nach zu formendem Formling 426 kann hierbei das innere Formstempelelement 487 in axialer Hauptformrichtung 451 bereits relativ zu dem äußeren Formstempelelement 486 bzw. relativ zu dem zusätzlichen Kalibrierelement 1050 verschoben worden sein. Dies muss aber nicht.

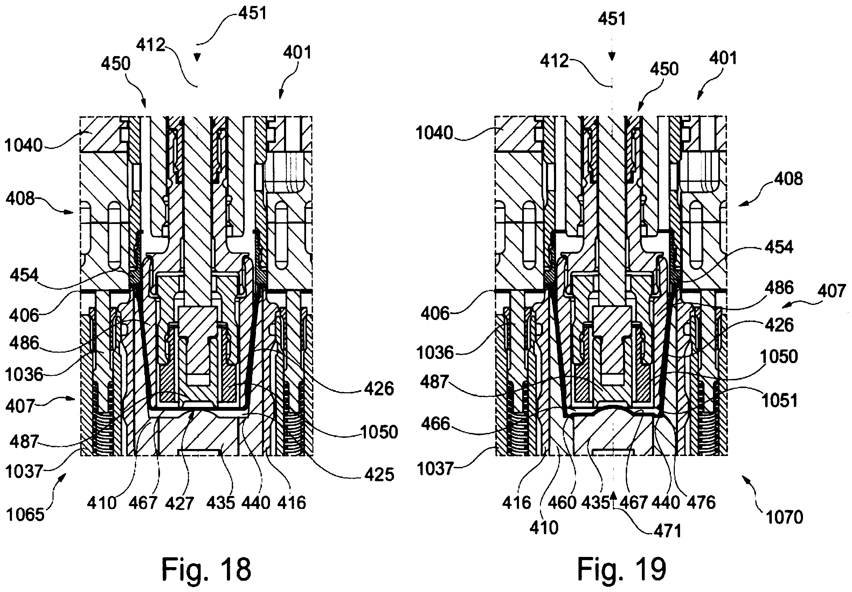

Gemäß der Darstellung nach der Figur 18 befindet sich das Thermowerkzeug 401 in einer dritten Folienvordehnpositionen 1065, in welcher nunmehr definitiv sowohl das äußere Formstempelelement 486 als auch das zusätzliche Kalibrierelement 1050 weiter in axiale Hauptformrichtung 451 verschoben und somit auch noch weiter in die Formkammer 425 hinein eingefahren sind.

Hierbei sind das äußere Formstempelelement 486 sowie das zusätzliche Kalibrierelement 1050 in axialer Hauptformrichtung 451 relativ gegenüber dem inneren Formstempelelement 487 verschoben, so dass der Formling 426 in etwa auf Höhe der höchsten Erhebung (nicht gesondert beziffert) des konvex ausgebildeten Flächenbereichs 446 einen vorerst in etwa planen Bodenbereich 467 aufweist.

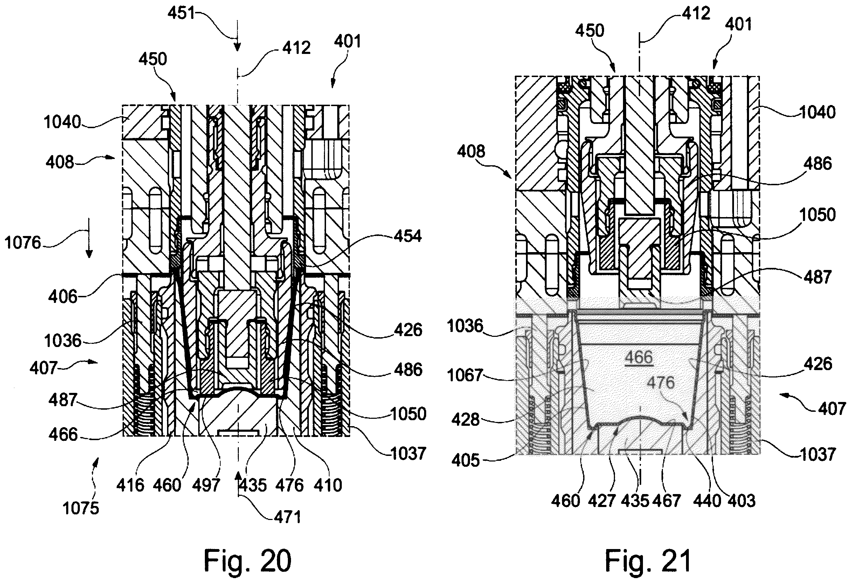

Um darüber hinaus dem Formling 426 und damit auch einen hieraus entstehenden Behälter 403 bzw. Kapselkörper 405 (siehe Figur 21) eine besonders vorteilhafte Aussteifung, welche durch eine gezielte Materialverteilung innerhalb der Wandung 1067 (siehe nur Figur 21) des Formlinks 426 geschaffen ist, zu verleihen und weiter an dem Bodenbereich 467 des Formlinks 426 einen umlaufenden Steg 476 auszuformen, wird an dem Formboden 427 des Formkammerteils 410 während des unter Zuhilfenahme von Überdruck durchgeführten Formprozesses ein umlaufender Ringspalt 460 erzeugt, in welchem die Folie 406 bzw. der Bodenbereich 467 des Formlinks 426 mittels des innerhalb der Kavität 466 des Formlinks 426 vorherrschenden Überdrucks hineingeformt.

Der so interaktiv erzeugte umlaufende Ringspalt 460 ist in diesem Ausführungsbeispiel dadurch erzielt, dass das verlagerbare Bodenausrückerelement 435 mit einem Hohlbodenformhub 471 entgegen die axiale Hauptformrichtung 451 angehoben wird, so dass der umlaufende Ringspalt 460 zwischen der axial aufsteigenden Formseitenwand 428 und dem verlagerbaren Bodenausrückerelement 435 entsteht.

Bevorzugt wird der Hohlbodenformhub 471 ausgeführt, wenn innerhalb der Kavität 466 des Formlinks 426 ein Überdruck anliegt, wodurch eine optimale gewünschte Materialverteilung innerhalb der Wandung 1067 des Formlings 426 entsteht.

Dementsprechend zeigt die Figur 19 das Thermowerkzeug 401 in einer bei einem Überdruck durchgeführten Hohlbodenformhubposition 1070.

Gemäß der weiteren Darstellung nach der Figur 20 ist das Thermoformwerkzeug 401 in einer Kalibrierposition 1075 gezeigt, in welcher das zusätzliche Kalibrierelement 1050 in axialer Hauptformrichtung 451 noch weiter runterwärts in Richtung auf den Formboden 427 zu verschoben ist und hierbei gegen das verlagerbare Bodenausrückerelement 435 drückt, so dass an dem Bodenbereich 467 des Formlings 426 ein äußerst präzise definierter Nadeleinstechbereich 497 definiert wird, welcher sich radial weiter innen an den umlaufenden Steg 476 anschließt.

Hierzu hat das zusätzliche Kalibrierelement 1050 relativ zu den Formstempelelementen 186 und 187 in axialer Hauptformrichtung 451 einen Kalibrierhub 1076 ausgeführt.

Damit ist die Folie 406 bzw. der Formling 426 zu dem Behälter 403 bzw. dem Kapselkörper 405 einer hier nicht näher bezifferten Kaffeekapsel fertig umgeformt.

Mittels des in dem Figuren 14 bis 21 gezeigten Thermoformwerkzeugs 401 und des diesbezüglich beschriebenen Thermoformprozesses kann an dem Formlings 426 bzw. dem Behälter 403 und im Speziellen an dem Kapselkörper 405 eine ähnliche oder genau dieselbe Materialverteilung erzielt werden, wie sie gemäß des in den Figuren 12 und 13 dargestellten und beschriebenen Kapselkörpers 305 erzielt ist.

Gemäß der Dachstellung nach der Figur 21 ist das Thermoformwerkzeug 401 mit einem zu dem Behälter 403 fertig geformten Formling 426 gezeigt, wobei der Formstempel 450 hochwärts nun wieder vollständig bis oberhalb der Folienebene 411 verlagert ist.

Hieran anschließend erfolgt noch ein Auswerferhub (nicht gezeigt, vgl. aber Figur 7) mittels des verlagerbaren Bodenausrückerelements 435, sobald das Thermoformwerkzeug 401 entsprechend weit geöffnet ist, so dass der fertig geformte Behälter 403 insgesamt aus dem Thermoformwerk 401 ausgeworfen werden kann.

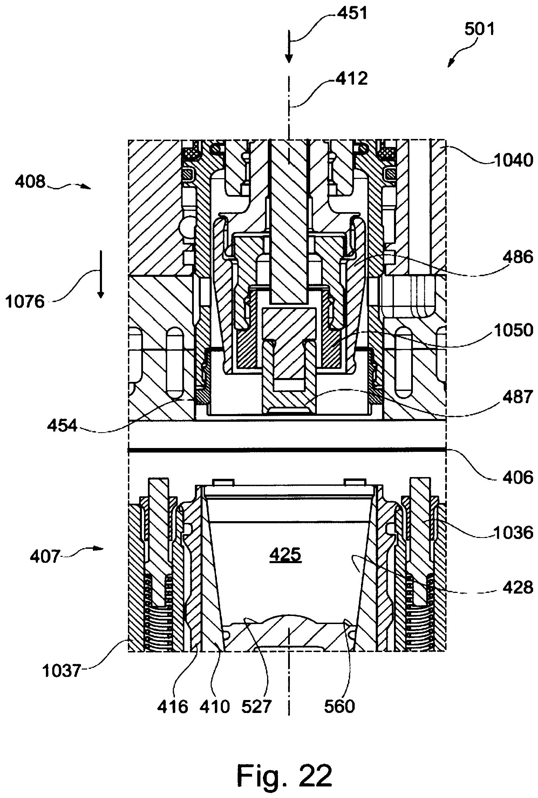

Ein anderes alternatives Thermoformwerkzeug 501 ist gemäß der Darstellung nach der Figur 22 beispielhaft gezeigt, wobei das Thermoformwerkzeug 501 bis auf einen alternativen Formboden 527 den gleichen Aufbau aufweist, wie das bereits hinsichtlich der Figuren 14 bis 21 ausführlich beschriebene Thermoformwerkzeug 401.

Dementsprechend wird bezüglich des konstruktiven Aufbaus und der Funktionsweise des Thermoformwerkzeugs 501 auf das zuvor beschriebene Thermoformwerkzeug 401 verwiesen, um Wiederholungen zu vermeiden. Somit sind für dieselben Bauteile auch dieselben Bezugsziffern des zuvor beschriebene Thermoformwerkzeugs 401 verwendet.

Im Unterschied zu dem Formboden 427 des Thermoformwerkzeugs 401 ist der alternative Formboden 527 sogleich mit einem dauerhaft ausgebildeten umlaufenden Ringspalt 560 versehen, so dass der interaktive Zwischenschritt zum Erzeugen dieses umlaufenden Ringspalts 460 bei Überdruck hierbei entfällt.

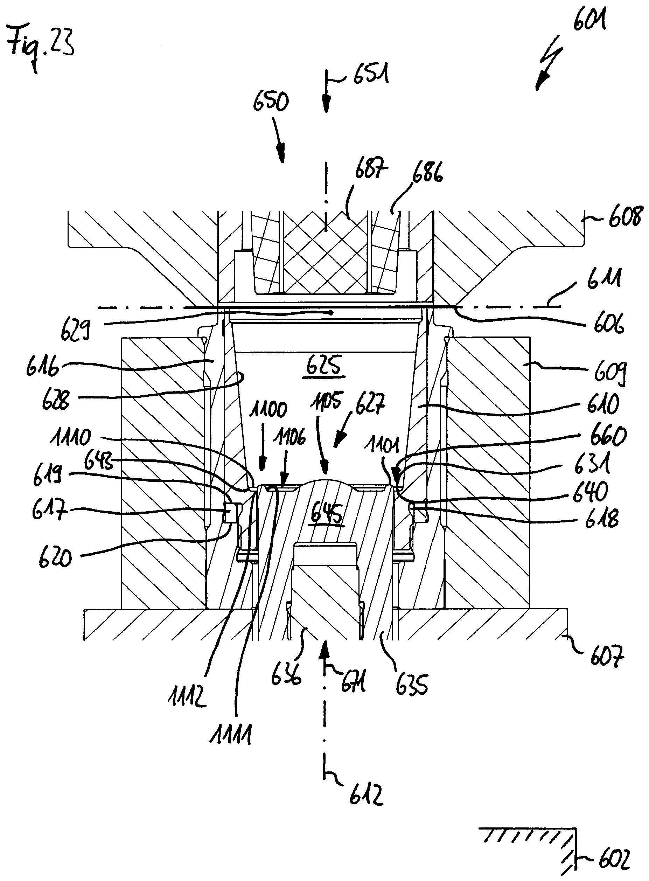

Gemäß der Darstellung nach der Figur 23 ist ein weiteres alternatives Thermowerkzeug 601 gezeigt, welches ebenfalls in einer Anlage 602 zum Thermoformen einer Folie 606 aus einem thermoplastischen Material zu einem Behälter (hier nicht gezeigt, vergleiche aber beispielhaft Figuren 7 und 9, Bezugszeichen 3) in Gestalt einer Kaffeekapsel.

Das Thermoformwerkzeug 601 besteht hierbei ebenfalls im Wesentlichen aus einer unteren Werkzeughälfte 607 und einer axial darüber geordneten oberen Werkzeughälfte 608.

Hierbei weist die untere Werkzeughälfte 607 eine Aufnahme 609 für ein Formkammerteil 610 auf, in dessen Formkammer 625 die Folie 606 hinein geformt und hierbei umgeformt wird. Die Folie 606 ist hierzu in einer Folienebene 611 zwischen den beiden Werkzeughälften 607 und 608 in bekannte Weise eingeklemmt.

Das Formkammerteil 610 ist in Bezug auf die axiale Mittelachse 612 des Thermoformwerkzeug 601 axial höheneinstellbar innerhalb eines Formkammerteilhalters 616 gelagert.

Die Höhenlage des Formkammerteils 610 in Bezug auf den Formkammerteilhalter 616 und insbesondere der Folienebene 611 erfolgt hierbei mittels eines Distanzringelements 617 oder einer Vielzahl an solchen Distanzringelementen 617. Das Distanzringelement 617 ist in einem Aufnahmeraum 618 platziert, welcher sich zwischen dem Formkammerteil 610 und dem Formkammerteilhalter 616 befindet. Hierbei stützt sich das Distanzringelement 617 an einer oberen Schulter 619 des Formkammerteils 610 und einer unteren Schulter 620 des Formkammerteilhalters 616 ab.

Auch bei diesem weiteren alternativen Ausführungsbeispiel ist die Formkammer 625 durch eine unterhalb der Folienebene 611 angeordnete Hauptzugangsöffnung 629 zugänglich und die Formkammer 625 wird von einer Formseitenwand 628 sowie einem der Hauptzugangsöffnung 629 gegenüberliegenden Formboden 627 begrenzt.

Der Formboden 627 ist derart realisiert, dass mit ihm an dem herzustellenden Behälter ein Hohlboden (hier nicht gezeigt) ausgestaltet werden kann.

Hierzu weist der Formboden 627 einerseits eine umlaufende, ringförmige Bodenerhöhung 1100 auf, welche an ihrem in die Formkammer 625 hineinragenden freien Ende 1101 einen Rundungsradius R15 aufweist.

Radial weiter innen liegend bezogen auf die axiale Mittelachse 651 weist der Formboden 627 eine kreisrunde, flächige Bodenerhöhung 1105 auf, welche ebenfalls in die Formkammer 625 hineinragt und hierbei eine konvexe Außenkontur (nicht gesondert beziffert) aufweist.

Zwischen der umlaufenden Bodenerhöhung 1100 und der hierzu radial weiter innen liegenden flächigen Bodenerhöhung 1105 ist noch ein scheibenringförmiger Formbodenbereich 1106 angeordnet, durch welchen die umlaufende Bodenerhöhung 1100 und die flächige Bodenerhöhung 1105 voneinander beabstandet angeordnet sind.

Radial noch weiter außen als der umlaufenden, ringförmigen Bodenerhöhung 1100 ist noch ein ringförmiger Flächenanteil 631 des Formbodens 627 angeordnet, wobei dieser radial weiter außen liegende ringförmige Flächenanteil 631 in die Formseitenwand 628 der Formkammer 625 bzw. des Formkammerteils 610 übergeht.

Insofern liegt zwischen der umlaufenden, ringförmigen Bodenerhöhung 1100 und der Formseitenwand 628 ein umlaufender Ringspalt 660 im Sinne vorliegender Erfindung vor.

Allein schon aufgrund dieser speziellen Ausgestaltung des Formbodens 627 gelingt eine einfache und geometrisch vorteilhafte Herstellung eines Hohlboden an einem diesbezüglich herzustellenden Behälter.

In diesem Ausführungsbeispiel ist die umlaufende ringförmige Bodenerhöhung 1100 mit einem Seitenabstand 1110 (nur schematisch eingezeichnet) von der Formseitenwand 628 beabstandet angeordnet, wobei der Seitenabstand 1110 in diesem Ausführungsbeispiel 3 mm beträgt. Insofern liegt zwischen der umlaufenden, ringförmigen Bodenerhöhung 1100 und der Formseitenwand 628 ein umlaufender Ringspalt 660 mit einer diesbezüglichen Breite vor.

Hierdurch kann an dem herzustellenden Behälter ein äußerer umlaufender Steg etwa in gleicher Breite erzeugt werden, wodurch der herzustellende Behälter an seinem Hohlboden äußerst stabil ausgebildet werden kann.

Es versteht sich, dass der Formboden 627 der Formkammer 625 gegenüber dem Formkammerteil 610 ortsfest verortet sein kann, insbesondere ortsfest während des eigentlichen Formprozesse der Folie 606 innerhalb der Formkammer 625.

Insofern wären dann auch die umlaufende, ringförmige Bodenerhöhung 1110 sowie die flächige, kreisrunde Bodenerhöhung 1105 ortsfest an der Formkammer 625 bzw. an dem Formkammerteil 610 angeordnet.

In diesem Ausführungsbeispiel sind die umlaufende, ringförmige Bodenerhöhung 1110 sowie die flächige, kreisrunde Bodenerhöhung 1105 jedoch an einem axial verlagerbaren Bodenausrückerelement 635 angeordnet, genauer gesagt an der Kopfseite 645 dieses axial verlagerbaren Bodenausrückerelements 635.

Das verlagerbare Bodenausrückerelement 635 ist in diesem Ausführungsbeispiel wieder auf einer Auswerferstange 636 montiert, welche an der unteren Werkzeughälfte 608 axial verschieblich gelagert ist.

Das axial verlagerbare Bodenausrückerelement 635 übernimmt hierbei nicht nur die Funktion des Auswerfens eines fertig geformten Behälters aus dem Formkammerteil 610, sondern kann kumulativ durch eine Hohlbodenformhubbewegung noch zusätzlich zur Außenbildung des an dem Behälter auszuformenden Hohlbodens genutzt werden.

Hierzu kann das axial verlagerbare Bodenausrückelement 635 während des Thermoformprozesses der Folie 606 mit einem Hohlbodenformhub 671 von weniger als 5 mm gegenüber der Formseitenwand 628 der Formkammer 625, und insbesondere gegenüber dem ringförmigen Flächenanteil 631 bzw. einem ortfesten Bodenringelement 640, in die Formkammer 625 hinein bewegt werden.

Die umlaufende, ringförmige Bodenerhöhung 1110 geht in diesem Ausführungsbeispiel auf einer Seite mit einem ersten Radius 1111 gleich R1 in den scheibenringförmigen Formbodenbereich 1106 und auf der gegenüberliegenden Seite mit einem kleineren, weiteren Radius 1112 kleiner R1 in den ringförmigen Flächenanteil 631 und beziehungsweise in das ortsfeste Bodenringelement 640 des Formkammerteils 610 über.

Auch hier gehen der radial weiter außenliegende ringförmige Flächenanteil 631 beziehungsweise das ortsfeste Bodenringelement 640 mit einem Eck- bzw. Übergangsbereich 643 unterbrechungsfrei in die Formseitenwand 628 über.

Das verlagerbare Bodenausrückerelement 635 ist in Bezug auf den Formboden 327 durchmesserreduziert, da der Formboden 627 in seiner Gesamtheit nicht nur durch das Bodenausrückerelement 635 realisiert ist, sondern darüber hinaus auch noch durch das radial weiter außen liegende ortsfeste Bodenringelement 640.

Darüber hinaus ist das hier gezeigte Thermoformwerkzeug 601 an seiner oberen Werkzeughälfte noch mit einem Formstempel 650 ausgerüstet, welcher in der oberen Werkzeughälfte 608 axial beweglich gelagert ist. Der Formstempel 650 ist hierbei in axialer Hauptformrichtung 651 axialbeweglich.

Der Formstempel 650 ist in diesem Ausführungsbeispiel zweigeteilt und besitzt insofern einen erstes Formstempelelement 686 sowie ein zweites Formstempelelement 687, wobei das zweite Formstempelelement 687 im Inneren des ersten Formstempelelements 686 untergebracht ist.

Die beiden Formstempelelemente 686 und 687 können hierbei als ein eigenständiger äu-ßerer Formstempel 686 und ein eigenständiger innerer Formenstempel 687 angesehen und auch eingesetzt werden.

Derartige mit zwei Formstempelelemente 686 bzw. 687 ausgerüstete Formstempel 650 sind aus dem Stand der Technik bereits bekannt und darüber hinaus weiter vorstehend bereits beschrieben, sodass auf eine weitere diesbezügliche konstruktive und funktionelle Erläuterung verzichtet wird.

Jedenfalls zeigt das Ausführungsbeispiel der Figur 23 ein Thermowerkzeug 601 mit einem ersten Formstempelelement 686 und einem zweiten Formstempelelement 687 in Kombination mit dem speziell ausgebildeten Formboden 627, wobei Letzterer insbesondere die umlaufende, ringförmige Bodenerhöhung 1110 aufweist, welche während des Thermoformens der Folie 606 gegenüber der Formkammer 625 sowohl ortsfest angeordnet sein kann als auch axial verschieblich, um durch diese Verschieblichkeit die Gestalt des Hohlbodens bzw. eine diesbezügliche Materialverteilung des herzustellenden Behälters zusätzlich manipulieren zu können.

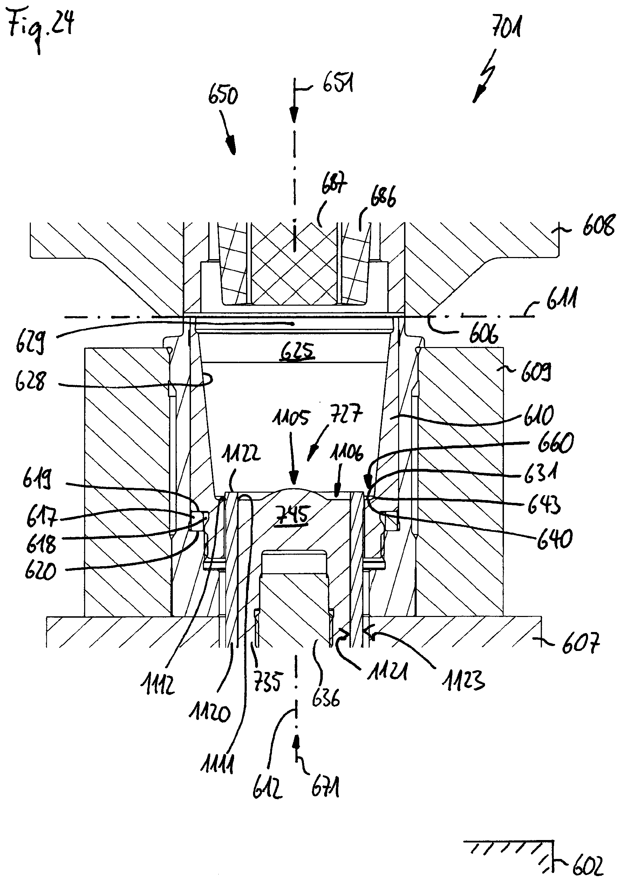

Gemäß der Darstellung nach der Figur 24 ist ein nahezu baugleiches anderes Thermoformwerkzeug 701 gezeigt, sodass nachfolgend dieses andere Thermoformwerkzeug 701 in Bezug auf das in der Figur 23 gezeigte weitere alternative Thermoformwerkzeugs 601 nur hinsichtlich der Unterschiede beschrieben wird, um Wiederholungen zu vermeiden. Bezüglich der sonstigen konstruktiven und funktionellen Merkmale wird insofern insbesondere auf das Ausführungsbeispiel der Figur 23 verwiesen. Hierbei sind gleiche oder gleichwirkende Bauteile bzw. Bauteilgruppen mitgleichen Bezugszeichen gekennzeichnet.

Das in der Figur 24 gezeigte Thermowerkzeug 7001 unterscheidet sich im Wesentlichen durch den Aufbau seines Formbodens 727, welcher sich auch hier wieder durch den ringförmigen Flächenanteil 631 bzw. durch das ortsfeste Bodenringelement 640 des Formkammerteils 610, aber nun abweichend zusätzlich noch durch ein radial weiter innen befindliches axial verlagerbares Ringausrückerelement 1120 sowie ein radial noch weiter innen liegenden axial verlagerbares Bodenausrückerelement 735 auszeichnet.

Das axial verlagerbare Bodenausrückerelement 735 weist an seiner Kopfseite 745 einerseits eine flächige, kreisrunde Bodenerhöhung 1105 mit einer konvexen Außenkontur und andererseits einen radial weiter außen daran anschließenden scheibenringförmigen Formbodenbereich 1106 auf, welcher bis an die Innenseite 1121 des axial verlagerbaren Ringausrückerelements 1120 heranreicht.

Das axial verlagerbares Ringausrückerelement 1120 besitzt ein plan ausgeformtes Ende 1122, welches in die Formkammer 325 hinein ragt und hierbei über dem scheibenringförmigen Formbodenbereich 1106 sowie dem ringförmigen Flächenanteil 631 axial hinausragt, jedoch axial hinter der höchsten Erhebung der flächigen, kreisrunden Bodenerhöhung 1105 zurückliegt.

Die einzelnen miteinander wechselwirkenden Komponenten des Formbodens 727 sind hierbei derart aufeinander abgestimmt, dass die Innenseite 1121 des axial verlagerbaren Ringausrückerelements 1120 mit einem ersten Radius 1111 in den scheibenringförmigen Formbodenbereich 1106 übergeht, während die Außenseite 1123 des axial verlagerbaren Ringausrückerelements 1120 mit einem weiteren Radius 1112 in den ringförmigen Flächenanteil 631 übergeht, wobei die beiden Radien 1111 und 1112 mit R6 gleich groß gewählt sind.

Mittels des axial verlagerbaren Ringausrückerelements 1120 kann insbesondere eine später an dem Hohlboden eines Behälters auszubildende umlaufende Bodenaußennut hinsichtlich ihrer Tiefe variabel eingestellt werden, und bei entsprechender Ausgestaltung des Thermoformwerkzeugs 701 damit auch eine Höhe eines umlaufenden Stegs an dem Hohlboden dieses herzustellenden Behälters.

Mittels des axial verlagerbaren Bodenausrückerelements 735 kann in diesem Ausführungsbeispiel der Hohlboden des herzustellenden Behälters zusätzlich hinsichtlich seines radial weiter innenliegenden Bodenbereichs nochmals individuell angepasst bzw. ausgestaltet werden.

An dieser Stelle sei noch erwähnt, dass alternativ zu dem hier axial verlagerbaren Bodenausrückerelement 735 auch ein ortsfester Bodenbereich des Formkammerteils 610 vorgesehenen sein kann, sodass lediglich das Ringausrückerelement 1120 axial verlagerbar ist.

Hierbei kann das axial verlagerbare Ringausrückerelement 1120 sowohl zur Gestaltung insbesondere der umlaufenden Bodenaußennut des Hohlbodens des herzustellenden Behälters herangezogen als auch als ein Auswerfer für den fertig geformten Behälter aus der Formkammer 325 heraus eingesetzt werden.

Jedenfalls zeigt das Ausführungsbeispiel gemäß der Figur 24 ein alternatives Thermoformwerkzeug 701 mit einem mehrteilig aufgebauten Formboden 727 umfassend sowohl ein axial verlagerbares Ringausrückerelement 1120 als auch ein axial verlagerbares Bodenausrückerelement 735, welches von dem axial verlagerbaren Ringausrückerelement 1120 umgeben sowie geführt ist.

Ferner weist das Thermoformwerkzeug 701 zusätzlich noch einen mehrteilig ausgestalteten Formstempel 650 auf, welcher in diesem Ausführungsbeispiel ebenfalls wieder zumindest ein erstes Formstempelelement 686 und ein zweites Formstempelelement 687 umfasst.

Durch einen derartigen Aufbau kann das Folienelement 606 mittels des Thermowerkzeugs 701 auf vielfältige Weise mechanisch und pneumatisch vorgedehnt, gedehnt und umgeformt werden, sowohl in axialer Hauptformrichtung 651 als auch entgegen dieser axialen Hauptformrichtung 651, und zwar mit wenigstens einem entsprechenden Hohlbodenformhub 671 sowohl hinsichtlich des axial verlagerbaren Bodenausrückerelements 735 als auch mittels des axial verlagerbaren Ringausrückerelements 1120.

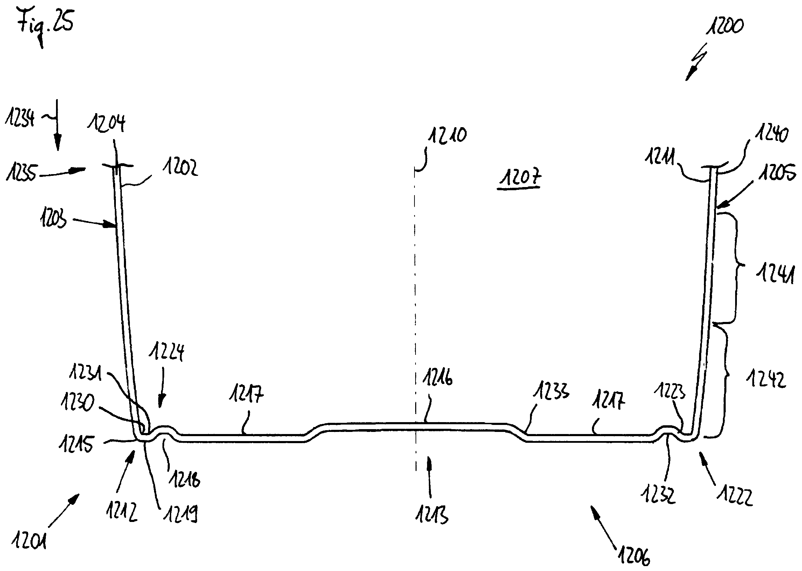

Gemäß der Darstellung nach der Figur 25 ist noch eine Teilansicht eines anderen Behälters 1200 dargestellt, welcher mit irgendeinem der hier beschriebenen Formwerkzeugen bzw. Thermoformwerkzeugen oder Kombinationen daraus hergestellt werden kann.

Der Behälter 1200 ist ein Becher 1201. In diesem speziellen Ausführungsbeispiel stellt der Behälter 1200 eine Brühkapsel bzw. Kaffeekapsel 1202 für den Einsatz an einer Kaffeemaschine dar.

Der Behälter 1200 besitzt hierbei einen Kapselkörper 1203, welcher durch eine Wandung 1204 des Behälters 1200 realisiert ist.

Die Wandung 1204 gestaltet hierbei eine Seitenwand 1205 sowie einen Hohlboden 1206 des Behälters 1200 aus.

Ferner ist der Behälter 1200 in diesem Ausführungsbeispiel bezüglich der axialen Mittelachse 1210 rotationssymmetrisch ausgestaltet.

Die Wandung 1204 umbaut hierbei eine Kavität 1207 des Behälters 1206, welche durch eine hier nicht gezeigte Öffnung zugänglich ist, wobei die Öffnung dem Hohlboden 1206 gegenüberliegend angeordnet ist.

Da es sich hierbei um einen rotationssymmetrischen Behälter 1200 handelt, ist die Wandung 1204 auch konzentrisch um die axiale Mittelachse 1210 herum ausgestaltet.

Die Wandung1204 zeichnet sich hierbei durch unterschiedliche Materialdicken aus, wobei in Wandungsbereichen der Wandung mit höheren Stabilitätsanforderungen größere

Materialdicken vorliegen, als in Wandungsbereichen, welche weniger stabil ausgeführt werden müssen.

Da derartige Behälter 1200 als Massenprodukte hergestellt werden, bringen selbst geringe Materialeinsparungen erhebliche Kostenreduzierungen mit sich.

So liegt beispielsweise in der Nähe der hier nicht gezeigten Öffnung des Behälters 1200 zumindest ein oberes lokales Materialmaximum 1211 vor, welches exemplarisch rechts an der Seitenwand 1205 beziffert ist. Mittels dieses oberen lokalen Materialmaximums 1211 gelingt eine gute Stabilisierung der Wandung 1204 an der hier nicht gezeigten Öffnung des Behälters 1200.

Weitere wichtige Materialmaxima 1212 sowie 1213 befinden sich an dem Hohlboden 1206, genauer gesagt in einem Übergangsbereich 1215 zwischen der Seitenwand 1205 und dem Hohlboden 1206 einerseits sowie in dem Bereich der axialen Mittelachse 1210 des Hohlbodens 1206 andererseits.

Insofern zeichnet sich der Behälter 1200 durch einen Hohlboden 1206 aus, welcher an der axialen Mittelachse 1210 einen zentrischen Mittenbereich 1216, einen bezogen auf die axiale Mittelachse 1210 hiervon radial weiter außen liegenden umlaufenden Bodenringbereich 1217, eine hiervon radial weiter außen liegende Bodenaußennut 1218 sowie einen hiervon radial weiter außen liegenden umlaufenden Steg 1219 aufweist, wobei der Hohlboden 1206 von der axialen Mittelachse 1210 ausgehend nach radial außen unterschiedliche Materialdicken aufweist.

Durch diese spezielle Ausgestaltung des Hohlboden 1206 können nicht nur eine Materialeinsparung erzielt, sondern darüber hinaus auch sehr gute Stabilitätseigenschaften geschaffen werden.

Hierbei liegt der umlaufende Steg 1219 an dem äußeren Rand 1222 des Holbodens 1206, wobei sich die umlaufende Bodenaußennut 1218 radial weiter innen direkt an den umlaufenden Steg 1219 anschließt, sodass der umlaufende Steg und die umlaufende Bodenaußennut 1218 einen gemeinsamen Wandungsabschnitt 1223 besitzen.

Insbesondere bilden der umlaufende Steg 1219 und die umlaufende Bodenaußennut 1218 einen sinusförmigen Wandungsabschnitt 1224 der Wandung 1204, wodurch eine besonders hohe Festigkeit und Formstabilität des Behälters 1200, insbesondere an seinem Hohlboden 1206, erreicht werden.

In diesem Ausführungsbeispiel besitzen der umlaufende Steg 1219 und die Bodenaußennut 1218 jeweils die gleiche Radialbreite (hier nicht expliziert eingezeichnet).

Eine weitere wichtige Spezifikation des Hohlbodens 1206 des Behälters 1200 ist darin zusehen, dass der umlaufende Steg 1219 und der Bodenringbereich 1216 einerseits sowie die umlaufende Bodenaußennut 1218 und der zentrische Mittenbereiche 1216 andererseits jeweils auf gleicher Axialhöhe angeordnet sind, wodurch die sehr spezifische und äußerst stabile Gestalt des Holbodens 1206 ermöglicht wird.

Die Stabilität der Wandung 1204 ist im Bereich des Holbodens 1206 i nochmals deutlich erhöht, da der umlaufende Steg 1219 mit einem radial weiter außen liegenden kleineren Innenradius 1230 in die Seitenwand 1205 der Wandung 1204 übergeht als mit einem radial weiter innen liegende Innenradius 1231 des umlaufenden Stegs 1219, mit welchem Letzterer in die umlaufenden Bodenaußennut 1218 übergeht.

Hierbei ist der radial weiter außen liegenden Innenradius 1230 kleiner R1, wobei der radial weiter innen liegenden Innenradius 1231 gleicher oder größer R1 ist.

Ferner weist die umlaufende Bodenaußennut 1218 in diesem Ausführungsbeispiel einen Innenradius 1232 größer R1 auf.

Darüber hinaus gehen der zentrische Mittenbereiche 1216 und der hierzu radial weiter außen angeordnete umlaufende Bodenringbereich 1217 mit einem Übergangsradius 1233 zwischen R1 und R2 ineinander über.

Des Weiteren sind an der Wandung 1204 des Behälters 1200 exemplarisch noch einige Materialdicken markiert, um die Materialverteilung an der Wandung 1204 besser einschätzen zu können.

Ausgehend von der hier nicht gezeigten Öffnung des Behälters 1200 runterwärts in Richtung 1234 des Holbodens 1206 erstreckt sich in etwa bis Mitte 1235 der Seitenwand 1205 ein oberer Materialdickenbereich 1240 mit einem Wert zwischen 250 µm und 272 µm, wobei die Materialdicke in einem weiter darunter liegenden Materialdickenbereiche 1241 erst einmal abnimmt und zwischen 218 µm und 250 µm Mikrometer beträgt, bis in einem unteren Materialdickenbereich 1242 der Seitenwand 1205, in welchem die Materialdicke der Seitenwand 1205 dann wieder ansteigt und dort bereits zwischen 250 µm und 500 µm beträgt. An dem äußeren Materialmaximum 1212 weist die Materialdicke dann einen Wert zwischen 500 µm und 550 Mikrometer und gegebenenfalls mehr an dem umlaufenden Steg 1219.

Die Materialdicke nimmt dann an der umlaufenden Bodenaußennut 1216 nach radial weiter innen wieder stetig ab und besitzt an dem umlaufenden Bodenringbereich 1217 die geringste Materialdicke des Hohlbodens mit ca. 300 µm bis 350 µm, wobei die Materialdicke zum zentrischen Mittenbereiche 1216 wieder auf über 400 µm ansteigt und an der axialen Mittelachse 1210 das innere Materialmaximum 1213 mit ca. 580 µm bis 600 µm erreicht.

Wie bereits erwähnt verschafft insbesondere der Aufbau des Holbodens 1206 an der Unterseite des Behälters 1200 eine sehr hohe Stabilität, wobei der laufende Bodenringbereich 1217 aufgrund seiner geringeren Materialdicke prädestiniert für Nadeleinstechbereiche (hier nicht gesondert beziffert) einer Kaffeekapsel 1202 ist.

Zum Abschluss wird noch darauf hingewiesen, dass hinsichtlich des Behälters 1200 aus der Figur 25 auch die Vorteile und vorteilhaften Effekte zutreffen können, welche hinsichtlich anderer hier beschriebener Behälter bzw. Kaffeekapseln oder dergleichen beschrieben sind.

## Patentansprüche

1. Formwerkzeug (1; 101; 201; 401; 501; 601; 701) zum Tiefziehen einer Folie (6; 306;406; 606) zu einem Behälter (3; 303; 403; 1200), mit einem Formkammerteil (10; 1 10; 410; 610), welches mit Überdruck beaufschlagbar ist, bei welchem das Formkammerteil (10; 110; 410; 610) eine Formkammer (25; 125; 425; 625) umfasst, welche von einem Formboden (27; 127; 427; 527; 627; 727) und einer Formseitenwand (28) derart umschlossen ist, dass in dem Formkammerteil (10; 1 10; 410; 610) unter Zuhilfenahme von Überdruck die Folie (6; 306; 406; 606) zu dem Behälter (3; 303; 403; 1200) umformbar ist, wobei das Formwerkzeug (1 ; 101 ; 201 ; 401 ; 501 ; 601 ; 701) dazu eingerichtet ist, bei Umgebungsdruck oder Überdruck an dem Formboden (27; 127; 427; 527; 627; 727) einen Ringspalt (60; 160; 460; 560; 660) zu erzeugen, in welchem die Folie (6; 306; 406; 606) hineinformbar ist, wobei der Formboden (27; 127; 427; 527; 627; 727) ein in die Formkammer (25; 125; 425; 625) hinein verlagerbares Bodenausrückerelement (35; 135; 435) umfasst, das durch Ausrücken in die Formkammer (25, 125, 425, 625) hinein den Ringspalt (460, 560) erzeugen kann, und welches von einem ortsfesten Bodenringelement (40) umschlossen ist, wobei das ortsfeste Bodenringelement (40) gegenüber der Formseitenwand (28) ortsfest ist und einstückig mit der Formseitenwand (28) ausgebildet ist, wobei das verlagerbare Bodenausrückerelement (35; 135; 435) in Bezug auf den Formboden (27; 127; 427; 527; 627; 727) durchmesserreduziert ist, und eine Bauteildicke (81) aufweist, welche zumindest gleich hoch oder höher ist als eine Ringspalthöhe (78) des zu erzeugenden Ringspaltes (60), **dadurch gekennzeichnet, dass** das Formwerkzeug (1; 101; 201; 401; 501; 601; 701) so eingerichtet ist, dass das verlagerbare Bodenausrückerelement (35; 135; 435) mit einem Hohlbodenformhub (471) entgegen die axiale Hauptformrichtung (451) angehoben werden kann, so dass der umlaufende Ringspalt (460, 560) zwischen der axial aufsteigenden Formseitenwand (28, 428) und dem verlagerbaren Bodenausrückerelement (35; 135; 435) entsteht.

2. Formwerkzeug nach Anspruch 1, **dadurch gekennzeichnet**, dassdas verlagerbare Bodenausrückerelement (35; 135; 435) einteilig ausgestaltet ist. und/oder kopfseitig, zumindest teilweise an dem ortsfesten Bodenringelement (40) seitengeführt ist, und/oder an seiner Kopfseite (45) einen konvex ausgebildeten Flächenbereich (46) aufweist, und/oder an seiner Kopfseite (45; 645) einen umlaufenden überhöhten Rand (1 100) aufweist.

3. Formwerkzeug nach Anspruch 1, **dadurch gekennzeichnet**, dassder Formboden (27; 127; 427; 527; 627; 727) ein in die Formkammer (25; 125; 425; 625) hinein verlagerbares Ringausrückerelement umfasst, wobei dieses verlagerbare Ringausrückerelement an dem Formboden (27; 127; 427; 527; 627; 727) der Formkammer (25; 125; 425; 625) angeordnet ist, wobei vorzugsweise das verlagerbare Ringausrückerelement gegenüber einem radial weiter innen liegenden Formbodenteil der Formkammer (25; 125; 425; 625), insbesondere einem verlagerbaren Bodenausrückerelement (35; 135; 435), relativ axial verschieblich angeordnet ist, und/oder das verlagerbare Ringausrückerelement zwischen dem Formkammerteil (10; 110; 410; 610), insbesondere einem ringförmigen Flächenanteil (31) des Formbodens (27; 127; 427; 527; 627; 727), und einem scheibenförmigen Flächenanteil (30) des Formbodens (27; 127; 427; 527; 627; 727), insbesondere einem Bodenausrückerelement (35; 135; 435), axial verschieblich angeordnet ist, und/oder das verlagerbare Ringausrückerelement wenigstens einem Formstempel (50, 86, 87; 150, 186, 187; 250, 286, 287; 450, 486, 487; 650; 686; 687), insbesondere einem oder mehreren Formstempelelementen, axial verschieblich gegenüberliegend angeordnet ist.

4. Formwerkzeug nach Anspruch 3, **dadurch gekennzeichnet**, dassdas Formkammerteil (10; 110; 410; 610) relativ zu dem verlagerbaren Bodenausrückerelement (35; 135; 435) bzw. zu einem Formkammerteilhalter (16) höhenverstellbar gelagert ist, und/oder verschiedene Ringspalthöhen (78) mittels unterschiedlich hoher Distanzringelemente (17) einstellbar sind, wobei zumindest ein Distanzringelement (17) in einem Aufnahmeraum (18) zwischen dem Formkammerteil (10; 1 10; 410; 610) und einem Formkammerteilhalter (16; 616) angeordnet ist.

5. Formwerkzeug nach Anspruch 4, **dadurch gekennzeichnet**, dasszumindest ein Distanzringelement (17) in einem Aufnahmeraum (18) zwischen dem Formkammerteil (10; 1 10; 410; 610) und einem Formkammerteilhalter (16; 616) angeordnet ist, indem dieses zwischen einer oberen Schulter (19) des Formkammerteils (10; 110; 410; 610) und einer unteren Schulter (20) des Formkammerteilhalters (16) eingeklemmt ist.

6. Anlage (2) zum Thermoformen mit einem Formwerkzeug (1; 101; 201; 401; 501; 601; 701) zum Tiefziehen und Thermoformen, einer Folie (6; 306; 406; 606) zu einem Behälter (3; 303; 403; 1200) und mit einer Überdruckeinrichtung (52), **gekennzeichnet durch** ein Formwerkzeug (1; 101; 201; 401; 501; 601; 701) nach einem der Ansprüche 1 bis 5.

7. Verfahren zum Thermoformen einer Folie (6; 306; 406; 606) zu einem Behälter (3; 303; 403; 1200), insbesondere zu einem Behälter (3; 303; 403; 1200) für eine Brühkapsel, speziell für eine Kaffeekapsel (4; 1202), wobei die Folie (6; 306; 406; 606) mittels eines Formstempels (50, 86, 87; 150, 186, 187; 250, 286, 287; 450, 486, 487; 650; 686; 687) und/oder mittels eines Überdrucks in einer axialen Hauptformrichtung (51; 151; 451; 651) in ein Formkammerteil (10; 1 10; 410; 610) eines Formwerkzeugs (1; 101; 201; 401; 501; 601; 701) hinein zu einem Formling (26; 426) mit einer Kavität (66; 466; 1207) umgeformt wird, wobei die Folie (6; 306; 406; 606) bis gegen oder zumindest bis vor einen Formboden (27; 127; 427; 527; 627; 727) des Formkammerteils (10; 1 10; 410; 610) gedrückt wird, um einen Bodenbereich (67; 367; 467) des Formlings (26; 426) auszuformen,**dadurch gekennzeichnet**, dassder Formboden (27; 127; 427; 527; 627; 727) ein in die Formkammer (25; 125; 425; 625) hinein verlagerbares Bodenausrückerelement (35; 135; 435) umfasst, welches von einem ortsfesten Bodenringelement (40) umschlossen ist,wobei an dem Formboden (27; 127; 427; 527; 627; 727) des Formkammerteils (10; 1 10; 410; 610) angedrückten Bodenbereich (67; 367; 467) des Formlings (26; 426) in einem weiteren Umformschritt bei Umgebungsdruck oder Überdruck ein umlaufender Ringspalt (60; 160; 460; 560; 660) an dem Formboden (27; 127; 427; 527; 627; 727) erzeugt wird, in welchem der Bodenbereich (67; 367; 467) des Formlings (26; 426) mittels des Bodenausrückerelements (35; 135; 435) hinein zu einem Hohlboden (73; 1206) weiter umgeformt wird, und wobei das Formwerkzeug (1, 101, 201, 401, 501, 601, 701) nach einem der Ansprüche 1 bis 5 ausgebildet ist.

8. Verfahren nach Anspruch 7, **dadurch gekennzeichnet, dass** mittels der Ringspalterzeugung und/oder des Hohlbodenformhubs (71; 171; 471; 671) mindestens eine lokale Materialanhäufung (88; 388; 1030; 1212, 1213) und/oder eine lokale Materialsenke an dem Bodenbereich (67; 367; 467) des Formlings (26; 426) erzeugt wird, wobei an dem Bodenbereich (67; 367; 467) des Formlings (26; 426) unterschiedlich dicke Bodenteilbereiche (75) erzeugt werden, indem bei Überdruck in der Kavität (66; 466; 1207) des Formlings (26; 426) an dem Formboden (27; 127; 427; 527; 627; 727) ein umlaufender Ringspalt (60; 160; 460; 560; 660) erzeugt wird.

9. Verfahren nach einem der vorherigen Verfahrensansprüche, **dadurch gekennzeichnet, dass** an dem Bodenbereich (67; 367; 467) des Formlings (26; 426) ein radial innen liegender Bodenscheibenbereich (90) mit einer ersten Bodenteildicke (91), ein radial weiter außen liegender, erster Bodenringbereich (92) mit einer zweiten Bodenteildicke (93) und ein radial noch weiter außen liegender, zweiter Bodenringbereich (94) mit einer dritten Bodenteildicke (95) ausgeformt werden, indem bei Überdruck in der Kavität (66; 466; 1207) des Formlings (26; 426) an dem Formboden (27; 127; 427; 527; 627; 727) des Formwerkzeugs (1 ; 101 ; 201 ; 401 ; 501 ; 601 ; 701) ein umlaufender Ringspalt (60; 160; 460; 560; 660) erzeugt wird, wobei vorzugsweise mittels des radial innen liegenden Bodenscheibenbereichs (90) eine plane oder bevorzugt eine gewölbte, dickere Mittenfläche (96) an dem Bodenbereich (67; 367; 467) des Formlings (26; 426) erzeugt wird, und/oder mittels des radial noch weiter außen liegenden, zweiten Bodenringbereichs (94) ein umlaufender Steg (76; 376; 476; 1219) an dem Bodenbereich (67; 367; 467) des Formlings (26; 426) erzeugt wird, und/oder mittels des radial weiter außen liegenden, ersten Bodenringbereichs (92) ein dünnerer Nadeleinstechbereich (97) zwischen dem radial innen liegenden Bodenscheibenbereich (90) und dem radial noch weiter außen liegenden, zweiten Bodenringbereich (94) erzeugt wird.

10. Verfahren nach einem der vorherigen Verfahrensansprüche, **dadurch gekennzeichnet, dass** der Überdruck innerhalb der Kavität (66; 466; 1207) des Formlings (26; 426) bereits vor, während oder erst im Anschluss einer Ringspalterzeugung und/oder HohlbodenformHubbewegung (71 ; 171 ; 471 ; 671) erzeugt wird, wobei vorzugsweise mittels der Ringspalterzeugung in Hauptformrichtung (51 ; 151; 451 ; 651) das Raumvolumen (80) der Kavität (66; 466; 1207) des Formlings (26; 426) vergrößert wird oder zumindest unverändert groß bleibt, und/ oder mittels oder trotz einer Hohlbodenformhubbewegung (71; 171; 471; 671) entgegen der Hauptformrichtung (51 ; 151 ; 451 ; 651) das Raumvolumen der Kavität (66; 466; 1207) des Formlings (26; 426) vergrößert wird oder zumindest unverändert groß bleibt.

11. Verfahren nach einem der vorherigen Verfahrensansprüche, **dadurch gekennzeichnet, dass** die Kavität (66; 466; 1207) des Formlings (26; 426) durch einen am Formling (26; 426) ausgestalteten, umlaufenden Steg (76; 376; 476; 1219) erweitert wird, wobei und/ oder der umlaufende Steg (76; 376; 476; 1219) einwandig ausgebildet wird.

12. Verfahren nach einem der vorherigen Verfahrensansprüche, **dadurch gekennzeichnet, dass** der Ringspalt (60; 160; 460; 560; 660) und/oder der Hohlbodenformhub (71; 171; 471; 671) mit einer Höhe (78) von weniger als 10 % oder von weniger als 5 % der Gesamthöhe des Formlings (26; 426), des Behälters (3; 303; 403; 1200) oder eines Kapselkörpers (5), und von mindestens 1 % der Gesamthöhe des Formlings (26; 426), des Behälters (3; 303; 403; 1200) oder eines Kapselkörpers (5) erzeugt wird.

## Claims

1. Moulding tool (1; 101; 201; 401; 501; 601; 701) for deepdrawing a film (6; 306; 406; 606) to form a container (3; 303; 403; 1200), having a mould chamber part (10; 110; 410; 610) which can be subjected to overpressure, in which the mould chamber part (10; 110; 410; 610) comprises a mould chamber (25; 125; 425; 625) which is enclosed by a mould base (27; 127; 427; 527; 627; 727) and a mould side wall (28) in such a way that the film (6; 306; 406; 606) can be formed into the container (3; 303; 403; 1200) in the mould chamber part (10; 1 10; 410; 610) by means of the overpressure, wherein the moulding tool (1; 101; 201; 401; 501; 601; 701) is configured to produce an annular gap (60; 160; 460; 560; 660) at ambient pressure or overpressure at the mould base (27; 127; 427; 527; 627; 727), into which the film (6; 306; 406; 606) can be moulded, wherein the mould base (27; 127; 427; 527; 627; 727) comprises a base disengaging element (35; 135; 435) which can be displaced into the mould chamber (25; 125; 425; 625), which can produce the annular gap (460, 560) by disengagement into the mould chamber (25, 125, 425, 625), and which is enclosed by a stationary base ring element (40), wherein the stationary base ring element (40) is stationary relative to the mould side wall (28) and is formed integrally with the mould side wall (28), wherein the displaceable base disengaging element (35; 135; 435) is reduced in diameter in relation to the mould base (27; 127; 427; 527; 627; 727) and has a component thickness (81) which is at least as high or higher than an annular gap height (78) of the annular gap (60) to be produced, **characterised in that** the moulding tool (1; 101; 201; 401; 501; 601; 701) is configured in such a way that the displaceable base disengaging element (35; 135; 435) can be lifted with a hollow base mould lift (471) against the axial main mould direction (451), so that the circumferential annular gap (460, 560) is formed between the axially ascending mould side wall (28, 428) and the displaceable base disengaging element (35; 135; 435).

2. Moulding tool according to Claim 1, **characterized in that** the displaceable base disengaging element (35; 135; 435) is configured in one piece, and/or is laterally guided at least partially on the stationary base ring element (40) on the head side, and/or has a convexly configured surface area (46) on its head side (45), and/or has a circumferential raised edge (1 100) on its head side (45; 645).

3. Moulding tool according to Claim 1, **characterised in that** the mould base (27; 127; 427; 527; 627; 727) comprises a ring disengaging element which can be displaced into the mould chamber (25; 125; 425; 625), wherein this displaceable ring disengaging element is arranged on the mould base (27; 127; 427; 527; 627; 727) of the mould chamber (25; 125; 425; 625), wherein preferably the displaceable ring disengaging element is arranged so as to be axially displaceable relative to a mould base part of the mould chamber (25; 125; 425; 625) located radially further inwards, in particular a displaceable base disengaging element (35; 135; 435), and/or the displaceable ring disengaging element is arranged axially displaceably between the mould chamber part (10; 110; 410; 610), in particular an annular surface portion (31) of the mould base (27; 127; 427; 527; 627; 727), and a disc-shaped surface portion (30) of the mould base (27; 127; 427; 527; 627; 727), in particular a base disengaging element (35; 135; 435), and/or the displaceable ring disengaging element is arranged axially displaceably opposite at least one mould punch (50, 86, 87; 150, 186, 187; 250, 286, 287; 450, 486, 487; 650; 686; 687), in particular one or more mould punch elements.

4. Moulding tool according to Claim 3, **characterised in that** the mould chamber part (10; 110; 410; 610) is mounted so as to be adjustable in height relative to the displaceable base disengaging element (35; 135; 435) or to a mould chamber part holder (16), and/or different annular gap heights (78) can be adjusted by means of spacer ring elements (17) of different heights, wherein at least one spacer ring element (17) is arranged in a receiving space (18) between the mould chamber part (10; 1 10; 410; 610) and a mould chamber part holder (16; 616) .

5. Moulding tool according to Claim 4, **characterized in that** at least one spacer ring element (17) is arranged in a receiving space (18) between the mould chamber part (10; 1 10; 410; 610) and a mould chamber part holder (16; 616) by being clamped between an upper shoulder (19) of the mould chamber part (10; 110; 410; 610) and a lower shoulder (20) of the mould chamber part holder (16).

6. System (2) for thermoforming with a moulding tool (1; 101; 201; 401; 501; 601; 701) for deep drawing and thermoforming, a film (6; 306; 406; 606) to form a container (3; 303; 403; 1200) and with an overpressure device (52), **characterized by** a moulding tool (1; 101; 201; 401; 501; 601; 701) according to any one of Claims 1 to 5.

7. Method for thermoforming a film (6; 306; 406; 606) into a container (3; 303; 403; 1200), in particular into a container (3; 303; 403; 1200) for a brewing capsule, in particular for a coffee capsule (4; 1202), wherein the film (6; 306; 406; 606) is pressed by means of a mould punch (50, 86, 87; 150, 186, 187; 250, 286, 287; 450, 486, 487; 650; 686; 687) and/or by means of an overpressure in an axial main mould direction (51; 151; 451; 651) into a mould chamber part (10; 1 10; 410; 610) of a moulding tool (1; 101; 201; 401; 501; 601; 701) to form a moulded part (26; 426) with a cavity (66; 466; 1207), wherein the film (6; 306; 406; 606) is pressed against or at least in front of a mould base (27; 127; 427; 527; 627; 727) of the mould chamber part (10; 1 10; 410; 610) in order to form a base region (67; 367; 467) of the moulded part (26; 426), **characterised in that** the mould base (27; 127; 427; 527; 627; 727) comprises a base disengaging element (35; 135; 435) which can be displaced into the mould chamber (25; 125; 425; 625) and which is enclosed by a stationary base ring element (40), wherein on the base region (67; 367; 467) of the moulded part (26; 426) pressed on the mould base (27; 127; 427; 527; 627; 727) of the mould chamber part (10; 1 10; 410; 610), a circumferential annular gap (60; 160; 460; 560; 660) is generated on the mould base (27; 127; 427; 527; 627; 727) in a further forming step at ambient pressure or overpressure, in which the base region (67; 367; 467) of the moulded part (26; 426) is further formed into a hollow base (73; 1206) by means of the base disengaging element (35; 135; 435), and wherein the moulding tool (1, 101, 201, 401, 501, 601, 701) is designed according to any of Claims 1 to 5.

8. Method according to Claim 7, **characterised in that** at least one local material accumulation (88; 388; 1030; 1212, 1213) and/or a local material depression is produced at the base region (67; 367; 467) of the moulded part (26; 426) by means of the annular gap generation and/or the hollow base moulded part lift (71; 171; 471; 671), wherein at the base region (67; 367; 467) of the moulded part (26; 426), base part regions (75) of different thicknesses are produced by producing a circumferential annular gap (60; 160; 460; 560; 660) at the mould base (27; 127; 427; 527; 627; 727) in the case of overpressure in the cavity (66; 466; 1207) of the moulded part (26; 426) .

9. Method according to any of the preceding method claims, **characterised in that** a radially inner base disc region (90) with a first base part thickness (91), a radially more outer first base ring region (92) with a second base part thickness (93) and a radially even more outer second base ring region (94) with a third base part thickness (95) are formed on the base region (67; 367; 467) of the moulded part (26; 426), **in that** a circumferential annular gap (60; 160; 460; 560; 660) is produced on the mould base (27; 127; 427; 527; 627; 727) of the moulding tool (1; 101; 201; 401; 501; 601; 701), during overpressure in the cavity (66; 466; 1207) of the moulded part (26; 426), wherein a flat or preferably a curved, thicker central surface (96) is preferably produced on the base region (67; 367; 467) of the moulded part (26; 426) by means of the radially inner base disc region (90), and/or a circumferential web (76; 376; 476; 1219) is produced on the base region (67; 367; 467) of the moulded part (26; 426) by means of the second base ring region (94), which is located even further radially outwards, and/or a thinner needle penetration area (97) is produced between the radially inner base disc area (90) and the radially even more outer second base ring region (94) by means of the radially more outer base ring region (92).

10. Method according to any of the preceding method claims, **characterised in that** the overpressure within the cavity (66; 466; 1207) of the moulded part (26; 426) is already generated before, during or only after an annular gap generation and/or hollow base mould lifting movement (71; 171; 471; 671), wherein preferably by means of the annular gap generation in the main mould direction (51; 151; 451; 651) the volume (80) of the cavity (66; 466; 1207) of the moulded part (26; 426) is increased or at least remains unchanged in size, and/or by means of or despite a hollow base mould lifting movement (71; 171; 471; 671) against the main mould direction (51; 151; 451; 651), the volume of the cavity (66; 466; 1207) of the moulded part (26; 426) is increased or at least remains unchanged in size.

11. Method according to any of the preceding method claims, **characterized in that** the cavity (66; 466; 1207) of the moulded part (26; 426) is widened by a circumferential web (76; 376; 476; 1219) configured on the moulded part (26; 426), wherein and/or the circumferential web (76; 376; 476; 1219) is formed with a single wall.

12. Method according to any of the preceding method claims, **characterized in that** the annular gap (60; 160; 460; 560; 660) and/or the hollow-base moulded part lift (71; 171; 471; 671) is produced with a height (78) of less than 10% or less than 5% of the total height of the moulded part (26; 426), of the container (3; 303; 403; 1200) or of a capsule body (5), and of at least 1% of the total height of the moulded part (26; 426), of the container (3; 303; 403; 1200) or of a capsule body (5).

## Revendications

1. Outil de formage (1 ; 101 ; 201 ; 401 ; 501 ; 601 ; 701) pour l'emboutissage d'un film (6 ; 306 ; 406 ; 606) de façon à former un récipient (3 ; 303 ; 403 ; 1200), avec une partie de chambre de formage (10 ; 110 ; 410 ; 610) pouvant être alimentée en surpression, dans lequel la partie de chambre de formage (10 ; 110 ; 410 ; 610) comprend une chambre de formage (25 ; 125 ; 425 ; 625) entourée par un fond de formage (27 ; 127 ; 427 ; 527 ; 627 ; 727) et une paroi latérale de formage (28) de telle sorte que dans la partie de chambre de formage (10 ; 110 ; 410 ; 610), le film (6 ; 306 ; 406 ; 606) puisse être transformé en récipient (3 ; 303 ; 403 ; 1200) à l'aide de la surpression, dans lequel l'outil de formage (1 ; 101 ; 201 ; 401 ; 501 ; 601 ; 701) est conçu, en cas de pression ambiante ou de surpression au niveau du fond de formage (27 ; 127 ; 427 ; 527 ; 627 ; 727), pour produire une fente annulaire (60 ; 160 ; 460 ; 560 ; 660) dans laquelle le film (6 ; 306 ; 406 ; 606) peut être introduit pour être mis en forme, dans lequel le fond de formage (27 ; 127 ; 427 ; 527 ; 627 ; 727) comprend un élément de butée de dégagement de fond (35 ; 135 ; 435) pouvant être déplacé dans la chambre de formage (25 ; 125 ; 425 ; 625) et pouvant produire la fente annulaire (460, 560) par dégagement dans la chambre de formage (25, 125, 425, 625) et qui est entouré par un élément annulaire de fond (40) fixe sur place, dans lequel l'élément annulaire de fond (40) fixe sur place est fixe sur place par rapport à la paroi latérale de formage (28) et est réalisé d'un seul tenant avec la paroi latérale de formage (28), dans lequel l'élément de butée de dégagement de fond mobile (35 ; 135 ; 435) est réduit en diamètre par rapport au fond de formage (27 ; 127 ; 427 ; 527 ; 627 ; 727) et présente une épaisseur de composant (81) au moins aussi importante voire supérieure à une hauteur de fente annulaire (78) de la fente annulaire à produire (60), **caractérisé en ce que** l'outil de formage (1 ; 101 ; 201 ; 401 ; 501 ; 601 ; 701) est conçu de telle sorte que l'élément de butée de dégagement de fond mobile (35 ; 135 ; 435) puisse être soulevé avec une course de formage de fond creux (471) à l'encontre de la direction de formage principale axiale (451), de sorte que la fente annulaire périphérique (460, 560) apparaisse entre la paroi latérale de formage (28, 428) montant dans le plan axial et l'élément de butée de dégagement de fond mobile (35 ; 135 ; 435).

2. Outil de formage selon la revendication 1, **caractérisé en ce que** l'élément de butée de dégagement de fond mobile (35 ; 135 ; 435) est réalisé d'un seul tenant et/ou est introduit latéralement du côté de la tête, au moins en partie au niveau de l'élément annulaire de fond (40) fixe sur place et/ou comporte au niveau de son côté de tête (45) une région superficielle réalisée de façon convexe (46) et/ou au niveau de son côté de tête (45 ; 645) un bord périphérique surélevé (1100).

3. Outil de formage selon la revendication 1, **caractérisé en ce que** le fond de formage (27 ; 127 ; 427 ; 527 ; 627 ; 727) comprend un élément de butée de dégagement annulaire mobile à l'intérieur de la chambre de formage (25 ; 125 ; 425 ; 625), dans lequel ledit élément de butée de dégagement annulaire mobile est disposé contre le fond de formage (27 ; 127 ; 427 ; 527 ; 627 ; 727) de la chambre de formage (25 ; 125 ; 425 ; 625), dans lequel l'élément de butée de dégagement annulaire mobile est de préférence disposé de façon à pouvoir coulisser de façon relative dans le plan axial par rapport à une partie de fond de formage, reposant davantage vers l'intérieur dans le plan radial, de la chambre de formage (25 ; 125 ; 425 ; 625), notamment un élément de butée de dégagement de fond mobile (35 ; 135 ; 435) et/ou l'élément de butée de dégagement annulaire mobile est disposé de façon coulissante dans le plan axial entre la partie de chambre de formage (10 ; 110 ; 410 ; 610), notamment une partie superficielle en forme d'anneau (31) du fond de formage (27 ; 127 ; 427 ; 527 ; 627 ; 727), et une partie superficielle (30) en forme de disque du fond de formage (27 ; 127 ; 427 ; 527 ; 627 ; 727), notamment un élément de butée de dégagement de fond (35 ; 135 ; 435), et/ou l'élément de butée de dégagement annulaire mobile est disposé à l'opposé de façon coulissante dans le plan axial par rapport à au moins un tampon de formage (50, 86, 87 ; 150, 186, 187 ; 250, 286, 287 ; 450, 486, 487 ; 650 ; 686 ; 687), notamment un ou plusieurs éléments de tampon de formage.

4. Outil de formage selon la revendication 3, **caractérisé en ce que** la partie de chambre de formage (10 ; 110 ; 410 ; 610) est disposée de façon réglable en hauteur par rapport à l'élément de butée de dégagement de fond mobile (35 ; 135 ; 435) et/ou à un support de partie de chambre de formage (16) et/ou que différentes hauteurs de fente annulaire (78) sont réglables à l'aide d'éléments annulaires d'écartement (17) de hauteurs différentes, dans lequel au moins un élément annulaire d'écartement (17) est disposé dans un espace de logement (18) situé entre la partie de chambre de formage (10 ; 110 ; 410 ; 610) et un support de partie de chambre de formage (16 ; 616).

5. Outil de formage selon la revendication 4, **caractérisé en ce qu'**au moins un élément annulaire d'écartement (17) est disposé dans un espace de logement (18) situé entre la partie de chambre de formage (10 ; 110 ; 410 ; 610) et un support de partie de chambre de formage (16 ; 616) où celui-ci est coincé entre un épaulement supérieur (19) de la partie de chambre de formage (10 ; 110 ; 410 ; 610) et un épaulement inférieur (20) du support de partie de chambre de formage (16).

6. Installation (2) de thermoformage avec un outil de formage (1 ; 101 ; 201 ; 401 ; 501 ; 601 ; 701) servant à emboutir et thermoformer un film (6 ; 306 ; 406 ; 606) de façon à former un récipient (3 ; 303 ; 403 ; 1200) et avec un dispositif de surpression (52), **caractérisé par** la présence d'un outil de formage (1 ; 101 ; 201 ; 401 ; 501 ; 601 ; 701) selon l'une quelconque des revendications 1 à 5.

7. Procédé de thermoformage d'un film (6 ; 306 ; 406 ; 606) de façon à former un récipient (3 ; 303 ; 403 ; 1200), notamment un récipient (3 ; 303 ; 403 ; 1200) prévu pour une capsule d'infusion, spécifiquement pour une capsule de café (4 ; 1202), dans lequel le film (6 ; 306 ; 406 ; 606) est déformé à l'aide d'un tampon de formage (50, 86, 87 ; 150, 186, 187 ; 250, 286, 287 ; 450, 486, 487 ; 650 ; 686 ; 687) et/ou à l'aide d'une surpression appliquée dans une direction de formage principale axiale (51 ; 151 ; 451 ; 651) dans une partie de chambre de formage (10 ; 110 ; 410 ; 610) à l'intérieur d'un outil de formage (1 ; 101 ; 201 ; 401 ; 501 ; 601 ; 701) de façon à former une pièce brute (26 ; 426) avec une cavité (66 ; 466 ; 1207), dans lequel le film (6 ; 306 ; 406 ; 606) est comprimé jusque contre ou au moins jusqu'avant un fond de formage (27 ; 127 ; 427 ; 527 ; 627 ; 727) de la partie de chambre de formage (10 ; 110 ; 410 ; 610), pour former une zone de fond (67 ; 367 ; 467) de la pièce brute (26 ; 426),**caractérisé en ce que** le fond de formage (27 ; 127 ; 427 ; 527 ; 627 ; 727) comprend un élément de butée de dégagement de fond mobile (35 ; 135 ; 435) à l'intérieur de la chambre de formage (25 ; 125 ; 425 ; 625), ledit élément étant entouré par un élément annulaire de fond (40) fixe sur place, dans lequel dans la zone de fond (67 ; 367 ; 467), comprimée contre le fond de formage (27 ; 127 ; 427 ; 527 ; 627 ; 727) de la partie de chambre de formage (10 ; 110 ; 410 ; 610), de la pièce brute (26 ; 426), une fente annulaire périphérique (60 ; 160 ; 460 ; 560 ; 660) est produite contre le fond de formage (27 ; 127 ; 427 ; 527 ; 627 ; 727) au cours d'une étape de déformation supplémentaire à pression ambiante ou surpression, dans lequel la zone de fond (67 ; 367 ; 467) de la pièce brute (26 ; 426) est davantage déformée vers l'intérieur à l'aide de l'élément de butée de dégagement de fond (35 ; 135 ; 435) pour former un fond creux (73 ; 1206) et dans lequel l'outil de formage (1, 101, 201, 401, 501, 601, 701) est réalisé selon l'une quelconque des revendications 1 à 5.

8. Procédé selon la revendication 7, caractérisé en ce la réalisation de la fente annulaire et/ou de la course de formage de fond creux (71 ; 171 ; 471 ; 671) permet de réaliser au moins une accumulation localisée de matière (88 ; 388 ; 1030 ; 1212, 1213) et/ou un creusement localisé de matière au niveau de la zone de plancher (67 ; 367 ; 467) de la pièce brute (26 ; 426), dans lequel des zones partielles de fond (75) d'épaisseurs différentes sont produites au niveau de la zone de plancher (67 ; 367 ; 467) de la pièce brute (26 ; 426) en produisant une fente annulaire périphérique (60 ; 160 ; 460 ; 560 ; 660) en présence d'une surpression dans la cavité (66 ; 466 ; 1207) de la pièce brute (26 ; 426) au niveau du fond de formage (27 ; 127 ; 427 ; 527 ; 627 ; 727).

9. Procédé selon l'une quelconque des revendications de procédé précédentes, **caractérisé en ce qu'**une zone de disque de fond (90) située vers l'intérieur dans le plan radial au niveau de la zone de plancher (67 ; 367 ; 467) de la pièce brute (26 ; 426) est déformée à une première épaisseur de partie de fond (91), une première zone de bague de fond (92) reposant plus à l'extérieur dans le plan radial est déformée à une deuxième épaisseur de partie de fond (93) et une deuxième zone de bague de fond (94) située encore plus à l'extérieur dans le plan radial est déformée à une troisième épaisseur de partie de fond (95), **en ce qu'**en présence d'une surpression dans la cavité (66 ; 466 ; 1207) de la pièce brute (26 ; 426) au niveau du fond de formage (27 ; 127 ; 427 ; 527 ; 627 ; 727) de l'outil de formage (1 ; 101 ; 201 ; 401 ; 501 ; 601 ; 701), une fente annulaire périphérique (60 ; 160 ; 460 ; 560 ; 660) est produite, dans lequel de préférence une surface centrale (96) plus épaisse, plane ou de façon préférée bombée, est réalisée au niveau de la zone de plancher (67 ; 367 ; 467) de la pièce brute (26 ; 426) à l'aide de la zone de disque de fond (90) reposant vers l'intérieur dans le plan radial et/ou qu'un étai périphérique (76 ; 376 ; 476 ; 1219) est réalisé au niveau de la zone de plancher (67 ; 367 ; 467) de la pièce brute (26 ; 426) à l'aide de la deuxième zone de bague de fond (94) située encore plus à l'extérieur dans le plan radial et/ou qu'une zone de piquage à l'aiguille plus fine (97) est réalisée entre la zone de disque de fond (90) située vers l'intérieur dans le plan radial et la deuxième zone de bague de fond (94) située le plus à l'extérieur dans le plan radial à l'aide de la première zone de bague de fond (92) reposant à l'extérieur dans le plan radial.

10. Procédé selon l'une quelconque des revendications de procédé précédentes, **caractérisé en ce que** la surpression régnant à l'intérieur de la cavité (66 ; 466 ; 1207) de la pièce brute (26 ; 426) est déjà produite avant ou pendant ou juste à la réalisation d'une fente annulaire et/ou d'un mouvement de course de formage de fond creux (71 ; 171 ; 471 ; 671), dans lequel de préférence la réalisation de la fente annulaire dans la direction de formage principale (51 ; 151 ; 451 ; 651) permet d'agrandir le volume de chambre (80) de la cavité (66 ; 466 ; 1207) de la pièce brute (26 ; 426) ou de conserver au moins ses dimensions à l'identique et/ou qu'à l'aide ou malgré un mouvement de course de formage de fond creux (71 ; 171 ; 471 ; 671) à l'encontre de la direction de formage principale (51 ; 151 ; 451 ; 651), le volume de chambre de la cavité (66 ; 466 ; 1207) de la pièce brute (26 ; 426) est agrandi ou que ses dimensions sont au moins conservées à l'identique.

11. Procédé selon l'une quelconque des revendications de procédé précédentes, **caractérisé en ce que** la cavité (66 ; 466 ; 1207) de la pièce brute (26 ; 426) est élargie par un étai (76 ; 376 ; 476 ; 1219) périphérique réalisé au niveau de la pièce brute (26 ; 426) et/ou que l'étai périphérique (76 ; 376 ; 476 ; 1219) est réalisé avec une simple paroi.

12. Procédé selon l'une quelconque des revendications de procédé précédentes, **caractérisé en ce que** la fente annulaire (60 ; 160 ; 460 ; 560 ; 660) et/ou la course de formage de fond creux (71 ; 171 ; 471 ; 671) est réalisée avec une hauteur (78) inférieure à 10 % ou inférieure à 5 % de la hauteur totale de la pièce brute (26 ; 426) du récipient (3 ; 303 ; 403 ; 1200) ou d'un corps de capsule (5) et d'au moins 1 % de la hauteur totale de la pièce brute (26 ; 426) du récipient (3 ; 303 ; 403 ; 1200) ou d'un corps de capsule (5).
